# EUROPEAN PATENT APPLICATION

(11) **EP 4 556 087 A1**
(43) Date of publication of application: **21.05.2025**
(21) Application number: 24211042.7
(22) Date of filing: 06.11.2024
(51) Int. Cl.: A63F 13/63, A63F 13/35, A63F 13/46, A63F 13/45, A63F 13/50

(54) **USER-GENERATED REPLAYABLE GAMING CONTENT UTILIZING REGAMIFICATION DATA**

(30) Priority: 14.11.2023 US 202363598654 P; 10.05.2024 US 202418660841
(71) Applicant: Ludeo Inc., El Segundo, CA 90245 (US)
(72) Inventor: Gazit, Asaf, 6416130 Tel Aviv (IL); Levinger, Oded, 4063112 Tel Mond (IL); Pipkevitch, Yoav, 5224350 Ramat Gan (IL); Levin, Ziv, 6901810 Tel Aviv (IL)
(74) Representative: Dehns Germany Partnerschaft mbB

(57) **Abstract**

A non-transitory computer readable medium containing program instructions for creating one or more Playable Gameplay Highlights (PGH) computer games from a computer Base Game, wherein execution of the program instructions by one or more processors of a computer system causes the one or more processors to carry out a method comprising: receiving Data relating to said computer Base Game using a Logic Engine, processing the Data to yield Events, and processing the Events, by said Logic Engine, to yield Building Blocks or processing the Events, by said Logic Engine, to yield Building Blocks capturing one or more Highlights in said computer Base Game, wherein each of said one or more captured Highlights correspond to a selected start point and end point in said computer Base Game; processing the Building Blocks, by said Logic Engine, to yield Highlight Attributes Parameters, selecting PGH Highlight in each one of the one or more Highlights, wherein said PGH Highlight correspond to a selected start point and end point in one of said one or more Highlights; repeatedly processing said Building Blocks, by said Logic Engine, relating to the selected PGH Highlight, to generate PGH Attributes, and creating the one or more PGH computer games based on the PGH Attributes, wherein each of said PGH computer games comprises PGH Rules, said PGH Rules being related to said PGH Attributes and for configuring the playing of said one or more PGH computer games.

## Description

### CROSS-REFERENCE

The present application claims priority to U.S Application Ser. No. 18/660,841, filed on May 10, 2024 entitled "USER-GENERATED REPLAYABLE GAMING CONTENT UTILIZING REGAMIFICATION DATA" which claims priority to U.S. Provisional Application Ser. No. 63/598,654, filed on November 14, 2023 entitled "USER-GENERATED REPLAYABLE GAMING CONTENT UTILIZING REGAMIFICATION DATA", each of which is incorporated herein by reference in its entirety.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### TECHNICAL FIELD

The presently disclosed subject matter relates to electronic games, and in particular to implementation of systems of creating and playing new games.

### BACKGROUND

Problems of implementation of electronic games have been recognized in the conventional art and various techniques have been developed to provide solutions. US patent number 9,707,476B2 entitled `Method for creating a mini-game' presents a method for creating a video mini-game based on a legacy game title using a snapshot technique. This method creates a game based on a snapshot of a legacy game, and provides small cuts of entertainment for players who do not want to play the whole legacy game.

### SUMMARY OF THE INVENTION

According to a first aspect of the present invention there is provided a computer-implemented method for creating one or more Playable Gameplay Highlights (PGH) computer games from a computer Base Game, the method comprising: receiving Data relating to said computer Base Game using a Logic Engine, wherein said Data comprises one or more of: Events, text, audio, images, video recording of the computer base Game, other video that describes the computer base game, and wherein said Logic Engine is comprised in a processor located in a Server; processing the Data to yield the Events, and processing the Events, by said Logic Engine, to yield Building Blocks or processing the Events, by said Logic Engine, to yield Building Blocks; capturing one or more Highlights in said computer Base Game, wherein each of said one or more Highlights correspond to a selected start point and end point in said computer Base Game; processing the Building Blocks, by said Logic Engine, to yield Highlight Attributes Parameters, said Highlight Attribute Parameters comprise one or more of: possible Objectives, possible Constraints, possible End of PGH Criteria, possible End Condition and possible Scoring parameters relating respectively to each one of the one or more Highlights; selecting PGH Highlight in each one of the one or more Highlights, wherein said PGH Highlight correspond to a selected start point and end point in one of said one or more Highlights; processing, for example, repeatedly said Building Blocks, by said Logic Engine, relating to the selected PGH Highlight, to generate PGH Attributes, said PGH Attributes comprising one or more of: Objectives, Constraints, End of PGH Criteria, End Conditions and Scoring parameters, said selected start point and end point; creating said one or more PGH computer games based on the PGH Attributes, wherein each of said PGH computer games comprises PGH Rules, said PGH Rules being related to said PGH Attributes and for configuring the playing of said one or more PGH computer games.

In an embodiment, the method comprising restoring the Events relating to said computer Base Game; continually identifying the Events in said one or more PGH computer games; continually streaming the identified Events from a Game Client Device to the Logic Engine; continually processing the identified Events using said Logic Engine to yield said Building Blocks; continually processing the Building Blocks, using said Logic Engine, to determine whether the PGH attributes parameters were obtained based on the PGH rules; and end the playing of said one or more PGH computer games when the PGH attributes parameters have been obtained.

In an embodiment, the method comprising generating PGH status of each of said one or more PGH computer games, wherein said PGH status comprises: calculating one or more of: scoring parameters, status of the objectives, status of the constraints; status of the end of PGH criteria; and transmitting the PGH Status to a Managing module comprised in said Server; and providing Server Events based on one or more of: the PGH Status, the Building Blocks.

In an embodiment, the method comprising transmitting the Server Events from the Server to the Game Client device; and displaying said Server Events on a display.

In an embodiment, the method comprising calculating PGH results of each of said one or more PGH computer games based on said Events; transmitting the PGH results to the PGH Application; and displaying said Server Events on a display of said Game client Device.

In an embodiment, the method comprising selecting said one or more Highlights by clicking one or more keys during a gameplay of the Base game.

In an embodiment, the method comprising converting the one or more of: text, audio, images, video recording of the base Game, other video to the Events.

In an embodiment, the method comprising identifying the Events in said computer Base Game using an Event module, wherein said Event module is comprised in a processor in a Game Client Device.

In an embodiment, the method comprising selecting timestamp start point and selecting timestamp end point in said computer Base Game.

In an embodiment, the method comprising transmitting a video of the computer Base Game captured by a Video Module in a Game Client Device to the Server; transmitting said one or more Highlights from the Server to a PGH Application (PGH App); editing the video based on the selected PGH timestamps to generate a Final PGH Video; and creating said one or more PGH computer games based on the PGH Attributes and the Final PGH video.

In an embodiment, the method comprising creating one or more additional PGH computer games from said one or more PGH computer games.

In an embodiment, the method comprises creating two or more PGH computer games based on a single highlight of said one or more Highlights.

In an embodiment, the Events comprise Actions or States of characters in said computer Base Game.

In an embodiment, each building block of the Building Blocks is formed by aggregating one or more Events of said Events.

In an embodiment, the aggregation function combines two or more Events of the same type or
Events of different types.

In an embodiment, the PGH Attributes are selected by a creator of the PGH computer game or
Selected automatically by said Logic Engine.

In an embodiment, the PGH Attributes further comprise one or more of: for the PGH, description, thumbnail `preview' image of the PGH computer game, and tags.

In an embodiment, the characters are player Character (PC) or Non-Player Character (NPC).

In an embodiment, the objectives or constraints or end of PGH criteria or end conditions or scoring parameters are created using generative artificial intelligence (AI) algorithms and models.

In an embodiment, the Game Client device is comprised in said server.

In an embodiment, the loading and running of said one or more PGH computer games, said loading and running comprising: restoring the Events from the Base Game; capturing a video or other signals of the Base Game; transmitting the Captured Video or other Signals to the Server; processing the Video using a Video Analysis Processor or processing the Signals using a Signals Analysis Processor; determining based on the PGH rules and the analyzed Video or analyzed Signals whether the PGH attributes parameters were obtained; and calculating the Scoring parameters.

According to a second aspect of the present invention there is provided a computer-implemented method for creating one or more Playable Gameplay Highlights (PGH) computer games from a computer Base Game, the method comprising: receiving Data relating to said computer Base Game using a Logic Engine, wherein said Data comprises one or more of: Events, text, audio, images, video recording of the base Game, other video that describes the computer base game, and wherein said Logic Engine is comprised in a processor located in a Server; processing the Data using said Logic Engine to yield the Events; capturing one or more Highlights in said computer Base Game, wherein each of said one or more Highlights correspond to a selected start point and end point in said computer Base Game; processing the Events, by said Logic Engine, to yield Highlight Attributes Parameters, said Highlight Attribute Parameters comprise one or more of: possible Objectives, possible Constraints, possible End of PGH Criteria, possible End Conditions and possible Scoring parameters relating respectively to each one of the one or more Highlights; selecting PGH Highlight in each one of the one or more Highlights, wherein said PGH Highlight correspond to a selected start point and end point in one of said one or more Highlights; processing said Events, relating to the selected PGH Highlight by said Logic Engine, to yield PGH Attributes, said PGH Attributes comprising one or more of: Objectives, Constraints, End of PGH Criteria, End Conditions and Scoring parameters; creating said one or more PGH computer games based on the PGH Attributes, wherein each of said PGH computer games comprises PGH Rules, said PGH Rules being related to said PGH Attributes and for configuring the playing of said one or more PGH computer games.

In an embodiment, the method comprising: restoring the Events relating to said Base Game; continually identifying the Events in said one or more PGH computer games; continually streaming the identified Events from a Game Client Device to the Logic Engine; continually processing the identified Events using said Logic Engine to yield said Building Blocks; continually processing the Building Blocks, using said Logic Engine, to determine whether the PGH attributes parameters were obtained based on the PGH rules; and end the playing of said one or more PGH computer games when the PGH attributes parameters have been obtained.

In an embodiment the method comprising generating PGH status of each of said one or more PGH computer games, wherein said generating PGH status comprises: calculating one or more of: scoring parameters, status of the objectives, status of the constraints; status of the end of PGH criteria; and transmitting the PGH Status to a Managing module comprised in said Server; and providing Server Events based on one or more of: the PGH Status, the Building Blocks.

In an embodiment, the method comprising: transmitting the Server Events from the PGH Server to a Game Client device; and displaying said Server Events on a display.

In an embodiment, the method comprising: calculating PGH results of each of said one or more PGH computer games based on said Identified Events; transmitting the PGH results to the PGH Application (PGH App); and displaying said Server Events on a display of said Game client Device.

In an embodiment, the method comprising: selecting said one or more Highlights by clicking one or more keys during a gameplay of the computer Base game.

In an embodiment, the method comprising: identifying Events in said computer Base Game using an Event module, wherein said Event module is comprised in a processor in a Game Client Device.

In an embodiment, the method comprising: selecting PGH Highlight comprises: selecting timestamp start point and selecting timestamp end point in said computer Base Game.

In an embodiment, the method comprising: transmitting a video of the computer Base Game captured by a Video Module in said Game Client Device to the Server; transmitting said one or more Highlights from the Server to a PGH Application (PGH App); editing the video based on the selected PGH timestamps to generate a Final PGH Video; and creating said one or more PGH computer games based on the PGH Attributes and the Final PGH video.

In an embodiment, the method comprising: creating one or more additional PGH computer games from a said one or more PGH computer games.

In an embodiment, the method comprises: creating two or more PGH computer games based on a single highlight of said one or more Highlights.

In an embodiment, the identified Events comprise Actions or States of characters in said computer Base Game.

In an embodiment, each building block of the Building Blocks is formed by aggregating one or more Events of said Events.

In an embodiment, the aggregation function combines the one or more Events of the same type or different types.

In an embodiment, the PGH Attributes are selected by a creator of the PGH computer game or automatically by said Logic Engine.

In an embodiment, the PGH Attributes further comprise one or more of: name for the PGH, description, thumbnail `preview' image of the PGH computer game, and tags.

In an embodiment, the characters are player Character (PC) or Non-Player Character (NPC).

In an embodiment, the objectives or constraints or end of PGH criteria or end conditions or scoring parameters are created using generative artificial intelligence (AI) algorithms and models.

In an embodiment, the Game Client device is comprised in said server.

In an embodiment, the method comprising: loading and running said one or more PGH
computer games, said loading and running comprising: restoring Events from the Base Game; capturing a video or other signals of the Base Game; transmitting the Captured Video or other Signals to the Server; processing the Video using a Video Analysis Processor or processing the Signals using a Signals Analysis Processor; determining based on the PGH rules and the analyzed Video or analyzed Signals whether the PGH attributes parameters were obtained; and calculating the Scoring parameters.

According to a third aspect of the present invention there is provided a method performed by a Game Client Device of loading and running one or more Playable Gameplay Highlights (PGH) computer games created based on a computer Base Game, said method comprising: restoring Events relating to said computer Base Game; identifying (e.g. continually) the Events in said one or more PGH computer games; streaming (e.g. continually) the identified Events from the Game Client Device to a Logic Engine; processing (e.g. continually) the Identified Events using said Logic Engine to yield Building Blocks; processing (e.g. continually) the Building Blocks, using said Logic Engine, to determine whether the PGH attributes parameters were obtained based on the PGH rules; and end the playing of said one or more PGH computer games when the PGH attributes parameters have been obtained.

In an embodiment, the method comprising: generating PGH status of each of said one or more PGH computer games, wherein said generating PGH status comprises: calculating one or more of: scoring parameters, status of objectives, status of constraints; status of end of PGH criteria; and transmitting the PGH Status to a Managing module comprised in said Server; and providing Server Events based on one or more of: the PGH Status, the Building Blocks.

In an embodiment, the method comprising: transmitting the Server Events from the PGH Server to the Game Client device; and displaying said Server Events on a display.

In an embodiment, the method comprising: calculating PGH results of each of said one or more PGH computer games based on said Identified Events; transmitting the PGH results to a PGH Application (PGH App); and displaying said Server Events on a display of said Game client Device.

In an embodiment, the method comprising: identifying the Events in said computer Base Game using an Event module, wherein said Event module is comprised in a processor in a Game Client Device.

In an embodiment, the method comprising: creating one or more additional PGH computer games from said one or more PGH computer games.

In an embodiment, the Identified Events comprise Actions or States of characters in said computer Base Game.

In an embodiment, each building block of the Building Blocks is formed by aggregating one or more Events of said Events.

In an embodiment, the aggregation function combines the one or more Events of the same type or different types.

In an embodiment, the PGH Attributes are selected by a creator of the PGH computer game or automatically by said Logic Engine.

In an embodiment, the PGH Attributes further comprise one or more of: name for the PGH, description, thumbnail `preview' image of the PGH computer game, and tags.

In an embodiment, the objectives or constraints or end of PGH criteria or end conditions or scoring parameters are created using generative artificial intelligence (AI) algorithms and models.

In an embodiment, the Game Client device is comprised in said server.

In an embodiment, the loading and running said one or more PGH computer games, said loading and running comprising: restoring the Events from the computer Base Game; capturing a video or other signals of the Base Game; transmitting the Captured Video or other Signals to the Server; processing the Video using a Video Analysis Processor or processing the Signals using a Signals Analysis Processor; determining based on the PGH rules and the analyzed Video or analyzed Signals whether the PGH attributes parameters have been obtained; and calculating the Scoring parameters.

According to a forth aspect of the present invention there is provided a system for creating one or more Playable Gameplay Highlights (PGH) computer games from a computer Base Game: comprising a Game Client device comprising a processing circuitry comprising one or more processors, said one or more processors comprises an Event module configured to be in communication with a PGH Sever said PGH Server comprises: a Storage Unit for storing said PGH computer games, and one or more Server Processors, wherein the Server processors comprise a video processor a Logic Engine and PGH Publisher, wherein the Logic engine is configured and enabled to: receive Data relating to said computer Base Game, wherein said Data comprises one or more of: Events, text, audio, images, video recording of the base Game, other video that describes the base game; process the Data to yield the Events; process the Events to yield Building Blocks or process the Data, to yield Building Blocks; capture one or more Highlights in said computer Base Game, wherein each of said one or more captured Highlights correspond to a selected start point and end point in said computer Base Game; process the Building Blocks, by said Logic Engine, to yield Highlight Attributes Parameters, said Highlight Attribute Parameters comprise one or more of: possible Objectives, possible Constraints, possible End of PGH Criteria, possible End Condition and possible Scoring parameters relating respectively to each one of the one or more Highlights; select PGH Highlight in each one of the one or more Highlights, wherein said PGH Highlight correspond to a selected start point and end point in one of said one or more Highlights; process, for example repeatedly, said Building Blocks, by said Logic Engine, relating to the selected PGH Highlight, to generate PGH Attributes, said PGH Attributes comprising one or more of: Objectives, Constraints, End of PGH Criteria, End Conditions and Scoring parameters; create said one or more PGH computer games based on the PGH Attributes, wherein each of said PGH computer games comprises PGH Rules, said PGH Rules being related to said PGH Attributes and for configuring the playing of said one or more PGH computer games.

In an embodiment, the one or more processors are further configured and enabled to: load and run said one or more PGH computer games, said loading and running comprising: restoring the Events relating to said Base Game; continually identifying the Events in said one or more PGH computer games; continually streaming the identified Events from a Game Client Device to the Logic Engine; continually processing the identified Events using said Logic Engine to yield said Building Blocks; continually processing the Building Blocks, using said Logic Engine, to determine whether the PGH attributes parameters have been obtained based on the PGH rules; and end the playing of said one or more PGH computer games when the PGH attributes parameters have been obtained.

In an embodiment, the one or more processors are further configured and enabled to: generate PGH status of each of said one or more PGH computer games, wherein generating said PGH status comprises: calculating one or more of: scoring parameters, status of the objectives, status of the constraints; status of the end of PGH criteria; and transmitting the PGH Status to a Managing module comprised in said Server; and providing Server Events based on one or more of: the PGH Status, the Building Blocks.

In an embodiment, the one or more processors are further configured and enabled to: restore the Events from the Base Game; capture a video or other signals of the Base Game;
transmit the Captured Video or other Signals to the Server; process the Video using a Video Analysis Processor or process the Signals using a Signals Analysis Processor; determine based on the PGH rules and the analyzed Video or analyzed Signals whether the PGH attributes parameters were obtained; and calculate the Scoring parameters.

According to a fifth aspect of the present invention there is provided a non-transitory computer readable medium containing program instructions for creating one or more Playable Gameplay Highlights (PGH) computer games from a computer Base Game, wherein execution of the program instructions by one or more processors of a computer system causes the one or more processors to carry out a method comprising: receiving Events or Data relating to said computer Base Game using a Logic Engine, wherein said Logic Engine is comprised in a processor located in a Server; processing the Events, by said Logic Engine, to yield Building Blocks or processing the Data, by said Logic Engine, to yield Building Blocks; capturing one or more Highlights in said computer Base Game, wherein each of said one or more captured Highlights correspond to a selected start point and end point in said computer Base Game; processing the Building Blocks, by said Logic Engine, to yield Highlight Attributes Parameters, said Highlight Attribute Parameters comprise one or more of: possible Objectives, possible Constraints, possible End of PGH Criteria, possible End Condition and possible Scoring parameters relating respectively to each one of the one or more Highlights; selecting PGH Highlight in each one of the one or more Highlights, wherein said PGH Highlight correspond to a selected start point and end point in one of said one or more Highlights; Processing, for example repeatedly. said Building Blocks, by said Logic Engine, relating to the selected PGH Highlight, to generate PGH Attributes, said PGH Attributes comprising one or more of: Objectives, Constraints, End of PGH Criteria, End Conditions and Scoring parameters, said selected start point and end point; creating said one or more PGH computer games based on the PGH Attributes, wherein each of said PGH computer games comprises PGH Rules, said PGH Rules being related to said PGH Attributes and for configuring the playing of said one or more PGH computer games.

### BRIEF DESCRIPTION OF THE DRAWINGS

In order to understand the invention and to see how it can be carried out in practice, embodiments will be described, by way of non-limiting examples, with reference to the accompanying drawings, in which:
**Figure 1A** and **Figure 1B** illustrate logical block diagrams of example gaming systems enabled for creation of PGH enabling player reexperience of a scenario of a historical gameplay, in accordance with some embodiments of the of the present invention;
**Figure 1C** illustrates a logical block diagram of an example gaming system enabled for playback of PGH enabling player reexperience of a scenario of a historical gameplay, in accordance with some embodiments of the of the present invention;
**Figure 2** illustrates an example user interface of a system of creation of PGH enabling player reexperience of a scenario of a historical gameplay, in accordance with some embodiments of the of the present invention;
**Figure 3** is a flow diagram of an example method of creation of PGH enabling player reexperience of a scenario of a historical gameplay, in accordance with some embodiments of the of the present invention;
**Figure 4** illustrates an example data structure of a PGH data object enabling player reexperience of a scenario of a historical gameplay, in accordance with some embodiments of the of the present invention;
**Figure 5A****-****Figure 5E** is a flow diagram of an example method of playback of a PGH enabling player reexperience of a scenario of a historical gameplay, in accordance with some embodiments of the of the present invention;
**Figure 6** is a flow diagram of an example scenario of initial user creation and secondary user play of a PGH enabling player reexperience of a scenario of a historical gameplay, in accordance with some embodiments of the of the present invention;
**Figure 7A** is a high-level block diagram of an example system configured and enabled to create a PGH based on one or more scenarios of historical gameplay in a Computer Base Game using Building Blocks, in accordance with some embodiments of the present invention;
**Figure 7B** is a high-level block diagram of an alternative system configured and enabled to create a PGH based on one or more scenarios of a historical gameplay in a Base Game which comprises a Creation Input Module, in accordance with some embodiments of the present invention;
**Figure 7C** shows a flowchart of a method for creating a PGH based on one or more scenarios of historical gameplay using Building Blocks, in accordance with embodiments;
**Figure 7D** shows a flowchart of a method for creating a PGH based on one or more scenarios of historical gameplay comprising receiving Identified Events or processing Data to yield Identified Events, in accordance with embodiments;
**Figure 7E** shows a high-level block diagram of an exemplary system for enabling the loading and running of a PGH created based on one or more scenarios of historical gameplay in a Base game, in accordance with embodiments;
**Figure 7F** shows a flowchart of a method for loading and running a PGH computer game such as the PGH created in **Figure 7A****,** in accordance with embodiments;
**Figure 7G** shows a flowchart of a method for loading and running a PGH computer game such as the PGH created in **Figure 7B****,** in accordance with embodiments;
**Figure 7H** shows a detailed block diagram description of the Processor(s) of **Figure 7A****,** in accordance with embodiments;
**Figure 7I** presents an alternative configuration architecture wherein the Logic Engine may include a Data Conversion Module configured and enabled to receive and/or extract Data and convert the Data to Identified Events, in accordance with embodiments;
**Figure 7J** shows a detailed block diagram of **Figure 7A** and **Figure 7B****,** which is configured and enabled to create a PGH based on one or more scenarios of historical gameplay of a single player configuration, in accordance with embodiments;
**Figure 7K** shows a detailed block diagram of a system configured and enabled to create a PGH based on one or more scenarios of historical gameplay of a multiplayer player configuration, in accordance with embodiments;
**Figure 7L** shows a subset block diagram of **Figure 7K** configured and enabled to publish and distribute one or more assets of the Base game and the PGH based on one or more scenarios of historical gameplay of a single-player/multiplayer configuration, in accordance with embodiments;
**Figure 7M** shows a flowchart of a method of asset extraction and decomposition, in accordance with embodiments;
**Figure 8A** illustrates a flowchart of a method for creating a PGH based on one or more scenarios of historical gameplay of a multiplayer or a single-player configuration, in accordance with embodiments;
**Figure 8B** illustrates a time flowchart of a method for playing a PGH, such as the created PGH shown in **Figure 8A****,** which was created based on one or more scenarios of historical gameplay of a multiplayer or a single-player configuration, in accordance with embodiments;
**Figure 8C** illustrates a flowchart of a method of Extraction and Decomposition of assets in a base game and/or PGH, such as the created PGH shown in **Figure 8A****,** in accordance with embodiments;
**Figure 8D** illustrates a flowchart of a method for publishing assets in a base game and/or PGH, in accordance with embodiments;
**Figure 9A****-****Figure 9E** shows examples of Events List, Objectives List, Constraints List, Score parameters list and End Conditions List, in accordance with embodiments;
**Figure 10A****-****Figure 10G****,** show examples of screenshots of the game and PGH, in accordance with embodiments;
**Figure 11****,** show example of screenshots of the game and PGH including status of the objectives and PGH results, in accordance with embodiments;
**Figure 12****,** illustrates an example data structure of a PGH Data object, in accordance with some embodiments;
**Figure 13** shows a flowchart of a method for loading and running a PGH computer game, in accordance with embodiments; and
**Figure 14** shows a computer system suitable for incorporation with the methods, systems and devices in accordance with embodiments.

### DETAILED DESCRIPTION OF THE INVENTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

The embodiments disclosed herein can be combined in one or more of many ways to provide a method for creating and running one or more Playable Gameplay Highlights (PGH) computer games from a computer Base Game.

As used herein like characters refer to like elements.

In accordance with an embodiment, the present invention is configured to receive a basic/original computer game (e.g. computer base game **705**) with historical rules and create a new game, defined herein as a PGH. The generated PGH may be related to and/or inspired by and/or based on the basic/original computer game. However, it is stressed that the relation between the computer base game and the newly formed PGH relates mainly to the subjects in the original games. For example, in case the computer Base Game is an NBA or racing computer games, both original and PGH will share the title of NBA and racing games which will include respectively characters such as basketball players and racing cars, hence they will share some characters. However, the generated PGH comprises new rules, objectives, and/or constraints that were not included in the original game and accordingly could not be played according to these rules in the base computer game.

In simpler terms, the PGH game takes inspiration from the original game's theme or subject matter, but it introduces new gameplay mechanics, goals, and restrictions that make it a distinct experience from the original game.

The new rules may be created by the user and/or automatically by the system as described herein. In some cases, the new rules may be created using for example generative AI methods and systems, such as using language models (e.g. Llama 2) for converting for example the user's free text input to structured rules and/or objectives and/or scoring parameters.

One of the differences between the present invention and the prior art lies in the approach to creating new playable content from a game. The present invention includes, in accordance with embodiment, breaking down the original game for example into building blocks or any type of data by analyzing for example the events in the game, and based on identifying the variou s events, creating a new game (e.g. PGH) whose rules and gameplay differ from the original game.

Specifically, analyzing the events in the game includes analyzing gameplay data and identifying significant events, and processing the events, for example on a server to create PGH Building Blocks. These building blocks are then used to develop new objectives, constraints and rules, enhancing the original gameplay experience. In contrast, the prior art creates for example games such as "mini-game" by selecting a specific snapshot of the original game state at a chosen starting point within the original game and identifying triggers to in-game events. The mini-game is generated using a script based on the snapshot and triggers, extracting a limited section of the game to provide a shorter, self-contained experience.

Another key difference between the present invention and the prior art is the intended player experience. The generated PGH by this method aims to allow players to re-experience exciting moments from the original game while introducing new elements such as objectives, constraints and scoring mechanisms. This approach enhances the original gameplay by adding fresh challenges and rewards. The prior art solutions, such as mini-game, does not introduce new elements but instead offers a condensed version of the original gameplay, starting from a predetermined point.

Additionally, the present invention differs from the prior art in its technical approach and the type of player experience it offers. The present invention emphasizes recording, analyzing, and enhancing gameplay highlights with new objectives and scoring parameters, while the prior art focuses on extracting a specific scenario from a saved game state to create a shorter, self-contained mini-game experience, but not new. The present invention methods, devices and systems add new elements to extend the original gameplay, while the prior art condenses the game into a bite-sized experience.

Hence, while the computer games rules of the prior art such as mini-game rules are equivalent to the rules of the Base Game, the rules in PGH may include objective or objectives that were never part of the base game. For example, in a digitized basketball game (e.g., an NBA computer game), in a single-game setting, the player selects an existing NBA team and competes against either the AI or another player. The player's objective is to outscore the opposing team and win the match by doing so. A PGH that's created from a specific highlight of an NBA game may have an objective for the player to make more than X passes (e.g. 10) between their teammates within a specific time frame, to score a basket from a distance at least equal to the distance of the PGH creator's highlight's score, or to steal the ball from the opposing team within a specific time frame.

The operations in accordance with the teachings herein may be performed by a computer specially constructed for the desired purposes or by a general-purpose computer specially configured for the desired purpose by a computer program stored in a non-transitory computer-readable storage medium.

Embodiments of the presently disclosed subject matter are not described with reference to any particular programming language. It will be appreciated that a variety of programming languages may be used to implement the teachings of the presently disclosed subject matter as described herein.

In recent years, certain moments in gaming have received global attention, in a manner that can be compared to attention given to great moments in the Olympics or in professional sports. Some embodiments of the presently disclosed subject matter provide systems and methods for enabling gamers to identify notable or exciting sequences in their gameplay, and then to generate shareable "PGHs" based on these game sequences which can enable "re-experiencing" these sequences. These PGH can then be shared e.g. on social media, and can potentially attain a virality of their own.

Some embodiments of the presently disclosed subject matter provide systems and methods for enabling gamers to create from a computer base game by only one 'click' endless number of new games with new rules which were not included in the base game.

Additionally, PGH was created to address several key challenges in the gaming industry. Firstly, it aims to solve the issue of game discoverability, which has become increasingly difficult due to the overwhelming number of game releases across various platforms. In 2023 alone, Steam saw 14,532 game releases, while mobile app stores had over 100,000 new games. PGH empowers gaming communities to promote and market games through organic, user-generated content, allowing even smaller studios to gain visibility without relying solely on traditional marketing methods. As

Secondly, PGH in accordance with embodiments enables gamers to capture their best gaming moments and transform them into playable highlights, which can be shared across social media platforms. The PGH not only enhances the gaming experience for the community but also serves as a powerful marketing tool for game studios, developers, and publishers. By integrating the PGH SDK, studios can empower their community to showcase the game, create demos, and provide early access to the press, all while focusing on optimizing the gaming experience. Moreover, PGH helps studios uplift the lifetime value of their users by facilitating in-game discovery, and encouraging players to explore more items, levels, characters, and DLCs.

In some embodiments, the systems and methods taught herein can be applied to a wide variety of games and virtual experiences, as will be described in detail hereinbelow.

Prior to the detailed description of the invention being set forth, it may be helpful to set forth definitions of certain terms that will be used hereinafter.

The term `tracking data' as used herein and through the specification and claims should be understood to encompass data describing a full play of a game (e.g. a first-person shooting game) by an initial user. The term refers to the detailed information that is recorded during a gameplay session to capture and reproduce the game state and player actions.

The term `Time-based data' as used herein and through the specification and claims should be understood to encompass changes or modifications to the game state that are triggered at specific time points or intervals relative to the start of the PGH. These changes are not dependent on any specific in-game events or player actions but rather occur automatically at predetermined times. For example, spawning a new enemy character at the 15 second mark of the PGH.

The term `event-based data' refers to changes or modifications to the game state that are triggered by specific in-game events or player actions. These changes occur dynamically in response to certain conditions being met or certain actions being taken by the player or other game entities. For example, changing the behavior of an enemy character when the player enters a certain area of the game world.

The term 'Virtual object' as used herein and through the specification and claims should be understood to encompass any distinct element or entity within the game world that has its own properties and behaviors. Examples of virtual objects include, but are not limited to, characters (player characters and non-player characters), items (e.g., weapons, power-ups, collectibles), vehicles, buildings, and interactive elements of the game environment. Each virtual object is defined by a set of data that describes its various attributes, such as visual appearance, animation, physics properties, behavioral scripts, interaction capabilities, and gameplay-specific characteristics.

The term 'Creator' as used herein and through the specification and claims should be understood to encompass an individual responsible for conceiving, designing, and creating elements of a computer game, including but not limited to the game's concept, rules, mechanics, levels, environments, characters, and other assets. It is noted that some of the aforementioned elements can be created automatically by an algorithm, by the original game developers and/or mechanics, or in collaboration with other Creator(s).

The term `Playable Gameplay Highlight(s) (PGH)' or 'PGH' or 'PGHs' or `PGH Game' or `PGH Games' as used herein and through the specification and claims should be understood to encompass playable content, created for example by a gamer from his own original gameplay, or historical gameplay of a computer game. In accordance with embodiments, the created playable content can be played by any user or users as if they were the original gamer in that specific gameplay moment. This playable content is time-constrained, aligning with the length of the original gameplay. Each PGH comprises objective(s) and/or constraint(s) and/or scoring parameter(s) and/or end condition(s) **1224** and/or End PGH Criteria(s) **1222** set by the creator or by an algorithm, for example an artificial intelligence (AI) algorithm, or a mixture of the two (e.g. multiple objectives, some created by a creator and some by an algorithm), based on the creator's gameplay, and includes a scoring system that evaluates each player's performance, according to the set scoring parameters. In some embodiments, the PGH includes rules (e.g. Objective(s) and/or Constraint(s) and/or End Condition(s) and/or End of PGH Criteria), along with scoring parameters, that were never part of the rules of the base game.

The term `original game(s)' or `game(s)' or `base game(s)' or `computer game(s)' or `computer base game(s)' as used herein and through the specification and claims should be understood to encompass the first or source computer game played by the original or initial game player. The computer game(s) or PGH may be all kinds of computerized games e.g. two-dimensional games and three-dimensional games, first-person and third person games, single player/multiplayer games, racing, shooting or turn-based (e.g. chess) games, virtual reality (VR)/augmented reality (AR) games, scored/unscored games, board games, competition games, tournament games, gambling games, prize games, etc. The term "game" also includes non-competitive virtual "experiences" such as a VR/AR musical concert or a VR/AR exploration of a virtual territory etc.

The term 'gameplay' or 'gameplays' or 'gameplay' or `game plays' as used herein and through the specification and claims should be understood to encompass the way in which a player interacts with a game, including the state, actions, rules, mechanics, and structure presented by the game, as well as the player's actions and states employed to progress through the game, along with other player's (e.g. NPC players or other players in a multiplayer game) actions and states. Gameplay refers to the overall data attributes that allow playing the game, encompassing the game's design, flow, and the player's engagement with the game's systems and content, including other players' engagement. It involves the challenges the player faces, the choices they make, the actions they take, and the feedback and rewards they receive as a result of their interactions with the game world.

The term `player' as used herein and through the specification and claims should be understood to encompass a user playing the base game or the PGH.

The term 'Highlight' or 'Highlights' as used herein and through the specification and claims should be understood to encompass a selected Timestamp or time interval during a gameplay of a computer game in which the Player wants to create a PGH. An example of 'Highlight' may be a duration of 20 seconds in an NBA computer game, where no other player managed to take the ball away from the player.

The term 'State' as used herein and through the specification and claims should be understood to encompass the characteristics of an entity during the game. An example of a 'state' may be for example player location, or player health in a computer game.

The term 'Action' as used herein and through the specification and claims should be understood to encompass an operation and/or movement that's performed by a player during a game such as jump, shoot, etc.

The term 'Event' or 'Events' or `Identified Event' or `Identified Events' as used herein and through the specification and claims should be understood to encompass an action and a state of a Player, and/or an action or state of a Game.

The term 'Media' as used herein and through the specification and claims should be understood to encompass a recording of the frames, video and audio of the computer game.

The term 'Configuration' as used herein and through the specification and claims should be understood to encompass properties that define a PGH, such as Objective, score parameters, starting and end point, thumbnail, title, and the like.

The term `URL' (Uniform Resource Locator) as used herein and through the specification and claims should be understood to encompass a sharable Link to a specific PGH.

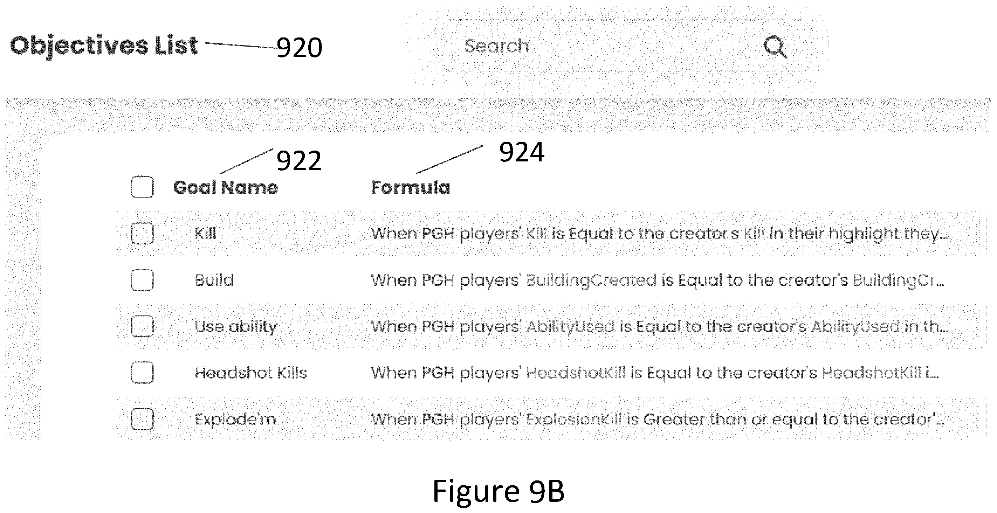

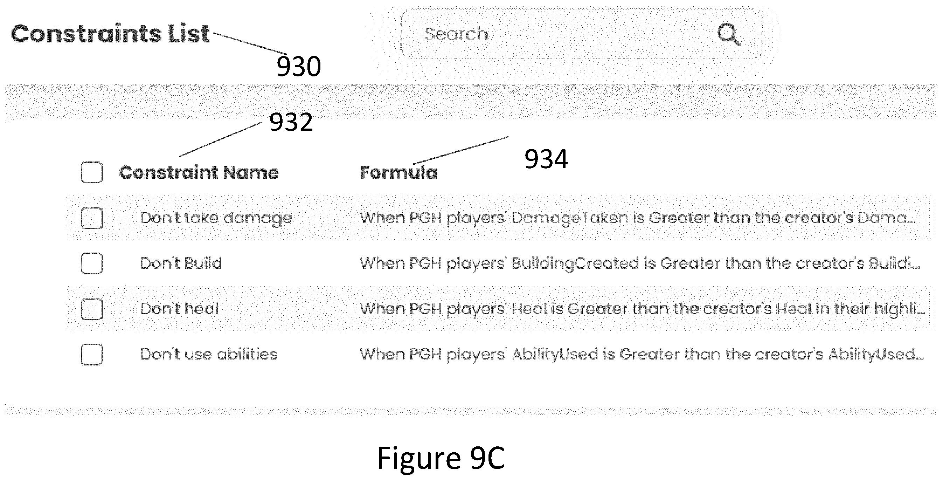

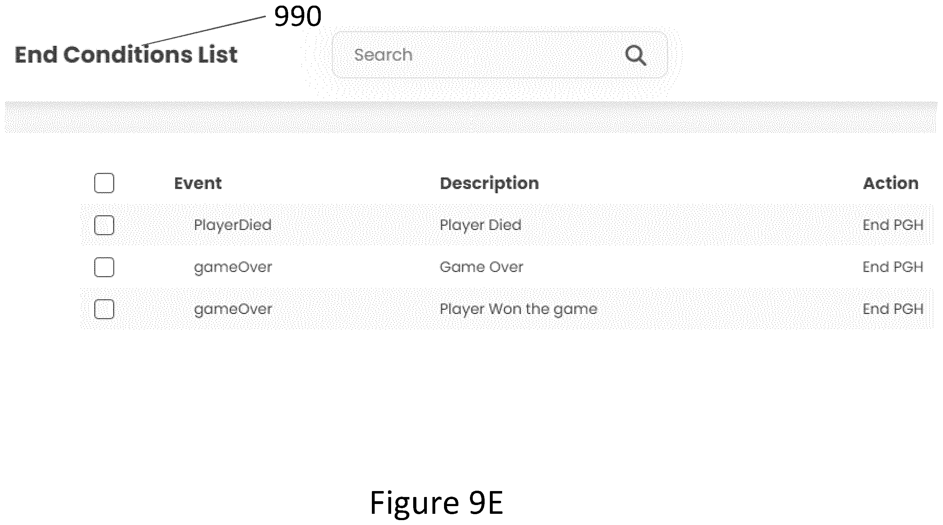

The term 'Rule' or 'Rules' or `PGH Rules' as used herein and through the specification and claims should be understood to encompass a boolean formula/clause comprising logic operations based on for example boolean conditions from the PGH. Specifically, Rules may be defined as logical passages, such as one or more binary logical passages relating to a selected played computer game segment comprising the PGH such as PGH building blocks. The rules may be based on the generated 'Objective(s)' and/or 'Constraint(s)' and/or `End Condition(s)' and/or `End PGH Criteria 1222(s)'. Examples of such rules are illustrated in Figure 9B, Figure 9C and Figure 9E.

The term 'Objective' or 'Objectives' as used herein and through the specification and claims should be understood to encompass one or more goals that a PGH player needs to accomplish in a PGH game to secure victory. An example of possible objective(s) is shown in **Figure 9B**

The term 'Constraint' or 'Constraints' as used herein and through the specification and claims should be understood to encompass one or more conditions such that if the condition is reached the player loses the PGH. An example of possible constraint(s) is shown in Figure 9C.

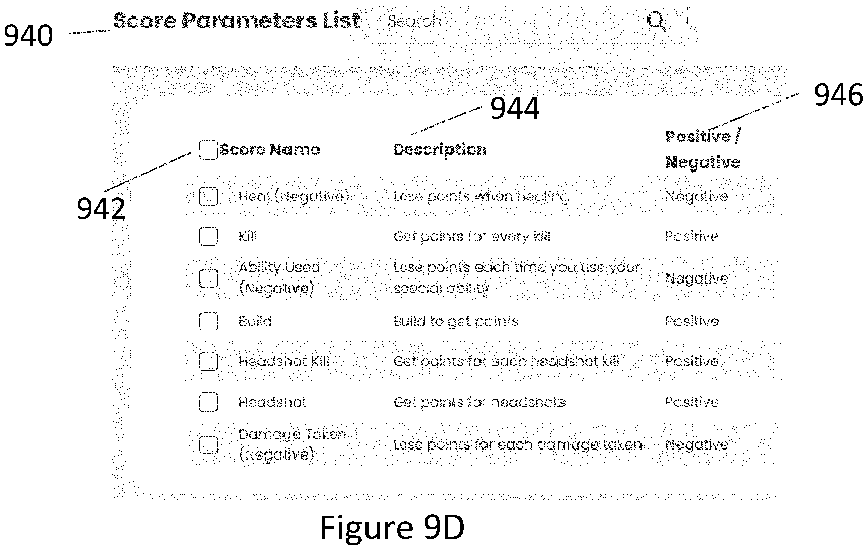

The term 'Score' or 'Scores' or `Scoring Parameter' or 'Scoring Parameters' or 'Score Parameters' as used herein and through the specification and claims should be understood to encompass a list of conditions such that if the condition is reached the player gets a score. The score can be either positive or negative and is accumulative such that whenever a new condition is reached, the score is updated either positively (i.e. by adding a score to the accumulated score) or negatively (i.e. by subtracting a score from the accumulated score). An example of possible scoring parameter(s) is shown in **Figure 9D****.**

The term `End Condition' or `End Conditions' as used herein and through the specification and claims should be understood to encompass a condition such that if the condition is reached the PGH ends, either with the player's securing a victory in the PGH game, either with the player's losing the PGH or possibly without a predefined victory or loss of the PGH. An example of possible end condition(s) is shown in **Figure 9E****.**

The term `End PGH Criteria' `End of PGH Criteria' or `as used herein and through the specification and claims should be understood to encompass a condition such that if the condition is reached the PGH ends, either with the player's securing a victory in the PGH game, either with the player's losing the PGH or possibly without a predefined victory or loss of the PGH. Examples of possible End PGH Criteria **1222** are time limit (for example, the player has 30 seconds to reach one of the objective(s)), number of turns (for example, in a chess game, the user has 20 turns to reach one of the objective(s)), mixture of number of turns and time limit (for example, in a chess game you have 5 turns and 120 seconds to reach one of the objective(s)).

The term `PGH building blocks' or `building block' or `building blocks' or `data building block' as used herein and through the specification and claims should be understood to encompass a formula formed based on identified events such as 'actions' and/or 'states' to create one or more 'Objectives' and/or one or more 'Constraints' and/or one or more `End Conditions' and/or one or more `End PGH Criteria **1222'.**

The terms `non-transitory memory' and "non-transitory storage medium" used herein should be expansively constructed to cover any volatile or non-volatile computer memory suitable to the presently disclosed subject matter.

The term 'stream' as used herein and through the specification and claims should be understood to encompass digital data (such as audio or video material) that is continuously delivered one or multiple packets at a time and is usually intended for immediate processing or playback.

The term 'streaming' as used herein and through the specification and claims should be understood to encompass the act, the process, or an instance of streaming data or of accessing data that is being streamed.

The term 'replayer' as used herein and through the specification and claims should be understood to be equivalent to the term 'secondary user'.

The term `PGH data object' or `data object' as used herein and through the specification and claims should be understood to encompass the data needed to play a PGH.

The term `graphic element' or `graphic elements' or `graphic assets' or 'assets' as used herein and through the specification and claims should be understood to encompass visual components within the game, such as characters, environments, objects, user interface elements, special effects, animations, textures, and art style. Example of graphic elements include but are not limited to: meshes; a comprehensive set of textures such as albedo, normal map, height map, occlusion, detail mask, and baked lightmap; support for additional texture maps like metallic, roughness, and emissive maps; secondary maps including detail albedo and secondary normal map; UV maps for texture coordinates; shaders and materials that define the visual appearance and light interaction; animation rigs with keyframes and curves for movement; colliders for physical interactions; physic states for dynamics and kinematics; real-time lighting elements with shadow maps and global illumination; reflection probes and screen space reflections for accurate reflections; particle systems for special effects; post-processing effects for visual enhancement like bloom, motion blur, depth of field, tone mapping, and color grading; sound assets for spatial audio effects; AI navigation meshes for character pathfinding; Level of detail (LOD) systems for performance optimization; occlusion culling and frustum culling systems for rendering efficiency; and comprehensive scripting capabilities to control game logic and interactions.

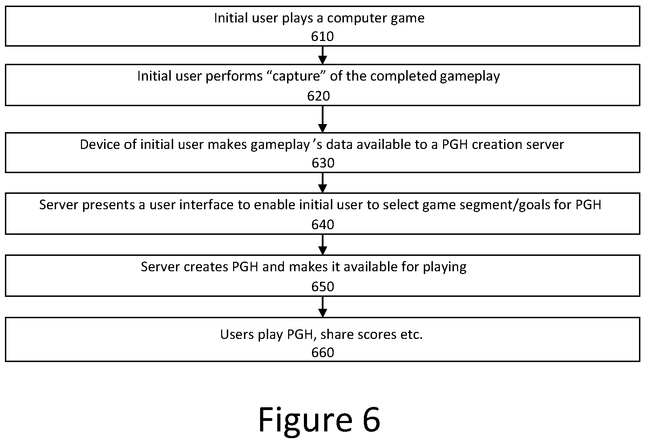

Attention is now drawn to **Figure 6****,** which illustrates a flow chart **600** of an example sequence of a user playing a game, creating a derivative PGH, and sharing it with other users, in accordance with some embodiments of the presently described subject matter.

An initial user can play (**610**) a computer-based game (for example: on a personal computer, smartphone, tablet, dedicated gaming device, etc.).

While playing the game, the initial user can perform an action to "capture" (**620**) the completed gameplay. By way of a non-limiting example, the initial user can click (via for example an input device) on a "PGH capture icon" that is part of the game's user interface, or press on the keyboard a key combination (e.g. Alt button + the "g" button on the keyboard). It is noted that alternatively an initial user can - in some embodiments - utilize some kind of suitable interface to begin the "capture" (**620**) process during gameplay or after gameplay. Alternatively, the capturing process can, for example, be automatically triggered by an algorithm (e.g. an artificial intelligence (AI) algorithm) that gives an automatic score for the shareability of the gameplay, or to the likelihood that a specific gameplay is suitable for creating a PGH from.

In some cases, the PGH can be generated and "captured" (**620**) while playing the game, e.g. before completion of the game.

The initial user's device can then make data of the completed gameplay available (**630**) to a PGH creation server. It is noted that the transfer of gameplay data to a PGH creation server can be done concurrently with gameplay or subsequent to gameplay, can involve intermediate entities etc.

In accordance with another embodiment, the entire game's data is being uploaded to PGH's servers all the time during gameplay, so that the user can choose the specific highlight to turn it into a PGH at a later time.

The server can then present (**640**) a user interface (UI) to the initial user. The presented user interface can enable the initial user to select a particular segment/highlight of the completed gameplay or of the completed game to be included in the PGH (e.g., a 45 seconds gameplay sequence from a 15 minute gaming session). The presented user interface can also enable the initial user to select specific goals for the PGH (e.g. killing a certain number of enemies, moving the protagonist to a particular point on the game terrain, etc.)

Next, the server can create (**650**) a data object that enables playing the PGH, and can make this data object available to other users. By way of non-limiting example: the server can maintain a web page that enables users to peruse such data objects, and then access a particular object to play the respective PGH. In some cases, a link to the created data objects is provided. In some cases, the data object may be shared using known sharing methods such as by sharing a link such as address hyperlink address, and similar means.

Such "secondary" users can then access the newly-created PGH (e.g. by downloading, streaming, loading and the like), and then play (**660**) the PGH and conduct his or her own original game actions on this PGH.

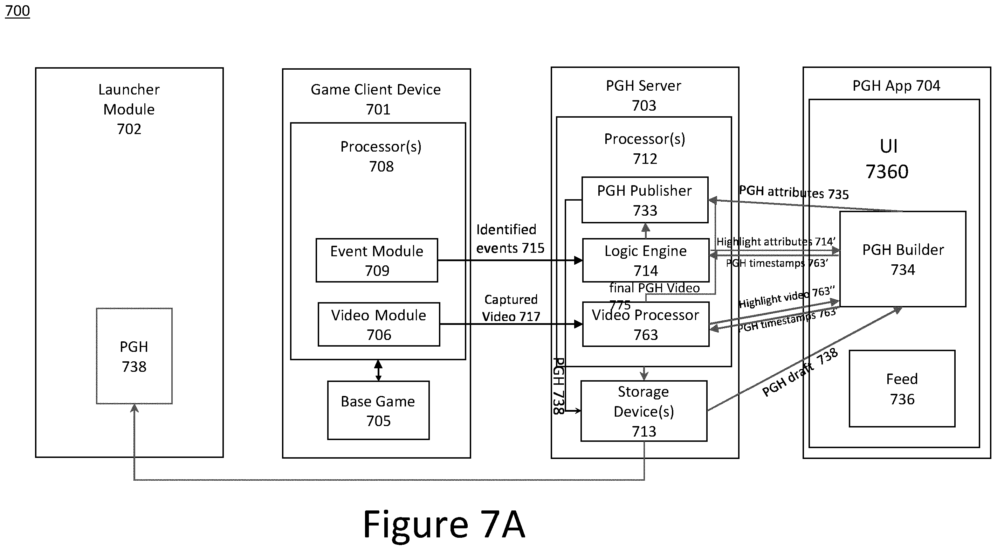

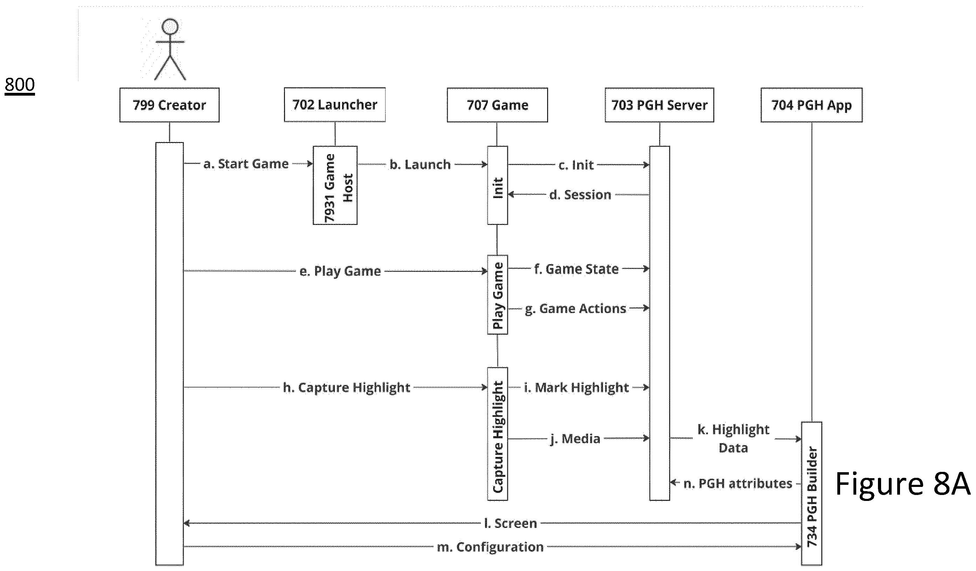

In accordance with another embodiments, and as illustrated in details in **Figure 7A****-****Figure 7F** and **Figure 8A****-****Figure 8D****,** the secondary users may click a link such as a PGH link, which sends a request to the server (e.g. PGH server) to load the corresponding game and then load the corresponding PGH. This can happen by either sending a request to the cloud to run the PGH (e.g. via the browser) or to open a dedicated app (e.g. PGH app) in order to run the PGH, for example the dedicated app could be cloud-based or open the base game on the secondary user's device and then open the PGH on top of the base game.

As will be described in detail hereinbelow, in some embodiments certain techniques are utilized to enable the secondary user to experience the original game scenario as experienced by the initial user, while ensuring that the progress of the game actually conforms to the original game rules, game physics etc. In some embodiments, these techniques include:
i) reproducing time-based events from the original game in the PGH. For example: if - at a particular time in the initial user's game play - a new enemy appears, or if an existing enemy spontaneously takes an action, then the PGH system can - based on data included in the PGH data object - replicate these enemy actions at the same time offset of the PGH play as in the original game.
ii) reproducing event-triggered reactions from the original game in the PGH. For example: if - in response initial user's firing a weapon at an enemy - the enemy changes its position and fires back, then the PGH system can - based on data included in the PGH data object - replicate the enemy behavior in response to the protagonist controlled by the secondary user firing his weapon at the particular enemy.
iii) Caged/uncaged NPCs: for robust PGH behavior, it can be desirable that an NPC in the PGH repeat all or some behavior in the original game for a certain duration of the PGH, and then behave according to its NPC characteristics after that time. An NPC on a PGH which behaves according to original game behavior is herein termed a "caged NPC", whereas an NPC which behaves according to its characteristics and/or other factors is herein termed an "uncaged NPC".
   In some embodiments, the PGH data object can include data that indicates whether an NPC's initial state is caged or uncaged. In some embodiments, the PGH data object can further include data that indicates that the NPC should transition from its initial state (e.g. caged) to the other state (e.g. uncaged) in response to a particular event.
   For example: data in the PGH data object can indicate that a particular NPC should transition from caged to uncaged at a certain time into the PGH, or in response to a particular event in the PGH.
   In some cases, not only caged/uncaged NPCs are changing behavior according to the secondary user's behavior. The claim is broader to this, it refers to any behavior of the game. Meaning that if the secondary user will choose similar choices as the initial user, then the general behavior of the gameplay highlight will be similar (not identical) but if the secondary user is changing things and choosing different choices than the initial user, than the gameplay will behave differently (a specific example is the caged/uncaged NPCs).
   In accordance with some embodiments, not only caged/uncaged NPCs are changing behavior according to the secondary user's behavior. For example, if the secondary user will choose similar choices as the initial user, then the general behavior of the gameplay highlight will be similar (e.g. not identical) but if the secondary user is changing things and choosing different choices then the initial user and the gameplay will behave differently (a specific example is the caged/uncaged NPCs)

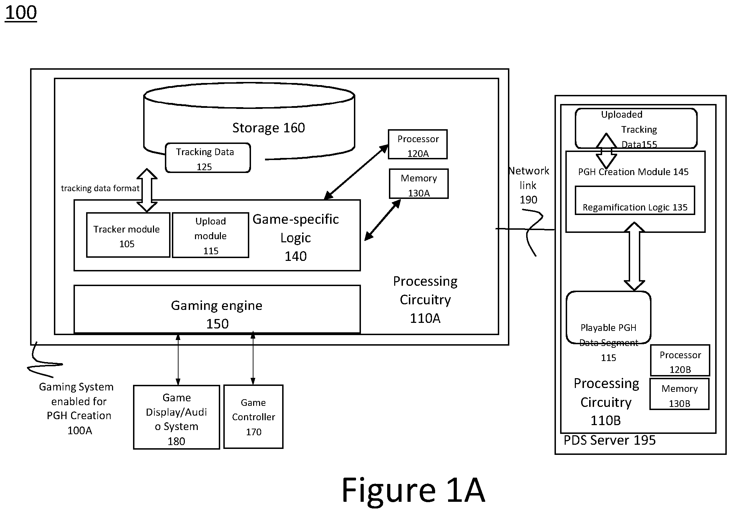

Attention is directed to **Figure 1A**, which is a block diagram of an example system 100 for creating a PGH data segment (PDS) that enables a gamer to play a PGH based on a scenario of a historical game play, in accordance with some embodiments of the presently disclosed subject matter.

Gaming systems enabled for playable creation **100A** can be a gaming device such a Sony^{Tm} Playstation^{Tm}, Microsoft^{Tm} Xbox^{Tm}, etc. Alternatively, a gaming system enabled for PGH creation **100A** can be a programmable device such as personal computer (PC), smartphone, tablet etc. Alternatively, a gaming system enabled for PGH creation **100A** can be another suitable platform.

Gaming system enabled for PGH creation **100A** can include a processing circuitry **110A,** which in turn can include processor **120A** and memory **130A.**

Gaming system enabled for PGH creation **100A** can be operably connected to e.g. various peripherals (such as gaming-related peripheral devices). Such peripherals can include e.g. game display/audio system **180** and game controller **170.** Peripherals can also include virtual reality/augmented reality headsets, or other kinds of gaming or other peripherals.

Processor **120A** can be a suitable hardware-based electronic device with data processing capabilities, such as, for example, a general purpose processor, digital signal processor (DSP), a specialized Application Specific Integrated Circuit (ASIC), one or more cores in a multicore processor, etc. Processor **120A** can also consist, for example, of multiple processors, multiple ASICs, virtual processors, combinations thereof etc.

Memory **130A** can be, for example, a suitable kind of volatile and/or non-volatile storage, and can include, for example, a single physical memory component or a plurality of physical memory components. Memory **130A** can also include virtual memory. Memory **130A** can be configured to, for example, store various data used in computation.

Storage 160 can be a suitable kind of volatile or non-volatile storage e.g. a hard disk, solid state drive etc.

Processing circuitry **110A** can be configured to execute several functional modules in accordance with computer-readable instructions implemented on a non-transitory computer-readable storage medium. Such functional modules are referred to hereinafter as comprised in the processing circuitry. These modules can include, for example, gaming engine **150,** tracker module **105,** and game-specific logic **140.**

Gaming engine **150** can be a software module which implements general-purpose gaming functionality such as, for example:
- managing devices such as game display/audio system **180** and game controller **170,** including receiving input from (and sending output to) such devices
- implementing virtual objects (such as game terrains, obstacles etc.) used and displayed in a game.
- providing an application programming interface (API) for provisioning virtual objects, determining current state of the virtual objects, managing the virtual objects.

Gaming engine **150** can be, for example, a commercial gaming engine such as Unreal^{™}, Unity^{™,} etc.

Gaming engine **150** can include various submodules which implement "bullet physics", "vehicle motion" and the like, thereby enabling ongoing changes in game state to take place autonomously within gaming engine **150.**

Gaming engine **150** can implement changes in game state that are in response to, for example:
- pseudo randomly generated events, such as an enemy pseudo randomly appearing in a first-person shooter game
- game controller device events, such as a user pressing a game controller device button to fire a weapon
- characteristics of the virtual objects - for example: a vehicle that is moving can have a continuously-updated location within the game terrain

Game-specific logic **140** can be a software module that - in conjunction with the gaming engine **150** and peripherals such as game display/audio system **180** and game controller **170** - implements an actual game (e.g. a first person shooter game, a racing game, a turn-based game such as chess etc.). Game-specific logic **140** can interact with gaming engine **150** via an API.

In some examples, game-specific logic **140** initially provisions gaming engine **150** with an initial game scenario. By way of non-limiting example: in a racing game, game-specific logic **140** can initially provision gaming engine **150** with virtual objects including a racetrack with a particular topology, a first-person player car with a location on the racetrack, non-player cars with particular appearances and motion characteristics etc. Game-specific logic **140** can perform the provisioning of the initial game scenario via the API of gaming engine **150.**

Game-specific logic **140** can include tracker module **105.** Tracker module **105** can write tracking data to storage. Tracking data can include data that is indicative of, for example:
a) data that was read by the game-specific logic **140** from the gaming engine **150** and describes current characteristics of virtual objects and related game state;
b) data written (or data to be written) to game-specific logic **140** by gaming engine **150** that describes current characteristics of virtual objects and related game state - as programmed for a particular game.

Tracker module **105** can write the tracking data in a particular data format (herein termed a "tracking data format"). A tracking data format can reduce complex virtual object definitions to a smaller quantity of data. For example: a large number of virtual object characteristics describing a car (e.g. color, wheel style, height etc.) can be represented by 3 bits identifying one of 8 car types implemented in a racing game.

Tracker module **105** can write the tracking data in e.g. 2 groupings:
a) a grouping containing data describing initialization data, and
b) a grouping containing data describing subsequent changes in the virtual objects and game state events.

The data describing subsequent changes in the virtual objects and game state events can include data indicative of when in the game the changes occurred (e.g. timestamps).

The data describing subsequent changes in the virtual objects and game state events can include images (e.g. screenshots) or video segments that are e.g. indicative of game events at the time of the changes/events.

Game-specific logic **140** can include upload module **115.** Upload module **115** can upload e.g. tracking data **125** to e.g. PDS server **195** via e.g. network link **190.**

PDS server **195** can be, for example, a suitable type of physical or cloud-based server that includes processing circuitry **110B,** which in turn can include processor **120B** and memory **130B.**

Processor **120B** can be a suitable hardware-based electronic device with data processing capabilities, such as, for example, a general purpose processor, digital signal processor (DSP), a specialized Application Specific Integrated Circuit (ASIC), one or more cores in a multicore processor, etc. Processor **120B** can also consist, for example, of multiple processors, multiple ASICs, virtual processors, combinations thereof etc.

Memory **130B** can be, for example, a suitable kind of volatile and/or non-volatile storage, and can include, for example, a single physical memory component or a plurality of physical memory components. Memory **130B** can also include virtual memory. Memory **130B** can be configured to, for example, store various data used in computation.

Processing circuitry **110B** can be configured to execute several functional modules in accordance with computer-readable instructions implemented on a non-transitory computer-readable storage medium. Such functional modules are referred to hereinafter as comprised in the processing circuitry. These modules can include, for example, PGH creation module **145,** and regamification logic **135.**

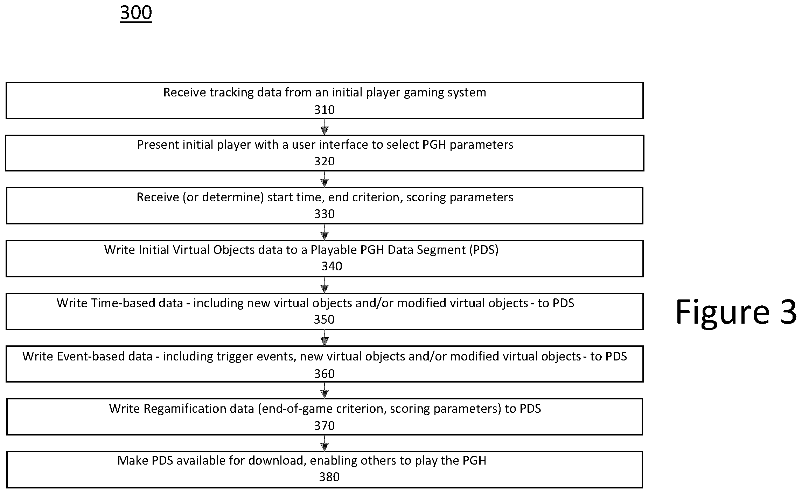

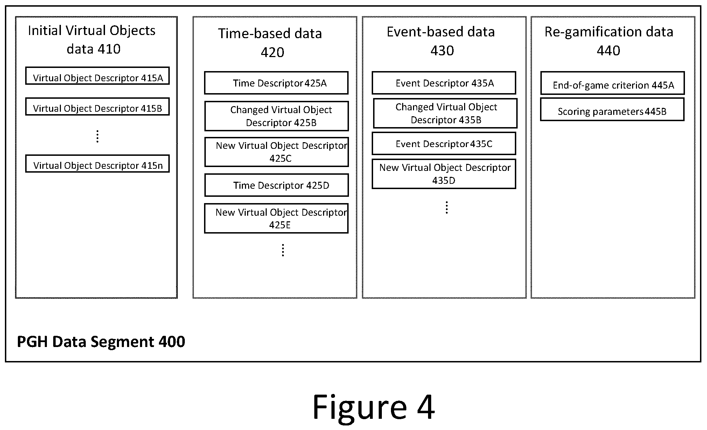

PGH creation module **145** can be a software module which accesses uploaded tracking data **155,** presents (for example) a user interface (e.g. a web-based user interface) to a user, and then uses tracking data and (optionally) user input (i.e. to set the creation parameters, for example see **330**) to build a PGH data segment. A flow diagram of an example method of outputting a PDS appears below, with reference to **Figure 3****.** An example format of a PGH data segment appears below, with reference to **Figure 4****.**

Regamification logic **135** can be a software module which receives (for example: via a user interface such as a web-based user interface) data that indicates scoring parameters of the PGH and/or an end-of-game criterion for the PGH.

By way of non-limiting example, the tracking data may include data describing a full play of a game (e.g. a first-person shooting game) by an initial user. Within the full play of the game there may be a number of scenarios with different types of enemies and targets, different terrains, and different goals.

In some embodiments, PGH creation module **145** can present the initial user with a web-based interface allowing him or her to select a particular scenario within the longer game that will constitute a basis for a PGH. For example: a selected scenario may involve the protagonist needing to kill a specific number of enemies located at particular positions in a particular terrain. In some such embodiments, the web-based interface displays still images or video segments (included in uploaded tracking data **155**) to aid the user in selecting the scenario.

In some such embodiments, regamification logic **135** can then provide PGH creation module **145** with a number of possible game-specific scoring parameters (e.g. time to kill all enemies, number of enemies killed in 30 seconds etc.) and receives the initial user's selection.

In some embodiments, PGH creation module **145** can create a PGH data segment **115.** In some such embodiments, PGH creation module **145** writes data indicative of one or more virtual objects that are part of the initial state of the selected segment (i.e. the virtual objects are present at the beginning of a replaying user's play of the game). This data can be derivative of uploaded tracking data **155,** and can be written to a PGH data segment **115** in the tracking data format or a different data format. This data can describe the virtual objects in a manner sufficient to enable a replayer to configure the virtual objects into a gaming engine.

In some embodiments, PGH creation module **145** can further write data indicative of time-based modifications to the PGH. For example, PGH creation module **145** can write data indicative of one or more virtual objects to be added to the game, or of one or more changes to virtual objects that were already defined, or of one or more deletions of virtual objects that were already defined. The data indicative of these virtual objects can be derivative of the uploaded tracking data **155,** and can be written to a PGH data segment **115** in the tracking data format or a different data format.

The data of the time-based modifications can be accompanied with explicit timestamps indicating time offsets in the PGH when the modifications should occur. In some embodiments, the timestamps are implicit (e.g. each time-based modification can represent changes happening at a 10ms interval).

This data can describe the virtual objects in a manner sufficient to enable a replayer to configure the virtual objects into a gaming engine at an appropriate time offset.

By way of non-limiting example: PGH creation module **145,** while processing uploaded tracking data **155,** can detect virtual object initializations and modifications which occur after the beginning of the part of the game that is being used to create the PGH. By way of a more specific example: PGH creation module **145** can - in some embodiments - examine tracking data from uploaded tracking data **155** which indicates a sudden appearance of a new enemy from a newly visible terrain feature such as a building. PGH creation module **145** can then accordingly create a time-based modification to the PGH to create the new virtual object corresponding to the new enemy.

In some embodiments, PGH creation module **145** can further write data indicative of event-based modifications to the PGH. For example, PGH creation module **145** can write data indicative of one or more virtual objects to be added to the game, or of one or more changes to virtual objects that were already defined - responsive to particular events happening the game (for example in response to behavior by the protagonist. The data indicative of these virtual objects can be derivative of the uploaded tracking data **155,** and can be written to a PGH data segment **115** in the tracking data format or a different data format).

This data can describe the virtual objects in a manner sufficient to enable a replayer to configure the virtual objects into a gaming engine in response to the indicated event.

By way of non-limiting example: PGH creation module **145,** while processing uploaded tracking data **155,** can evaluate which virtual object initializations and modifications are due to actions of the protagonist or due other game events, and which virtual object initializations and modifications are spontaneous i.e. not resulting from a causal sequence of other virtual objects. By way of more specific example: PGH creation module **145** can - in some embodiments - examine tracking data from uploaded tracking data **155** which indicates a stationary non-player character (NPC) becomes active (e.g. by attacking the protagonist) in response to being struck by a projectile fired by the protagonist. PGH creation module **145** can then determine that the NPC behavior is in response to the protagonist's behavior, and accordingly create an event-based modification to the PGH.

In some embodiments, PGH creation module **145** can further write data indicative of regamification data to the PGH. For example, PGH creation module **145** can write data indicative of scoring parameters and/or an end-of-game criterion into the PDS.

In some embodiments, PGH creation module **145** can write data indicative of a virtual object release criterion associated with a particular virtual object (e.g. in the initialization data, time-based data, or event-based data) into the PDS.

A virtual object release criterion is an event, which causes the replayer - upon occurrence of the event - to halt its ongoing control of the gaming engine to replicate the virtual object behavior of the game played by the initial user. Thereafter the replayer can implement a different behavior for the object as appropriate to the game. In some examples, the virtual object release criterion can be a time offset into the PGH.

By way of non-limiting example: in a racing game, an NPC car virtual object might be present. PGH creation module **145** can configure the PDS so that at a certain time offset into the play of the PGH by the replayer, the car no longer mirrors the behavior of the NPC car virtual object in the game played by the initial player, but rather follows a different behavior. For example, the original behavior of the NPC can be that an NPC car virtual object decelerates before a certain turn in the road, and the non-mirrored behavior could be that the car accelerates in that specific turn.

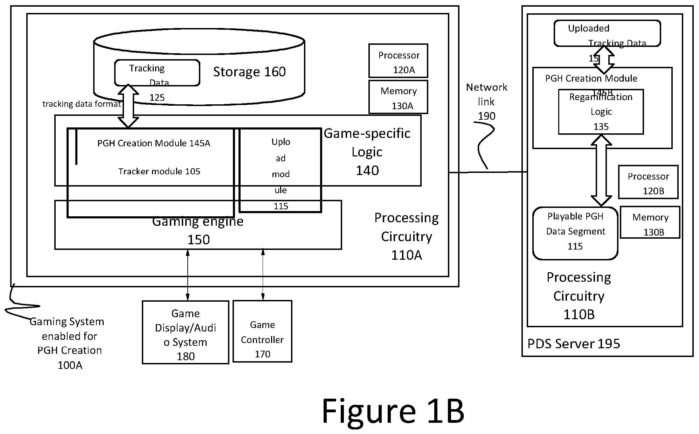

Attention is directed to **Figure 1B****,** which is a block diagram of an example variation of the system of creating a PGH data segment (PDS), in accordance with some embodiments of the presently disclosed subject matter. In **Figure 1B****,** the PGH creation functionality is divided by PGH creation module **145A** (located in the tracker module of gaming system **100A)** and PGH creation module **145B** (located in the PDS server). In this case the PGH creation module can be divided in any appropriate manner. For example, in some embodiments, PGH creation module **145A** can prepare time-based modification data and event-based modification data, and PGH creation module **145B** can continue to receive user-selected scoring parameters and prepare the regamification data.

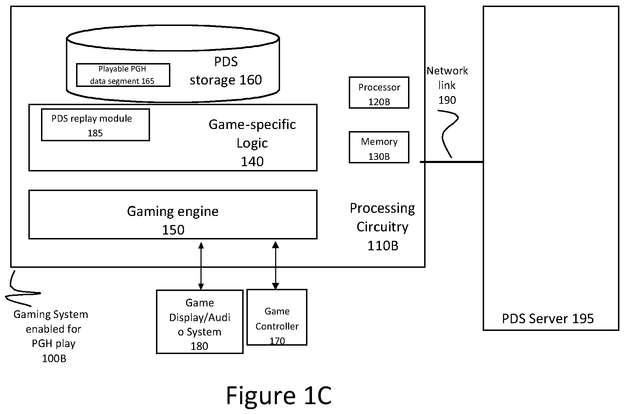

Attention is directed to **Figure 1C****,** which is a block diagram of an example gaming system enabled for playing a PGH, utilizing a PGH data segment (PDS) based on a scenario of a historical game play, in accordance with some embodiments of the presently disclosed subject matter.

A PGH player utilizing system **100B** of **Figure 1C** can download PGH segment **165** - for example from PDS server **195.** PDS replay module **185** can then utilize PGH segment **165** to provide the PGH. A detailed explanation of an example method of providing a PGH from PGH segment **165** appears hereinbelow, with reference to **Figure 4****.**

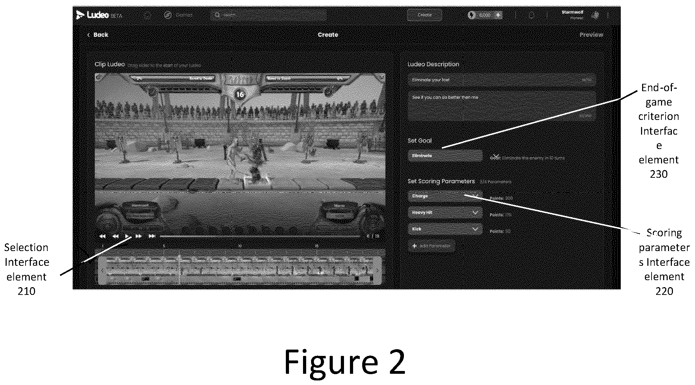

Attention is directed to **Figure 2****,** which is an example user interface presented to an initial player of a game, in accordance with some embodiments of the presently disclosed subject matter. The screen illustrated in **Figure 2** includes a selection interface element (**210**) enabling the initial user to select a time range from the original game which will be the basis of the PGH. This interface also illustrates still frames of the gameplay, these still frames can be images that were included in uploaded tracking data **155** (after being placed in the tracking data **125** by tracker module **105**), which were then extracted at PDS server **195.**

The screen illustrated in **Figure 2** further includes a scoring parameters interface element (**220**), which enables the initial user to specify scoring parameters for the PGH, and an end-of-game criterion interface element (**230**) which can also be termed a "goal" - which enables the initial user to specify on what conditions the PGH should complete.

Attention is now directed to **Figure 3****,** which illustrates a flow diagram 300 of an example method of creating a PGH data segment, in accordance with some embodiments of the presently disclosed subject matter.

Processing circuitry **110B** of PDS Server **195** can receive (**310**) tracking data uploaded from e.g. a gaming system **100A** of an initial player.

Processing circuitry **110B** of PDS Server **195** (e.g. PGH creation module **145**) can then present (**320**) the initial player with a user interface (e.g. a web-based interface or a protocol-based interface etc.) to enable the user to specify parameters for creation of a PGH from uploaded tracking data **155.**

Processing circuitry **110B** of PDS Server **195** (e.g. PGH creation module **145**) can receive (or determine) (**330**) a start time, end criterion, and one or more scoring parameters of the PGH.

In some embodiments, the initial user can select a start time (e.g. a time offset in the original game, which will serve as the starting point of the PGH) from the user interface.

In some other embodiments, processing circuitry **110B** of PDS Server **195** (e.g. PGH creation module **145**) determines a start time via a different mechanism (e.g. starting from the beginning of uploaded tracking data **155**).

In some embodiments, the initial user can select an end-of-PGH criteria from the user interface. For example, the user might specify a time offset in the original game as the end, or the user may select a criterion for the end of the game such as the number of enemies killed.

In some other embodiments, processing circuitry **110B** of PDS Server **195** (e.g. PGH creation module **145**) determines an end-of-game criteria via a different mechanism (e.g. utilizing the end of uploaded tracking data **155**).

In some embodiments, the initial user can select one or more scoring parameters from the user interface. For example, the user might select a scoring parameter from a game-specific drop-down list that the user interface presents.

In some other embodiments, processing circuitry **110B** of PDS Server **195** (e.g. PGH creation module **145**) determines a scoring parameter via a different mechanism (e.g. utilizing a single, game-appropriate scoring parameter). For example, if it's a racing game, the system might automatically set the scoring parameter to be the lap time. If it's a first-person shooter, the scoring parameter could be automatically set to the number of enemy kills.

Processing circuitry **110B** of PDS Server **195** (e.g. PGH creation module **145**) can next write (**340**) initial virtual objects data to a PGH Data Segment (PDS) **115.**

Processing circuitry **110B** of PDS Server **195** (e.g. PGH creation module **145**) can write (**350**) time-based data - including new virtual objects and/or modified virtual objects - to PDS **115.**

Processing circuitry **110B** of PDS Server **195** (e.g. PGH creation module **145**) can write (**360**) event-based data - including trigger events, new virtual objects and/or modified virtual objects - to PDS **115**

Processing circuitry **110B** of PDS Server **195** (e.g. PGH creation module **145**) can write (**370**) regamification data (e.g. end-of-game criterion/objective(s), constraint(s), end of PGH criteria(s), end condition(s), scoring parameters) to PDS **115.**

Processing circuitry **110B** of PDS Server **195** (e.g. PGH creation module **145**) can make PDS **115** available for access (e.g download), enabling others to play the PGH.

Attention is now directed to **Figure 4****,** which illustrates an example data structure of a PGH data segment, in accordance with some embodiments of the presently disclosed subject matter.

PGH data segment **400** can include initial virtual objects data **410,** which in turn can include zero or more virtual object descriptors **415A 415B** ... **415n.** Each virtual object descriptor can be a grouping of data which signifies a group of virtual object parameters that a gaming system enabled for PGH play should instantiate at the beginning of the PGH.

PGH data segment **400** can include time-based data **420,** which in turn can include zero or more time descriptors (e.g. time descriptors **425A-425D in** **Figure 4**). Each time descriptor can be descriptive of a time offset of the PGH. Each time descriptor can be associated with one or more new virtual object descriptors (e.g. new virtual object descriptor **425C**) and/or one or more changed virtual object descriptors (e.g. changed virtual object descriptor **425B**).

Each new virtual object descriptor can be a grouping of data which signifies a group of virtual object parameters that a gaming system enabled for PGH play should instantiate at a time offset in the PGH (as indicated by the associated time descriptor).

Each changed virtual object descriptor can include an identifier of an already instantiated virtual object, and can be a grouping of data which signifies a group of virtual object parameters that a gaming system enabled for PGH play should apply to the corresponding already instantiated virtual object - at a time offset in the PGH (as indicated by the associated time descriptor).

PGH data segment **400** can include event-based data **430,** which in turn can include zero or more event descriptors (e.g., event descriptors **435A -435C**). Each event descriptor can refer to virtual objects within the PGH and be descriptive of an event that can take place within the PGH (e.g. the death of an enemy, a protagonist reaching a target destination etc.). Each event descriptor can be associated with one or more new virtual object descriptors (e.g. new virtual object descriptor **425C**) and/or one or more changed virtual object descriptors (e.g. changed virtual object descriptor **425B**).

As before, each changed virtual object descriptor can include an identifier of an already instantiated virtual object, and can be a grouping of data which signifies a group of virtual object parameters that a gaming system enabled for PGH play should apply to the corresponding already instantiated virtual object - in response to an event in the PGH (as indicated by the associated event descriptor).

PGH data segment **400** can include regamification data **440,** which in turn can include end-of-game criterion **445A** and scoring parameters **445B.** End-of-game criterion **445A** can include data that indicates when a gaming system enabled for PGH play should end the PGH (e.g. at a particular time, after accomplishment of a particular goal such as the protagonist arriving at a point in the terrain or killing a certain number of enemies (or conjunctions of such criteria). Scoring parameters **445B** can include data that indicates what a gaming system enabled for PGH play should track and display as a success measurement in the PGH (e.g. number of enemy kills, protagonist strength, etc.).

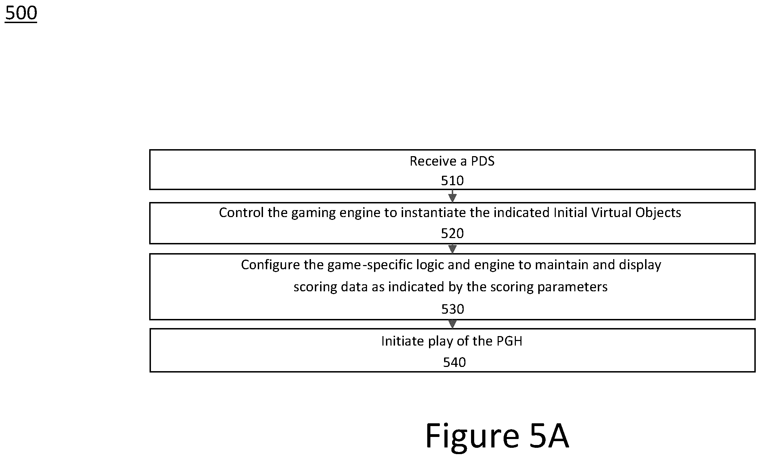

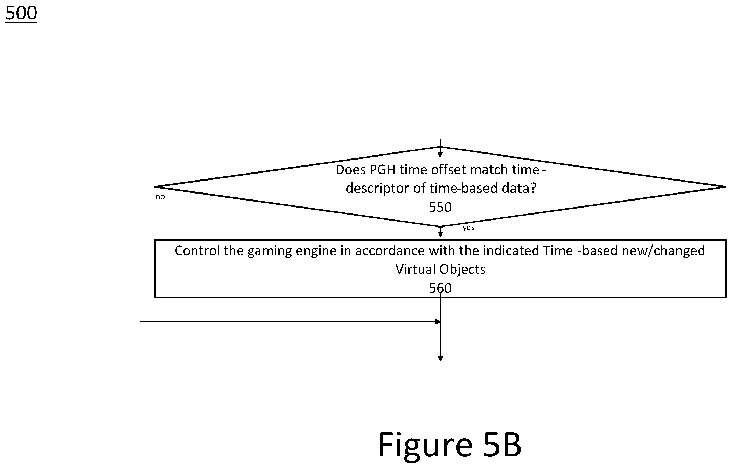

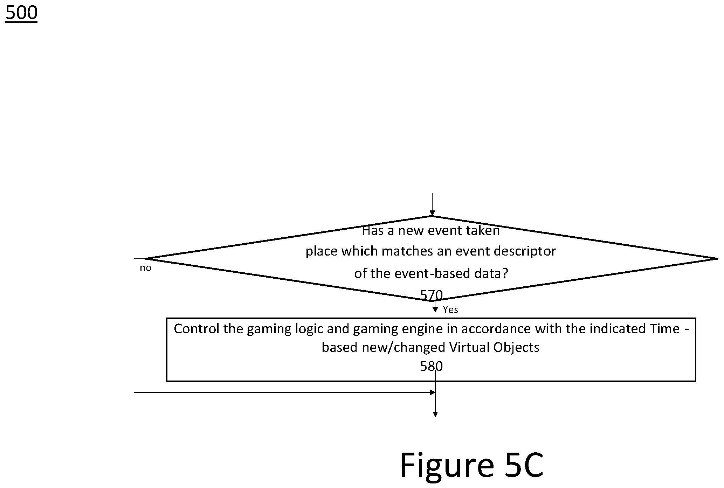

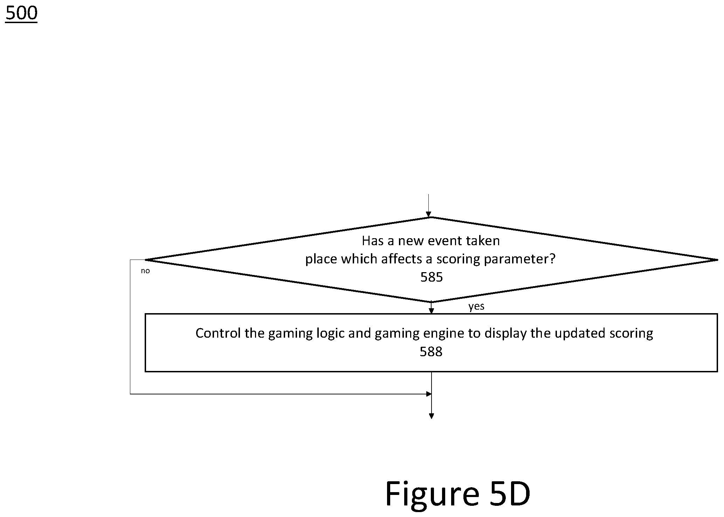

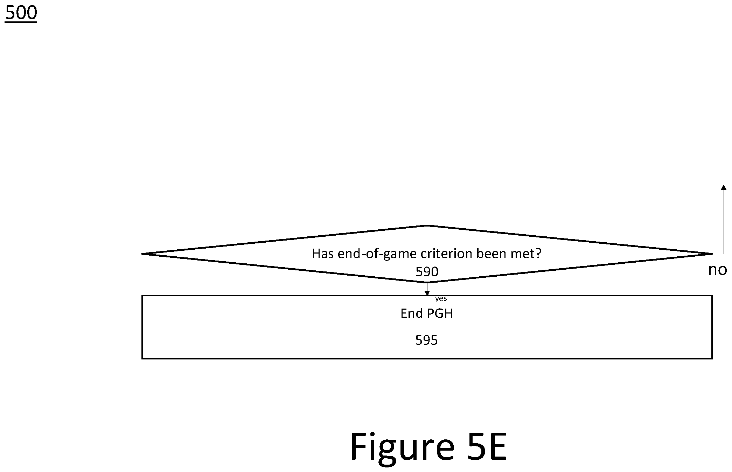

Attention is now directed to **Figs. 5A-5E****,** which illustrates a flow diagram 500 of an example method of providing a PGH from a PGH data segment, in accordance with some embodiments of the presently disclosed subject matter.

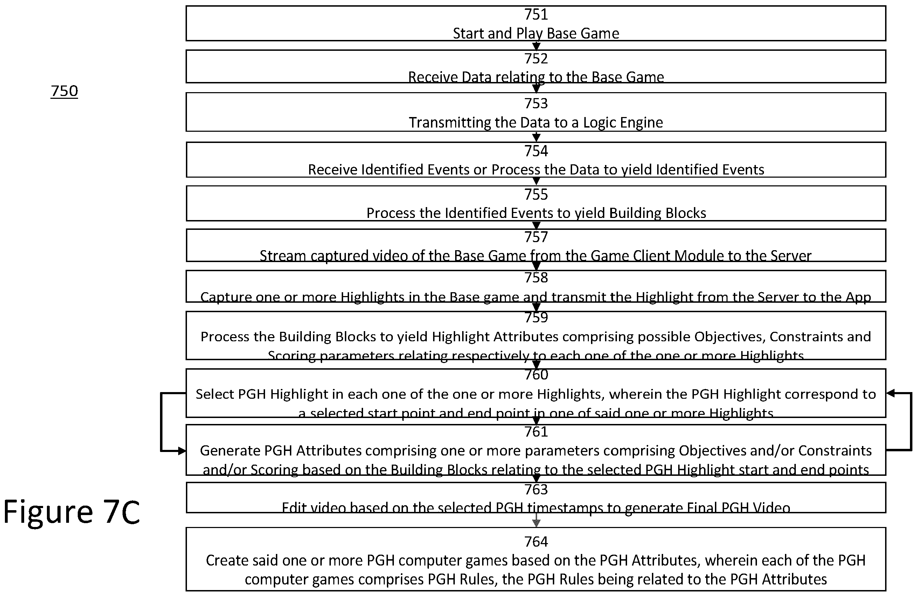

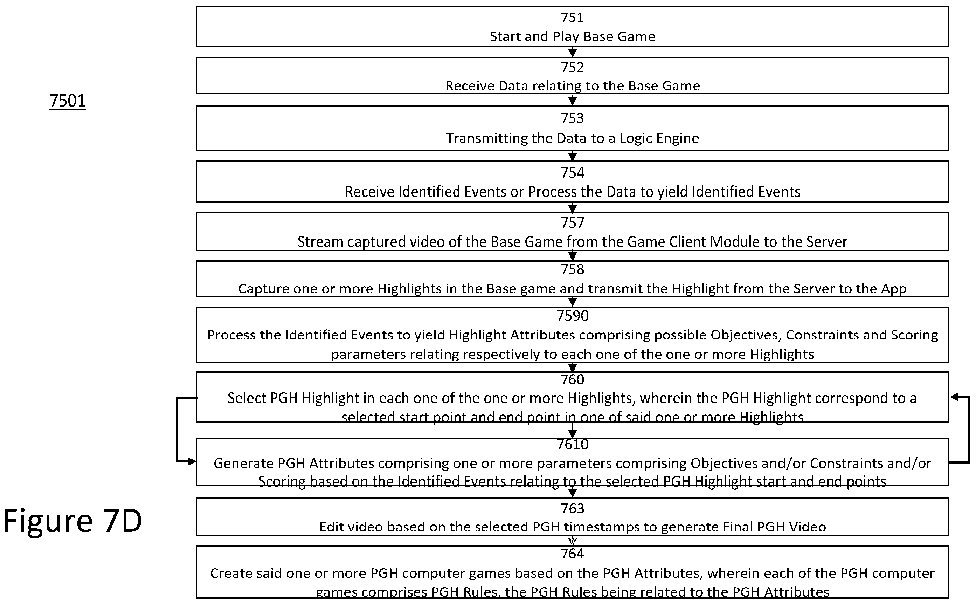

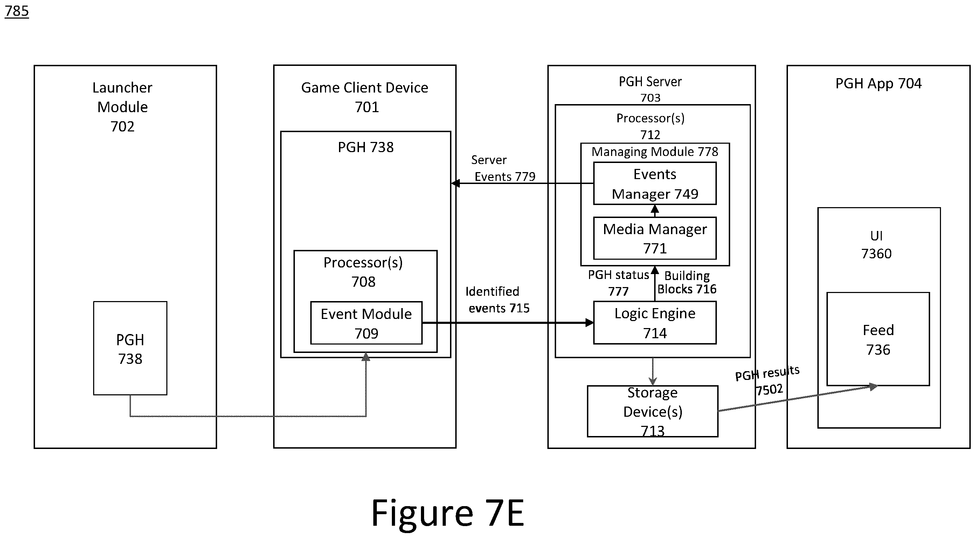

The method illustrated in **Figs. 5A-5E** can be executed, for example, by a gaming system enabled for PGH play **100B** or by the systems illustrated in **Figure 7C****,** **Figure 7D****,** **Figure 7E****.**

Processing circuitry **110A** (e.g. PDS replay module **185**) can receive (**510**) a PDS **165.**

Processing circuitry **110A** (e.g. PDS replay module **185**) can then control gaming engine **150** to instantiate the Initial Virtual Objects indicated in the PDS **165.**

Processing circuitry **110A** (e.g. PDS replay module **185**) can configure (**530**) the game-specific logic **140** and gaming engine **150** to e.g. maintain and suitably display the data indicated by the scoring parameters.

Processing circuitry **110A** (e.g. PDS replay module **185**) can initiate (**540**) play of the PGH e.g. by appropriately controlling game engine **150.**

After a certain time interval, processing circuitry **110A** (e.g. PDS replay module **185**) can evaluate whether the PGH time offset matches (**550**) a time-descriptor of time-based data. If so, then processing circuitry **110A** (e.g. PDS replay module **185**) can control (**560**) the gaming engine **150** instantiate new virtual objects or to modify existing virtual objects in accordance with the new or changed virtual object data in the corresponding time-based data of the PDS **165.**

In some embodiments, processing circuitry **110A** (e.g. PDS replay module **185**) evaluates the time-based data and only controls the gaming engine **150** to instantiate new virtual objects or to modify existing virtual objects that are not the protagonist of the game or controlled by the protagonist. In such embodiments, processing circuitry **110A** (e.g. PDS replay module **185**) filters out the protagonist and protagonist-controlled objects, simply because the PGH behavior of the game protagonist is controlled by the game player and not by events of the historical game (though events of the historical game might still be used for comparison purposes). In some other embodiments, virtual objects that are the protagonist of the game or controlled by the protagonist of the game are not present in PDS **165**.

Similarly, in some embodiments, a non-player character (NPC) can initially operate in what is described above as "caged mode". In this state, the NPC can behave as it did in the original historical game played by the initial player. In such embodiments, upon occurrence of a trigger (i.e. an event that the system has chosen to create), the NPC begins to exhibit a change in its behavior - for example: the NPC can forward exhibit behavior according to an artificial intelligence decision tree (rather than the behavior in the historical game).

More specifically: in such embodiments, processing circuitry **110A** (e.g. PDS replay module 1**8**5) evaluates the time-based data and only controls the gaming engine **150** to instantiate new virtual objects or to modify existing virtual objects when these objects are not associated with a virtual object release criterion that has been fulfilled. As described above, fulfillment of a virtual object release criterion indicates that the corresponding virtual object (e.g. NPC etc.) should no longer mirror the behavior in the historical game, but rather should operate according to different (e.g. game-specific) characteristics.

Processing circuitry **110A** (e.g. PDS replay module **185**) can continuously evaluate whether a new game event occurring during the PGH matches (**570**) an event-descriptor of the event-based data of the PDS **165.** If a match is found, the processing circuitry **110A** (e.g. PDS replay module **185**) can control (**580**) the gaming engine **150** to instantiate new virtual objects or modify existing virtual objects according to the new or changed virtual object data associated with the corresponding event-based data of the PDS **165.**

Processing circuitry **110A** (e.g. PDS replay module **185**) can - on an ongoing basis - evaluate whether a new game event matches (**585**) a scoring parameter of the regamification data of PDS **165.** If so, then processing circuitry **110A** (e.g. PDS replay module **185**) can control (**588**) the gaming engine **150** to display updated scoring information.

Processing circuitry **110A** (e.g. PDS replay module **185**) can - on an ongoing basis - evaluate (**590**) whether the end-of-game criterion has been met. If so, processing circuitry **110A** (e.g. PDS replay module **185**) can end (**595**) the game. Otherwise game play can continue e.g. processing circuitry **110A** (e.g. PDS replay module **185**) can return to evaluate again (**550**) whether the PGH time offset matches (**550**) a time-descriptor of time-based data.

Reference is now made to **Figure 7A****,** which is a high-level block diagram of an example system **700** configured and enabled to create a PGH based on one or more scenarios of historical gameplay in a base game, in accordance with some embodiments of the present invention.

According to one embodiment, system **700** includes the following main modules/devices:
1. Game Client Device **701**
2. Launcher Module **702**
3. PGH server **703**
4. PGH App **704**

### 1. Game Client Device 701:

In accordance with embodiments, the Game Client Device **701** relates to a device or software configured to enable the user (e.g. player or creator) to play an original game (e.g. Base Game **705**) or PGH and process the original game or PGH, using one or more processors **708,** for example in real-time (or close to real-time) to identify one or more 'Events' in the original game.

According to some embodiments, the Game Client device **701** may be hosted in a Server such as a video streaming server.

The Game Client Device **701** may be any type of device such as a smartphone, personal computer (PC), Virtual Reality (VR) device/glasses, tablet, smartwatch and the like.

The original game (e.g. Base Game **705**) may be any game a user (e.g. gamer) wants to play and further to be able to create and play PGH based or related to one or more scenarios of historical gameplays of the original game.

In accordance with embodiments, the Game Client Device **701** comprises one or more processors **708** which comprise or in communication with an Event Module **709** and Video Module **706.**

The Event Module **709** is configured and enabled to identify Events **715** in the Base Game **705** (for example in the case of creating a new PGH) and/or in the PGH (for example in the case of playing a PGH) and continually, for example in real-time, stream the Identified Events **715** to the PGH server **703**. The events **715** may include for example 'Actions' and/or 'States' of characters in the Base Game **705**.

The Game Client Device **701** further comprises a video module **706** configured and enabled to record the Base Game **705** and/or the view of the game (for example, the game and all the content layers that appear on it, such as the game current score, time left etc.) and transmit it to the PGH server **703**, either as a raw data, or after processing the data (e.g. after combining the frames into a video or video segment).

### 2. Launcher Module 702:

In accordance with embodiments, the Launcher Module **702** is a software platform that is configured and enabled to host, publish and execute PGH **738** and/or Base Game(s) **705** such as Microsoft games, SONY games, and the like.

In some cases, the Launcher Module **702** may also take the form of a virtual platform, resembling platforms such as Steam and GeForce Now and the like, or be in a Cloud Gaming platform.

### 3. PGH server 703:

In accordance with embodiments, the PGH Server **703** may be any type of Server such as a Backend application that may be hosted for example on a data center such as a private or public data center.

The Private Data Centers are typically owned and operated by gaming companies themselves. They are used to host gaming servers, store player data, and manage game content. Private data centers offer greater control and security over sensitive gaming data, including player profiles, game statistics, and in-game transactions. They also provide the infrastructure needed for game development, testing, and deployment.

Public Data Centers such as Public Cloud Data Centers may be for example Amazon Web Services (AWS), Microsoft Azure, and Google Cloud Platform which offer scalable infrastructure services that are widely used in the gaming industry.

The PGH server **703** comprises one or more processors **712** and one or more storage device(s) **713,** in accordance with embodiments. The one or more processors **712** comprise a Logic Engine **714,** a Video Processor **763,** and PGH Publisher **733.**

According to some embodiments, the processor(s) **712** may be located in a local or an external device or system such as an external server or external device.

In accordance with one embodiment, the architecture of system **700** includes a separation between the logic engine process and the video creation process. The Logic Engine **714** includes receiving Identified Events in the base game **705** to yield for example Building Blocks **716** (as shown in **Figure 7E**) which are further converted into Highlight Attributes such as Objectives and/or Constraints and/or Scoring Parameters in the game, while the video creation includes cutting and editing the selected segment from the Base Game **705** and further building/restoring the selected segment. The Highlight attributes are added and synchronized on top of the selected segment video to yield the PGH attributes **735** to the PGH Publisher **733** and PGH Timestamps **763'** to the Video Processor **763.**

In accordance with some embodiments, the Logic Engine **714** is configured and enabled to receive and/or extract the Identified Events **715** from the Events Module **705**, process and analyze the Identified Events **715,** and generate Building Blocks **716** using logical rules and/or mathematical formulas (e.g., aggregation functions), applied on one or more types of events. For example, during a shooting game, the Identified Events could consist of "Kill" events within the PGH, and one of the Building Blocks could be the Number of Kills in the PGH. In this example, the Identified Events consist of all the Kill events, and the mathematical formula could be a Count function over all the Kill events that are within the Identified Events, yielding a Number of Kills Building Block. Another example is a shooting game where the Building Block could consist of more than one event type: the Identified events could consist of all the "Jump" events, and in addition all the "Kill" events. A possible Building Block in this game could be "Air Kill", which means killing an Enemy within the game while the user is jumping. In this case, the Building Block verifies whether a kill had been made by the Player while he was jumping. Based on the building blocks **716,** the Logic Engine **714** is further configured to generate Highlight Attributes **714',** which are transmitted to the PGH App **704** for creating the PGH **738.** The Highlight Attributes **714'** comprise parameters including, for example, possible objectives, constraints, end conditions **1224,** end of PGH criteria **1222** and scoring parameters that will be used for playing the PGH and configuring the PGH Rules.

In some cases, the Building Blocks **716** can be identical to the Identified Events **715.** This means that no mathematical formulas or aggregations are applied to the Identified Events **715** to create the Building Blocks **716.** Instead, the Building Blocks **716** are direct copies of the Identified Events **716** without any modifications. For example, in a racing game, one of the Identified Events is "Lap Completed" which is triggered every time the player completes a lap around the racetrack. If no aggregation or mathematical formula is applied to this event, then the corresponding Building Block **716** could also just be "Lap Completed". So in this case, if the Identified Events is "Lap Completed", the resulting Building Blocks would be identical: "Lap Completed". The Logic Engine **714** could then use these Building Blocks **716** directly, without any transformations, to generate potential objectives and/or constraints and/or scoring parameters and/or end conditions **1224** and/or end of PGH criteria **1222** for a PGH. For example, a potential objective could simply be "Complete a Lap". Therefore, when the Building Blocks **716** are identical to the Identified Events **715,** it means that the events are used as-is without any modifications or calculations applied to them during the Building Block creation step. In this case, the raw events themselves act as the foundational components for generating the Highlight attributes.

In accordance with embodiments, the Building Blocks **716** are used by the Logic Engine **714** in an intermediate step for calculating and generating PGH parameters that will be included and used in the PGH **738** while playing the future generated PGH. Specifically, the Building Blocks **716** are used as raw material for calculating PGH parameters including, for example, one or more of objectives, constraints, end conditions **1224** end of PGH criteria **1222** and scoring that will be used for playing the PGH **738.** The Building Blocks are used to generate all possible combinations (or a subset of the combinations) of potential objectives, constraints, end conditions **1224,** end of PGH criteria **1222** and scoring (included in the transmitted Highlight Attributes **714**') to be used by the PGH creators or players for generating the PGH. For example, a captured Highlight of a Base Game includes '10 kills' of enemies in a period of one minute, the identified events are 'Kills' and the building blocks **716** will be used to generate various possibilities of objectives, constraints, end conditions **1224,** end of PGH criteria **1222** and scoring parameters based on the '10 kills' in the highlight. Accordingly, once the creator selects a time segment from the Highlight, for example a segment of 30 seconds, the objectives, constraints, end conditions **1224,** end of PGH criteria **1222** and scoring will be updated accordingly. More specifically in this example, say that the first 30 seconds of the Highlight includes 8 of the 10 kills, and the last 30 seconds includes 2 more kills, to the total amount of 10 kills in 1 minute. A potential initial objective for the highlight could be to kill 10 enemies in a period of one minute, and after the user selects the first 30 seconds (where the start time of the Highlight is 0 seconds and the end time is 30 seconds, where 8 kills occurred in the original Highlight), the potential objective is updated according to the events and Building Blocks of the first 30 seconds, in this specific example to kill 8 people, and the possible constraints, end conditions **1224,** end of PGH criteria **1222** and scoring parameters are also updated respectively.

In accordance with embodiments the Video Processor **763** is configured and enabled to receive the Captured Video **717** and process the video to yield Highlight Video **763"** transmitted to the PGH App **704**. The Video Processor **763** is further configured to receive selected PGH Timestamps **763'** of time interval during a gameplay of the Base Game in which the creator or Player wants to create a PGH **738** from. The video processor **763** edits (e.g. cuts) the related subset of video from the Highlight video based on Timestamps **763',** and creates Final PGH Video **775.** For example, the Timestamps **763'** may include a first Timestamp=30 see and a second Timestamp=65 see and based on these Timestamps the video processor cuts a video that starts at the first timestamp (30 seconds) and ends at the second timestamp (65 seconds), creates the Final PGH Video **775,** with a total duration of 35 seconds, and transmits the Final PGH Video **775** to the PGH Publisher **733.**

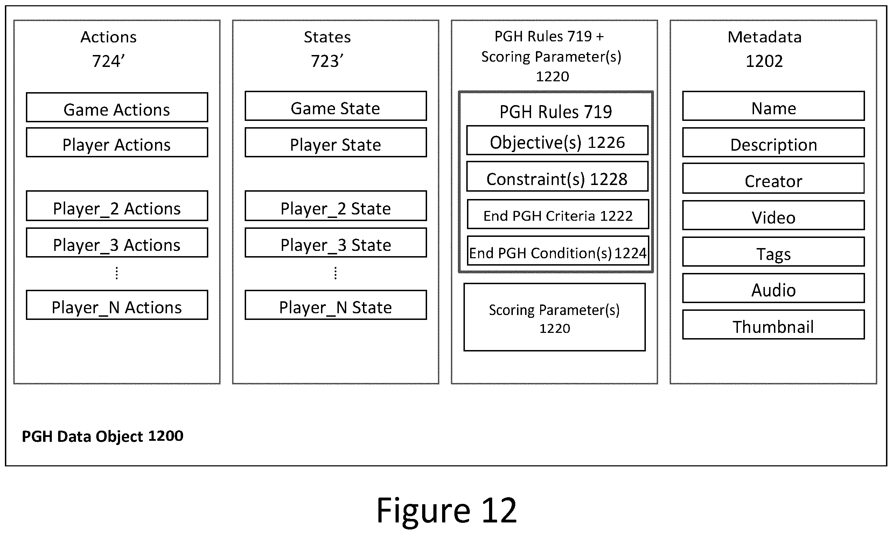

The PGH Publisher **733** is configured and enabled to receive the PGH attributes **735** from the PGH App **704** and Final PGH Video **775** from the Video processor **763** and publish the PGH **738.** In some cases, the published PGH **738** may be stored at Storage **713.** The publishing includes generating a digital representation of the PGH comprising for example a PGH Data Object **1200** as illustrated in **Figure 12****.** In some embodiments, the PGH Publisher **733** creates the PGH Data Object **1200** based on the selected start point and end point of the PGH attributes, where the PGH Publisher **733** further extracts the Events based on the start point and end point of the PGH attributes (e.g. use only Events that are associated with the period between the start point and end point) and saves them to the PGH Data Object **1200,** in order to enable the restoring of the PGH. For example, the start point and end point could correspond to a timestamp relative to the Highlight (For example, for a Highlight of 2:00 minutes, the start point could be 0: 12, and the end point could be 1:01, corresponding to 0 minutes and 12 seconds from the beginning of the Highlight to 1 minute and 1 second from the beginning of the Highlight), or alternatively the start point and end point could be relative to number of turns in a turn based game (for example, the start point could be at turn #34, and the end point could be turn #78).

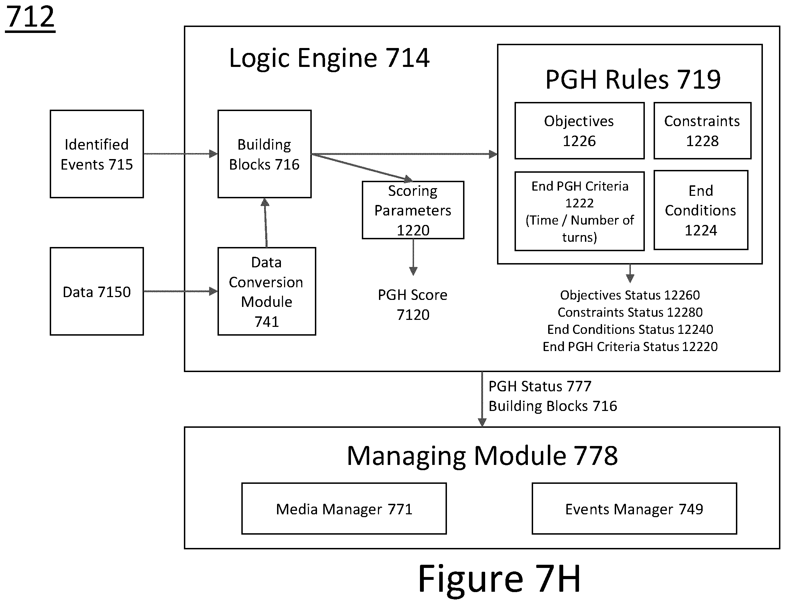

**Figure 7H** shows a detailed block diagram description of the Processor(s) **712** of **Figure 7A****,** in accordance with embodiments. As explained above, in some cases the Logic Engine **714** is configured and enabled to receive and/or extract the Identified Events **715,** for example from the Events Module **705**, process and analyze the Identified Events **715,** and generate Building Blocks **716** using logical rules and/or mathematical formulas (e.g., aggregation functions), applied on one or more types of events.

Alternatively or additionally the Logic Engine **714** may include a Data Conversion Module **741** configured and enabled to receive and/or extract Data **7150** and convert the Data to Identified Events **715** and/or Building Blocks **716.** The Data Conversion Module is configured and enabled to convert this diverse input data into a standardized format of Identified Events **715** and/or Building Blocks **716** that can be further processed by the Logic Engine **714.** In some embodiments the Data **7150** may be converted based on known converting modules, for example, if the Data Conversion Module **741** receives a text description of a key moment in the game, it would analyze the text and extract the relevant events, such as player actions or game state changes. These extracted events would then be converted into the same/close format as the Identified Events **715** that are typically generated by the Event Module **709**. Similarly, if the input data is an audio commentary describing a particular gameplay sequence, the Data Conversion Module **741** would process the audio, transcribe the relevant portions, and convert the information into discrete Identified Events **715** that capture the key aspects of the gameplay being described. By standardizing the input data into Identified Events **715,** the Data Conversion Module **741** allows the system to create PGH Data Objects **1200** and restore the PGHs from a wider variety of input sources beyond just the raw gameplay data. Other examples of known conversion modules are Neural Networks (e.g. Deep Neural Networks), that receive as an input Data **7150,** that could be either of one type or combination of two or more types, and calculates a representation (i.e. the last layer of the Neural Networks or an aggregated function which is based on running the data input on the Neural Networks function(s)), in order to convert this representation into Identified Events **715** and/or Building Blocks **716,** as an output.

In accordance with embodiments, the Data Conversion Module **741** can be located externally to the Logic Engine (e.g. in another external Processor in the Server)

The Data **7150** may include one or more of the following: Events, text, audio, images, video recording of the base Game, other video that describes the Base game.

In accordance with some embodiments the PGH Logic Engine **714** uses the Building Blocks **716** to calculate the PGH Score **7120** based on the Scoring Parameters and sends them to the PGH Rules **719** to calculate the PGH Status **777** which includes: Objective status **12260,** Constraint status **12280,** and the End PGH Criteria status **12220** (e.g. which of the criteria have been reached). The PGH Status **777** is calculated based on one or more of the Objectives **1226,** Constraints **1228,** End PGH Criteria **1222** and End Conditions **1224.**

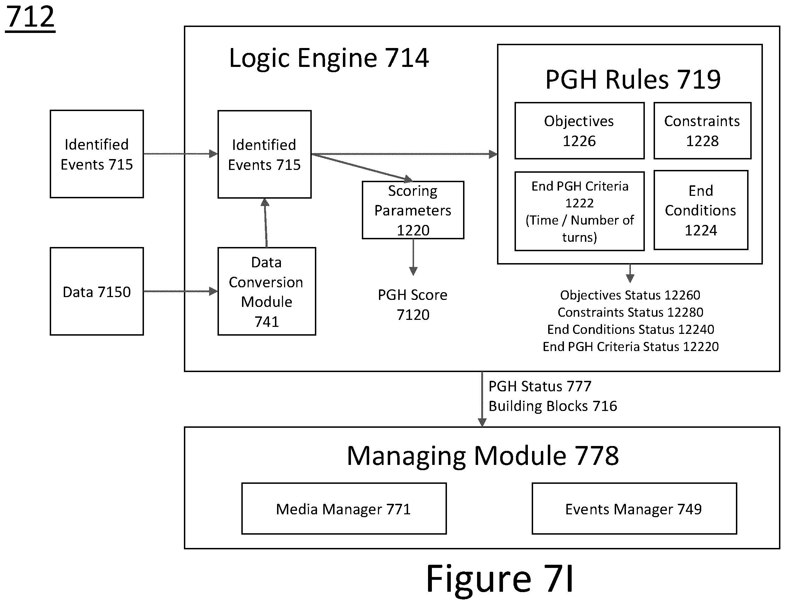

The embodiment illustrated in **Figure 7I**incorporates all the essential components and functionalities depicted in the previous **Figure 7H****.** However, **Figure 7I** presents an alternative configuration architecture wherein the Logic Engine **714** may include a Data Conversion Module **741** configured and enabled to receive and/or extract Data **7150** and convert the Data to Identified Events **715.** With reference to **Figure 7I****,** an alternative embodiment of the present invention is depicted which differs from the embodiment shown in **Figure 7H****.** In this configuration, the Building Blocks **716** is omitted from the system architecture. Instead, the embodiment utilizes only the Identified Events **715,** by converting the Data to Identified Event **716** through an intermediary processing step.

### 4. PGH App 704:

In accordance with embodiments, PGH App **704** is a software application that is configured and enabled to create the PGH game **738** based on received input including Highlight attributes **714'** and Highlight Video **763"** and to output PGH attributes **735** and PGH timestamps **763'** and further manage the PGH platform using, for example, User Interface **7360** that includes Feed **736,** on which PGH **738** can be discovered, executed from, shared, etc.

The PGH App **704** comprises a User Interface comprising a Feed **736** and a PGH Builder **734.** The PGH Builder **734** is configured to receive Highlight Video **763"** and Highlight Attributes **714'** comprising one or more of Objectives and/or zero or more Constraints and/or zero or more end conditions and/or one or more end of PGH criteria **1222** and/or one or more Scoring parameters. The creator may use the Highlight attributes **714',** along with the corresponding Highlight video **763",** and select a subset of the captured Highlight's timeline (for example, select the start point (e.g. start timestamp) and end point (e.g. end timestamp) of the captured Highlight which may be a subset of the captured Highlight). For example, in a captured Highlight with length of 2 minutes, the start point may be *10.5 seconds* from the beginning of the highlight, and the end point may be *1 minute and 12.2 seconds* from the beginning of the highlight, in order to create PGH timestamps **763'.** In addition, the creator may use the Highlight attributes **714',** that are based on the identified events and/or Building Blocks processed of his own gameplay of the Highlight, to select Objective and/or Constraint and/or Scoring parameters and/or End PGH Criteria **1222,** along with other PGH attributes **735** (e.g. name for the PGH, description, thumbnail 'preview' image, tags etc.) to generate PGH attributes **735,** which relate specifically to the video segment in the Base Game **705** (e.g. the selected starting point for the PGH, based on the Highlight Video **763",** such that both use the same timeline of the Highlight, such that the creator can use the timeline of the Highlight Video **763"** in order to scroll the video and choose the exact start point and he'd like to choose) in order to create the PGH attributes **735.**

In operation, as the user plays the Base Game **705**, the Event Module **709** extracts events from the game (e.g. from the game client **701**) to the PGH server **703**. The events include for example states or actions of one or more characters or states or actions of the game in the Base Game **705**.

For example, the Base Game **705** may be an NBA computer game and the 'Events' may be actions performed by one or more NBA players in the game. The events may be divided into a number of `Event Categories' such as 'state event' and `action event'.

A `state event' is the characteristics of an entity during the base game. An example of a 'state' may be for example player location, or player health in a computer game.

An `action event' is an operation and/or movement that's performed by a player during a game such as jumping, an NBA player shooting, etc.

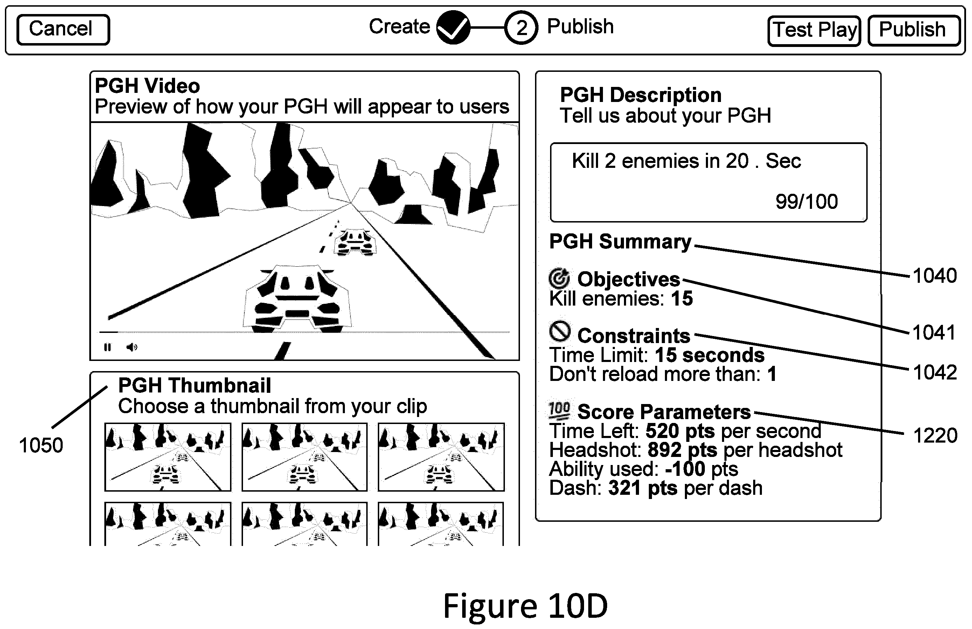

The identified events **715** along with a video **717** capturing the game, are transmitted, for example in real-time, or close to real-time to one or more processors **712** in the PGH Server **703**. The one or more processors **712** comprise a Video Processor **763** and Logic Engine **714.** At the PGH server **703** the Video Processor **763** is configured and enabled to process the Captured Video **717** and to generate a processed video comprising for example preview thumbnail video, and preview video. An example of a thumbnail video is illustrated in **Figure 10D** showing a PGH thumbnail **1050** to enable the user to easily select one or more Highlights using the PGH thumbnail **1050.** It is stressed that the video processor is also configured and enabled to process video segment(s), and/or frames of the captured video **717.**

The Building Blocks **716** are logical rules created based on translating the identified events **715** (such as States **723'** and Actions **724'** events in the Base Game **705**) to Logical phrases that can be understood by a PGH player or a PGH creator.

In accordance with embodiments, each building block of the Building Blocks **716** is formed by aggregating one or more Identified Events **715.** The aggregation function combines Identified Events **715,** which can be of the same type or different types. For instance, in a fighting game, an "Air kick" building block could consist of a "jump" identified action followed by a "kick" identified action within a specific time frame in the Base Game.

As an example of aggregating events of the same type, may be included in a game where a player's movements in X degrees are aggregated into a single movement of Y degrees, which combine all the individual movements. Similarly, if a player moves in place through a full 360 degrees, this movement could yield a "spin" building block, in accordance with embodiments.

It should be noted that in some cases, the aggregation function may yield a Building Block **715** which is identical to the original identified Event **715.** In such instances, the aggregation function acts as an identity function, leaving the Identified Event **715** unchanged. This means that the resulting Building Block would be equivalent to the original event recorded in the game.

In accordance with embodiments, the user (e.g. player or creator) may also activate a 'highlight' action that relates to one or more selected scenarios of the gameplay of the base game **705**. The selected 'highlight' along with the game events are transmitted, for example in real-time, as the user plays the game to one or more processors **712** in the PGH server **703**.

As an illustration, within the context of a streamed NBA video game event, specific in-game actions and states, such as 'running,' 'passing,' and 'dribbling,' 'location' 'weapon' are identified using the event module **709**. The term 'highlight' pertains for example to a particular segment lasting for example 20 seconds in the NBA game, wherein a player successfully completed 20 consecutive passes without any interception by opposing players.

For example, a new created 'objective' in an NBA game may be:
"When PGH players' playerPosition is equal to the creator's playerPosition in the end of their highlight, they will win the PGH"

This 'objective' relates to a newly formed rule that we can name for the sake of this example as "speed run from A to B", related to the basic NBA game. According to this 'objective', the player now has a new objective which was not one of the objectives of the NBA base game (e.g. Base Game **705**), in which the player must move from point A (the beginning of the PGH) in the NBA game to point B (The original end point of the Creator's PGH).

The `End of PGH Criteria' can be, for example, a time limit of 10 seconds and the `End Condition' can be, for example, an NBA game's end of the original game (i.e. when there's no time left for the original game timeline, e.g. the 4th quarter of an NBA game's clock reaches 0:00 minutes left to play).

A newly created 'Constraint' formula may be (in a non-limiting example): In an NBA game, a constraint could be to keep the ball in the same player's hands and not allow it to be in other players' hands (either from the player's team or the opposing team). This new 'Constraint' (which was not part of the base Game) can be related to the original actions and/or states that PGH creator had made while he played the game, or to Constraint(s) that can be derived from these actions and/or states.

These Objective(s), Constraint(s), End Condition(s) **1224** and End of PGH Criteria(s) **1222,** in accordance with embodiments, are created based on automatically and/or autonomously identified events in the NBA base game to create the above Objective and Constraint. It should be stressed that this new Objective and Constraint were never part of the rules of the NBA Base Game, and that they can be created, for example, based on the events that happened during the gameplay of the NBA base game.

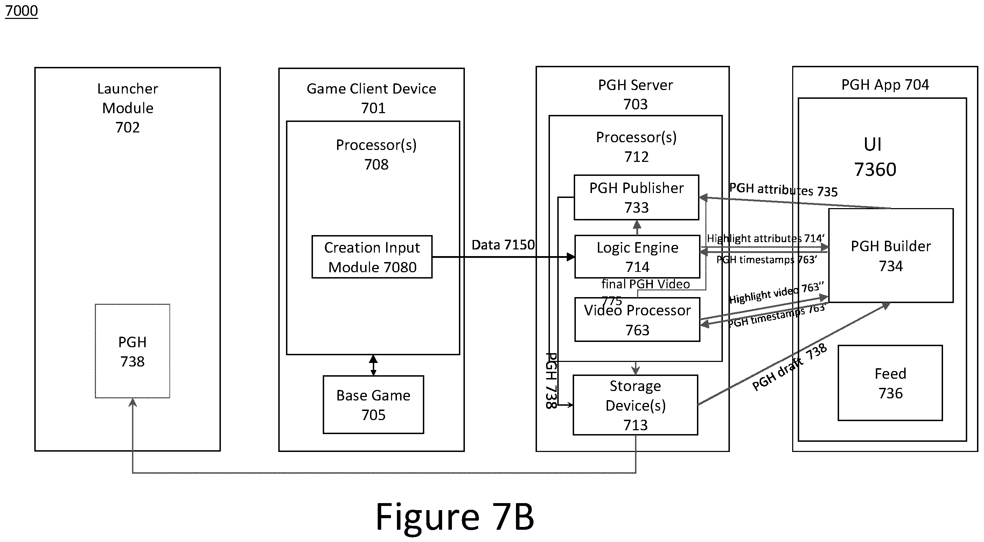

Advantageously, the system architecture as presented in **Figure 7A** and further in **Figures 7B-7E** as well as other Figures in the present invention include using streaming modules and methods for transmitting recorded data of the gameplay (e.g., captured video 717) and identified events (e.g., identified events **715**) and one or more game engines and processors located for example in a cloud server (e.g. PGH server **703**). As a result, the creation of PGH is more configurable and may be used for creating a PGH for any type of game. Because the architectures, in accordance with embodiment, include streaming and transmission modules, it obviates, in some embodiments, the necessity of retaining, analyzing, and storing data within the client SDK such as PGH client SDK **798** as shown in **Figure 7C****.**

The block diagram illustrated in **Figure 7B** incorporates all the essential components and functionalities depicted in the previous **Figure 7A****.** However, **Figure 7B** presents an alternative configuration architecture where the processor(s) **708** comprises a Creation Input Module **7080**, located for example in the Game Client Device **701.**

Specifically, in this configuration, the Event Module **709** and Video Module **706** are omitted from the system architecture. Instead, the embodiment utilizes the Creation Input Module **7080**, to generate data for creating the PGH **738.**

In accordance with embodiments, the Creation Input Module **7080** is configured and enabled to generate and transmit and/or extract Data **7150** to the PGH Server **703**. The Creation Input Module **7080** accepts various types of input data from the user or creator, such as text, audio recordings, video clips, and gameplay data. It processes this data and transmits it to the PGH Server **703** for further analysis and possible PGH creation. The Creation Input Module **7080** can handle user-provided inputs as well as autonomously extract data from the ongoing gameplay, including Events.

In one embodiment, the Data **7150** generated by the Creation Input Module **7080** is received by the Logic Engine **714** within the PGH Server **703**. In some cases, the Logic Engine **714** may convert the Data **7150** to Identified Events **715** and/or Building Blocks, as illustrated in **Figure 7H** and **Figure 7I.** This conversion process involves extracting key elements from the user-provided data and gameplay information, and transforming them into discrete, actionable events that can be used as the basis for the PGH Data object **1200** and enables the creation of PGH, and restoration of the PGH. By converting the diverse input data into a standardized format of Identified Events and/or Building Blocks, the Logic Engine **714** enables the PGH creation system to work with a consistent and manageable data format, for example PGH data object **1200.**

In accordance with embodiments, there are provided methods, devices and systems for creating one or more additional PGH computer games from the one or more PGH computer games. Hence, endless number of PGH computer games may be created from each one or more PGH games crated from the Base Game. The PGH rules and attributes of each one or more PGH defer from one another. The additional PGH computer games may be created as illustrated in the present invention.

In accordance with embodiments, there are provided methods, devices and systems for creating two or more PGH computer games based on a single highlight of the one or more Highlights. For example, multiple start points (e.g. start timestamps) and related multiple end points may be selected in each Highlight. In some cases, based on each pair of selected start and end points a new PGH may be created.

**Figure 7C** shows a flowchart of a method **750** for generating a PGH based on one or more captured scenarios of historical gameplay (e.g., "Highlight") of a single player or a multiplayer computer game, in accordance with embodiments. System **700**, may be used to implement method **750.** However, method **750** may also be implemented by systems or processors having other configurations, in accordance with embodiments.

In accordance with embodiments, one or more PGHs may be created separately for each of the captured Highlight as illustrated in flowchart **750**, where each of the created PGHs can be created using different PGH attributes **735,** separately and independently from each other. For example, say that a Highlight is captured during a gameplay, multiple PGHs can be created out of the same Highlight, with independent PGH attributes **735** from each other such as different obj ectives, constraints, scoring parameters, starting point, end point, etc. For example, in case of a captured Highlight from an NBA game, two PGHs can be created out of the same Highlight, the first with an objective to score 5 points in the PGH, and the 2nd PGH with an objective to pass the ball between your team's players 10 times. In another example, say that a Highlight of 2 minutes is captured, a first PGH can be created with PGH attributes **735** of start time 0:05 and end time 0:35, and a second PGH can be created with PGH attributes **735** of start time 1: 10 and end time 1:58.

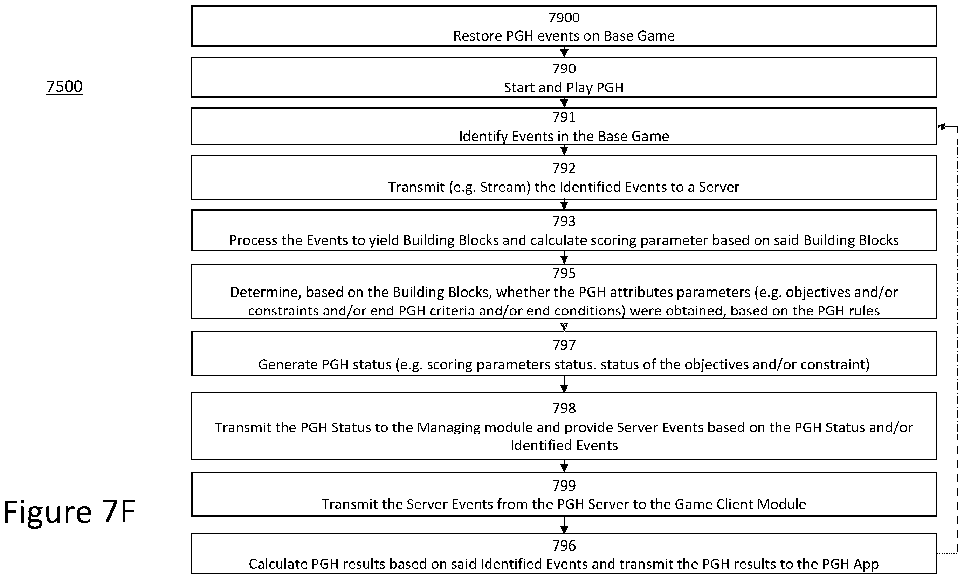

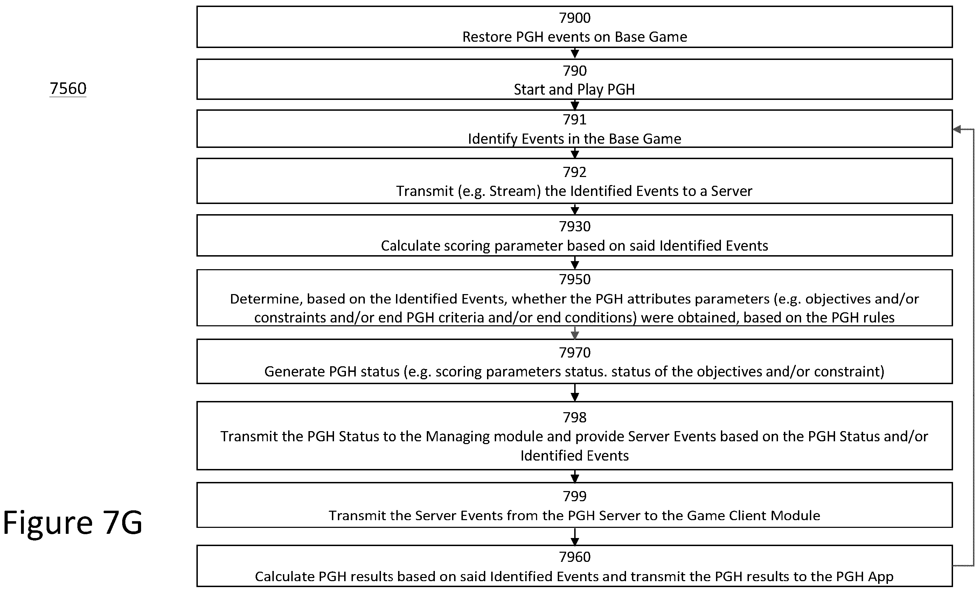

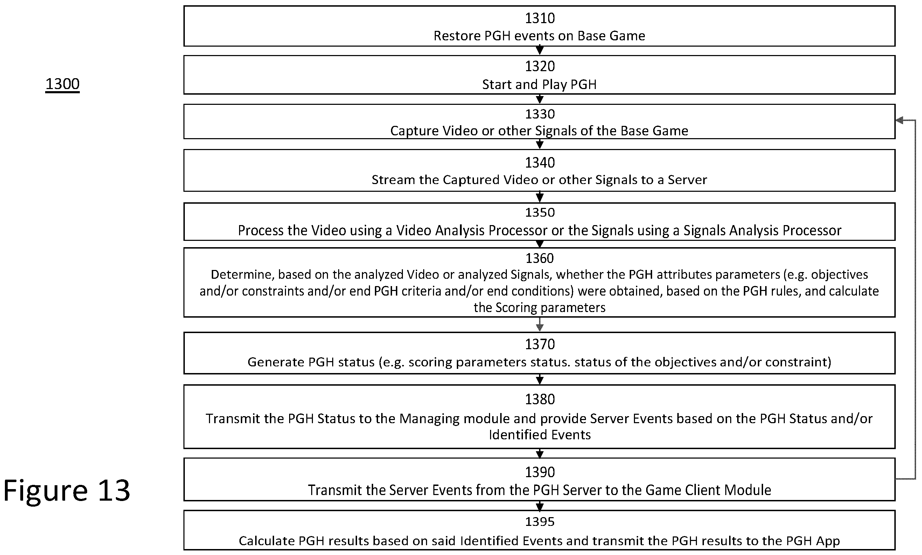

According to some embodiments one or more PGHs may be created separately for each of the captured Highlights using other methods as illustrated for example in **Figure 7D****,** **Figure 7F** and **Figure 7G** and **Figure 13****.**

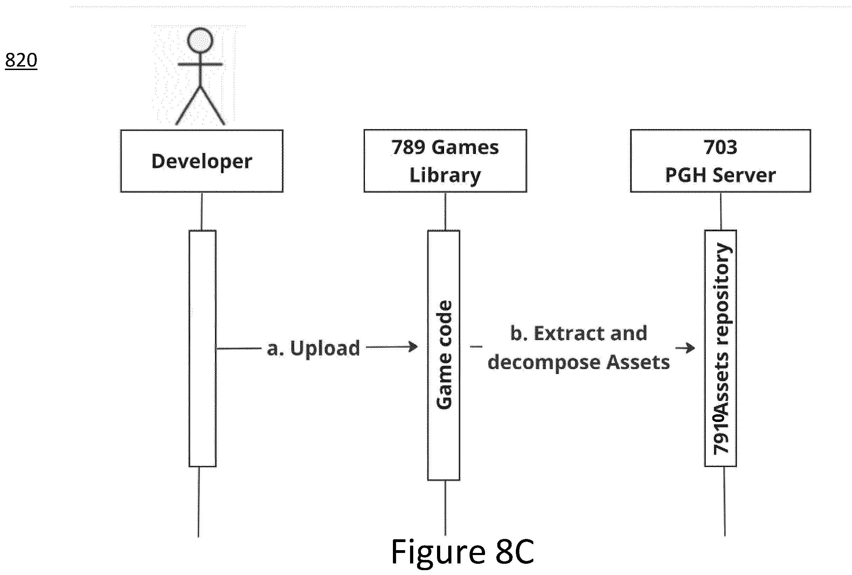

Optionally, in a cloud-based architecture, prior to step **751,** for example in case of streaming the Base Game **705**, assets from the Base Game are extracted and decomposed as explained below with reference to **Figure 8C****.** The `asset(s)' refer to the various elements that make up the game environment, such as graphics, 3D models, textures, sound effects, music, animations, and the like. These assets are essential components that game developers use to create the visual, auditory (and optionally sensory) experience within the game.

At step **751** a creator or player starts playing a Base Game **705**. In accordance with embodiments, once the creator or player begins playing the Base Game **705** an automatic command is triggered, instructing the Launcher **702** to commence the game. Simultaneously, authentication processes between the Launcher **702**, the Game Client Device **701,** and the PGH server 703 are initiated.

Optionally, in a cloud-based architecture prior to step **751,** graphic elements that are associated with the Base Game **705** are extracted and collected into a structured format. The graphic elements may be the elements that describe the scene, such as meshes, textures, maps, audio effects, video excerpts etc. and the structured format may be files, file portion, JSON file format, YML file format etc., describing either the graphic element itself or a collection of graphic elements or metadata attributes of the graphic element(s) that are to be used by the game or the PGH.

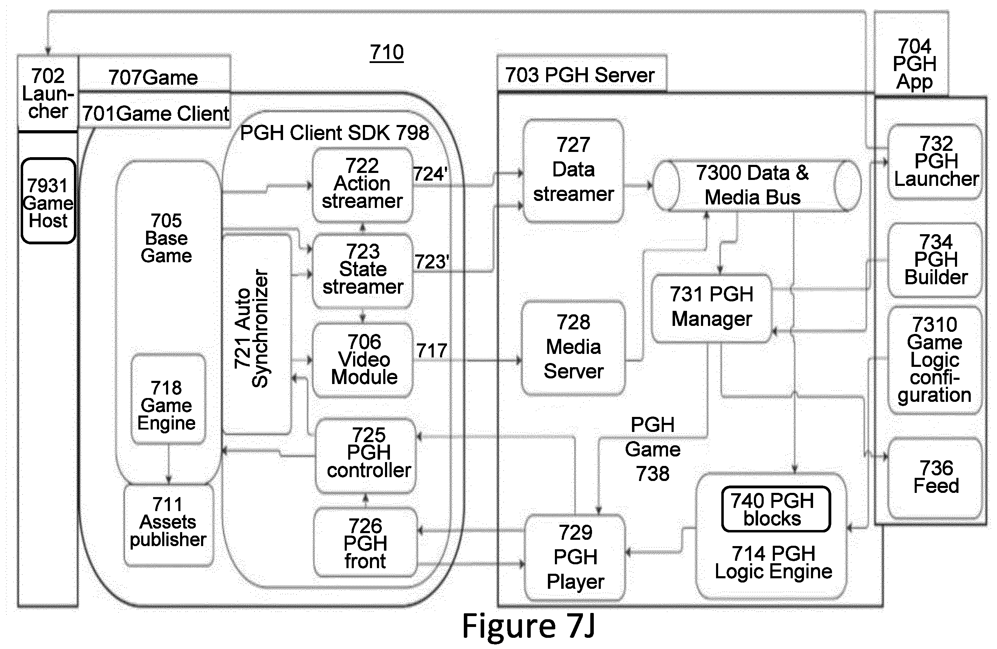

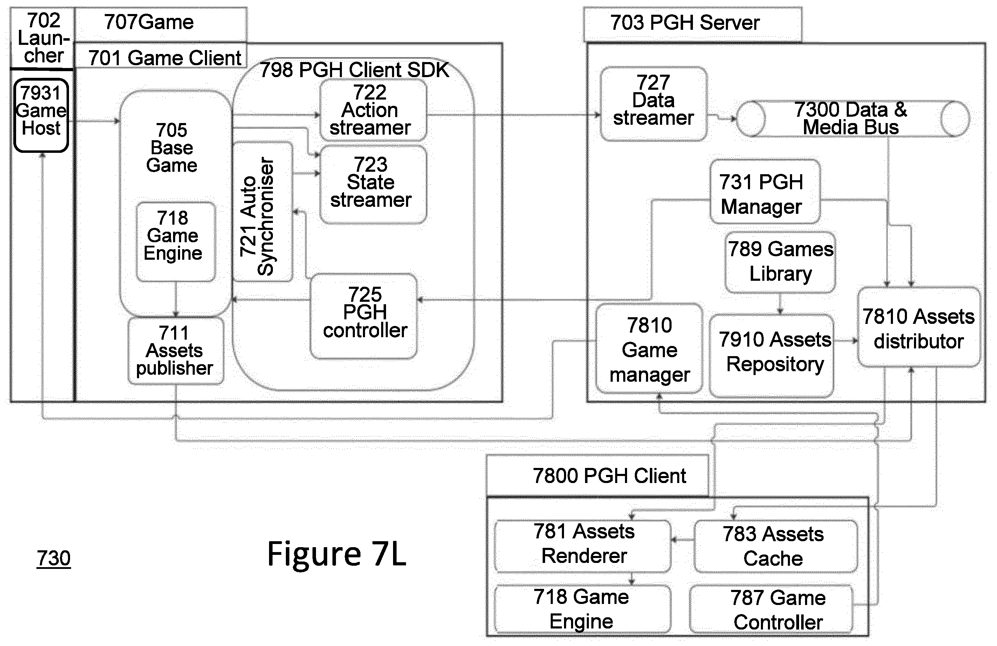

A detailed description of the extraction process of this step is illustrated with reference to **Figure 7J** and **Figure 7L****.**

At step **752** data (e.g. Data **7150**) relating to the Base Game is received, for example at a Server such as the PGH Server **703**. In some cases, the Data may be received from an external source including one or more of: the Game Client Devices such as Game Client Device **701,** Sever Devices such as PGH Server **703**. The Data may include one or more of: Events of the Base Game, text such as text including description of the base game or a textual description of a Highlight, a video gameplay of the base game, audio such as audio that includes an auditory description of the base game, images such as images that include image description of the base game or of the Highlight, and other video that describes the game, for example other video including visual description of the base game or video gameplay of a narrator.

At step **753** the data is transmitted, for example continuously streamed, to a Logic Engine such as Logic Engine **714** comprised in a processor located in the Server.

For example, the data may include Identified Events **715** which are continuously transmitted (e.g., streamed) to a server such as the PGH Server **703** in on-going loops as the player or creator plays the Base Game **705**.

In accordance with one embodiment, the data (e.g. Identified Events **715**) are continuously transmitted (e.g., streamed), for example, in real-time or close to real-time, to the Logic Engine **714** in on-going loops as the player or creator plays the Base Game **705**.

In some cases, the Identified Events **715** may be transmitted to other locations in a system such as the system **700**, for example to local and remote storage units such as Storage **713** and/or local or remote cloud servers.

In accordance with embodiments, the game's data (e.g. the Identified Events **715** which may include the entire game's data or data within a predefined time frame of the gameplay, and optionally the captured video **717**) can be continuously uploaded to the PGH's servers throughout the gameplay session. This allows the user to create a PGH based on any portion of the uploaded gameplay data without the need to manually capture specific highlights during the game.

At step **754** the Data (e.g. identified events **715,** text, audio, images, video recording of the base Game, and other video that describes the game,) are processed (e.g. converted) to yield Identified Events **715,** for example using a Data Conversion Module. In accordance with embodiments the Data is processed using the Logic Engine **714** located for example in a server such as PGH Server **703**.

Alternatively or additionally, at step **754** Events **715** in the Base Game are received and/or automatically identified by the Event Module **709**, for example during the gameplay. The identified Events **715** may include for example 'Actions' performed by one or more characters in the Base Game such as 'run'/'jump' and/or 'States' of the player such as attributes of the player's `Health', 'Location', 'Outfit', 'Weapons', 'Possessions' etc.

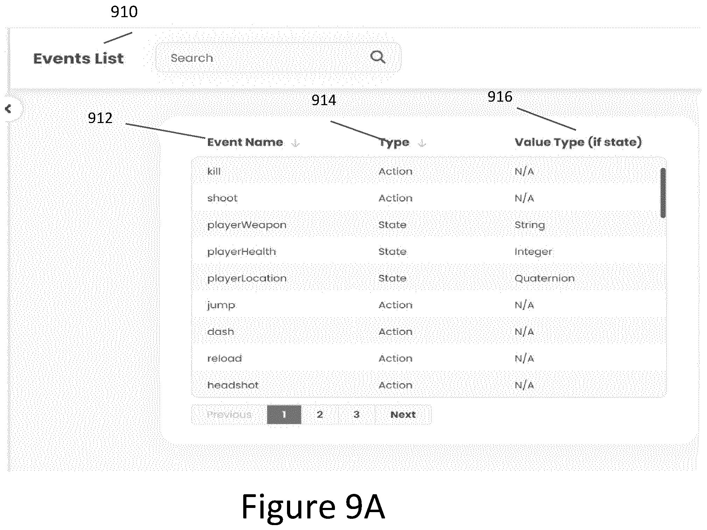

In some cases, each 'Event' is numbered with an ID number and added to an `Event list' as shown in **Figure 9A****.** The Event list **910** for each game includes the event name **912** the event type **914** and value type **916.** These details may be present in a designated list, for example in the game administration page or game configuration settings, in order to allow the building of different objectives and score parameters.

At step **755** the identified events **715** are processed to yield building blocks **716,** as explained above with reference to **Figure 7A****.** In accordance with some embodiments the identified events **715** are processed using the Logic Engine **714** located for example in a server such as PGH Server **703**.

Optionally, in some embodiments at step **757** recorded video of the gameplay (e.g., captured video **717**) is transmitted (e.g. streamed, for example in real-time, or close to real-time, or after a highlight is captured), to one or more processors **712** in the PGH Server. For example, as shown in **Figure 7A** the captured video **717** of the Base Game **705** is streamed from the video module **706** in the Game Client Device **701** to the Video Processor **763** in the PGH Server **703**.

At step **758,** one or more 'Highlights' in the Base Game **705** are captured either by the player/creator or automatically by the system (e.g., using processors **712**) and transmitted, for example from the Server **703** to the PGH App **704**. For example, as illustrated in **Figure 7A** the Highlight Video **763"** is captured by the Video Module **706** and transmitted from the Video Processor **763** to the PGH Builder **734.**

In accordance with embodiments, the one or more Highlights correspond to a selected start point and end point in the computer Base Game. In some embodiments the one or more Highlights correspond to specific time intervals during gameplay in the Base Game that the player or creator wishes to use as the basis for creating a PGH **738.**

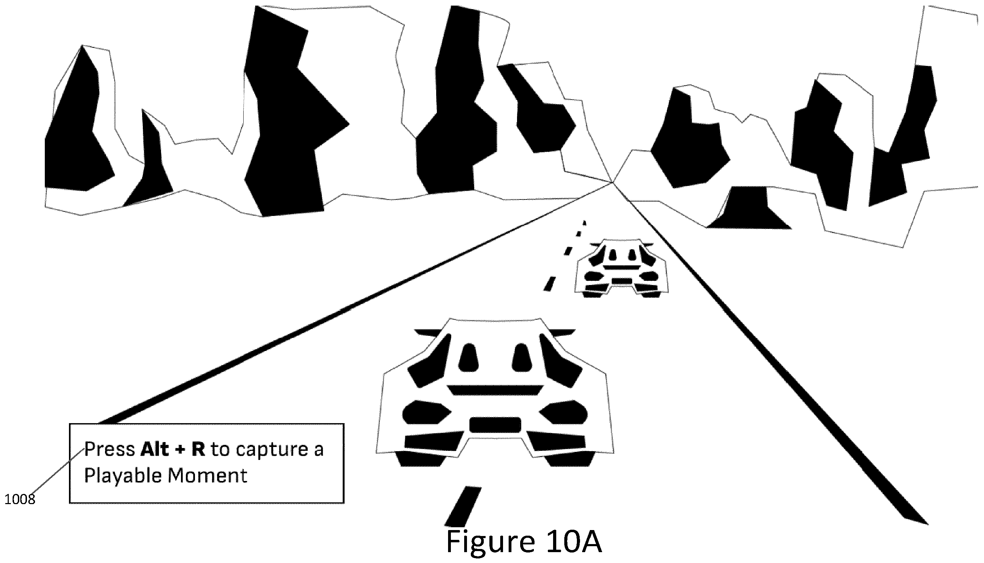

According to one embodiment, a "Highlight" may be captured by the user by clicking selected keys or mouse buttons defined, for example, as a "highlight click" during gameplay. The system may capture a predefined time interval prior to and following the click, for instance, 120 seconds before and 10 seconds after the click, thereby capturing a 130-second highlight. It is noted that each predefined time interval (prior to the 'click' and following the click) is independent and may be different from each other, and that the predefined time interval after the click is optional, e.g. only the time prior to the click is being used (e.g. the Highlight may consist of, for example, 120 seconds before the click and 0 seconds after the click). Specifically, as shown in **Figure 10A** a text prompts **1008** may offer the player to: `press Alt+R to capture a Playable Moment' related herein to a 'Highlight', which corresponds to instructing the user to press a specific key combination using his keyword in order to capture a Highlight. It's important to note that the system or user may capture multiple highlights during the Base Game video gameplay, and each highlight may have various durations and/or other properties.

According to some embodiments, each Highlight of the captured highlights are then received by the PGH server for further processing. For example, if the Base Game **705** is a racing car computer game as shown in **Figure 10A****,** a potential highlight could be a 30-second interval where the player successfully maintained a speed of 160 km/h without crashing. The player or system may then choose to create a PGH based on this specific highlight.

At step **759** the Building Blocks are processed, for example repeatedly, using for example the Logic Engine **714,** to yield Highlight Attributes **714'** comprising Highlight parameters of for example possible/potential Objectives and/or Constraints and/or End Conditions **1224** and/or End of PGH Criteria **1222** and/or Scoring parameters relating to the captured Highlight.

As explained above, the Building Blocks are used to generate all possible combinations of potential Highlight attributes such as objectives, constraints and scoring to be used by the PGH creators or players for generating the PGH. In this intermediate step the calculated potential/possible parameters such as objectives, constraints and scoring are used as the basic parameters that will be further used in the following steps once a specific game interval in the captured Highlight will be selected by the creator or system.

In accordance with embodiments, the possible objectives, constraints, end of PGH criteria **1222,** end conditions **1224** and scoring parameters are based on the identified Events **715** from the captured 'Highlights'. Specifically, the identified Events **715** are streamed to the PGH server **703** and processed by the Logic Engine **714** to create Building Blocks **716.** These Building Blocks **716** are then further analyzed by the Logic Engine 714 to generate Highlight Attributes **714',** which include, for example, suggested objectives, constraints, end of PGH criteria, end conditions and scoring parameters for the PGH.

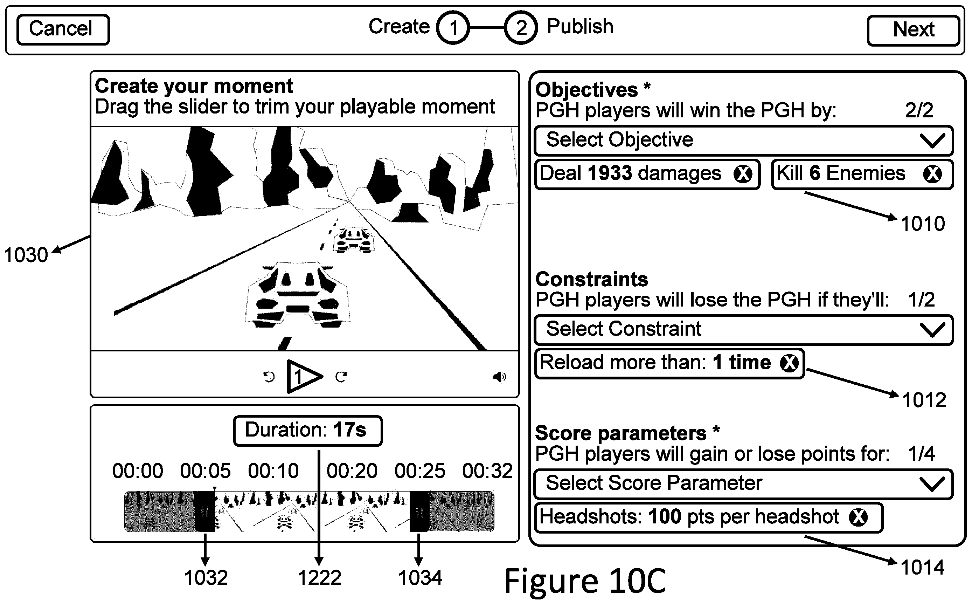

According to one embodiment, the Highlight attributes **714'** are transmitted from the PGH Server **703** to the PGH App **704** and displayed on the App User Interface (UI) **7360.** For example, as illustrated in **Figure 10C****,** in an example Base Game, during the PGH creation, possible attributes may be displayed, including the following: Objectives **1010:** 'Deal **1933** damages' and 'Kill 6 Enemies'; Constraints **1012:** 'Reload more than 1 time; Score parameters **1014:** 'Headshot: 100 pts per headshot'; possible End of PGH criteria **1222:** `Time Duration: 17s' (i.e. 17 seconds), where this End of PGH criteria is calculated, for example, by the selected start point **1032** of the PGH and end point **1034** (e.g. by subtracting the starting point **1032** from the end point **1034,** or for example in case of a turn game, subtracting the start turn number (e.g. 35) from the end turn number (e.g. 61), yielding in this example 26 turns, and could form the End of PGH Criteria.

At step **760** PGH Highlight start point and end point are selected in the captured Highlight to generate Highlight Attributes **714'** which a PGH will be formed on. The selected Highlight may be based on Time constraint or number of turns or end condition or a combination thereof. For example, the PGH Highlight corresponds to and/or include a selected start point and end point in one of the one or more Highlights. For instance, in turn-based or step-oriented computer games, such as chess, initiation (e.g. start) and termination (e.g. end) points within the game's sequences are selected.

According to other embodiments, two timestamps are selected in the Highlight, a first time stamp used as the start time point of the PGH and a second time stamp used as the end time point of the PGH. For example, the captured Highlight may be a two minutes long Highlight video segment transmitted from the Logic Engine **714** to the Builder 734 including possible Highlight attributes of Objectives (12 kills), constraints, scoring. The selected time stamps may be Start time - 0:30, End Time: 1:32, for generating a 62 seconds PGH.

At step **761,** PGH Attributes **735** are generated comprising one or more parameters such as Objectives and/or Constraints and/or Scoring and/or End PGH Criteria **1222** and/or End Conditions **1224** and/or start point and/or end point based on the Building Blocks and/or Identified Events relating to the selected PGH Highlight start point and end point and/or timestamps. Specifically at this step the Building Blocks **716** are processed, for example by the Logic Engine **714,** to yield PGH Attributes **735** comprising one or more parameters including for example objectives, constraints and scoring parameters which match the start and end points and/or time interval of the selected PGH Highlights.

In accordance with embodiments, steps **760** and **761** may be repeated in a loop to enable the system or creator to select and change the start and end points and/or time segment duration (e.g. based on the two selected time stamps) as a basis for generating a PGH, and on this basis the PGH Attributes **735** are calculated (for example, if a Highlight of 2 minutes in captured, in which 10 kills were made, while 9 kills were made in the first minute of the Highlight, and 1 more kill in the last minute, and the user selects a starting point of 0:00 (the beginning of the captured Highlight) and an end point of 1:00 minute, the Objective(s) can be updated from 10 kills for the whole selected Highlight, to 9 kills to the first chosen minute of the Highlight).

As illustrated in **Figure 10C** the creator may scroll left and right through a video display **1030** and move respective time stamps **1032** and **1034** to the left and right to yield Final PGH video **775,** while accordingly, for example simultaneously the PGH attributes **735** are updated according to the selected Final PGH video **775.** Similarly, in a turn-based game (e.g. chess), the starting point can be, for example, a specific turn with all of its associated Events, and the end point could be a maximum number of allowed turns (e.g. 10 turns).

An example of a PGH including new created objective is illustrated in **Figure 9B** and includes the following objective:
"player will need to kill enemies while not receiving any damage'; or
`car will drive more than 150km/h while not crashing'

It should be stressed that the Highlight Attributes **714'** or PGH Attributes **735** comprise new Objectives, Constraints, Scoring parameters, End Conditions that were not included in the Base Game and are now created for the first time based on the Identified Events **715** in the base game and according to the captured 'Highlight' (e.g. Highlight Video **763**").

Optionally, at step **763,** once the PGH start point and end point (e.g. Timestamps **763'** and/or start and end points) of the PGH Highlight are selected, the Highlight video **763"** is edited based on the selected PGH Timestamps **763'** and/or start and end points to generate a Final PGH Video. Specifically, as illustrated in **Figure 7A** the selected PGH timestamps are transmitted from the PGH Builder **734** to the Video Processor which cuts and creates the Final PGH video.

At step **764** one or more PGH computer games are created, for example using the PGH Publisher **733,** based on the PGH Attributes **735,** wherein each of the PGH computer games comprise PGH Rules. The PGH Rules are related to the PGH Attributes **735** and enable the playing of the said one or more PGH computer games.

According to another embodiment, at step **764** one or more PGH are generated for example at the Logic Engine **714** based on the PGH attributes **735,** in accordance with embodiments.

In some cases, the created PGH is configured and displayed on the user's PGH App GUI or at any local or remote display, for example on the PGH App **704** or Game Client Device **701.**

In accordance with one embodiment, the Building Blocks and/or the Identified Events are saved on a memory, for example on Storage Device(s) **713** of the PGH Server, for future use once a Highlight is selected. In case a Highlight is selected and created, the Building Blocks will be used to calculate the PGH attributes **735,** and the Identified events will be used to restore the Base Game), and thus both are saved in the Server's storage.

**Figure 7D** shows a flowchart **7501** of a method for generating a PGH based on one or more captured scenarios of historical gameplay (e.g., "Highlight") of a single player or a multiplayer computer game, in accordance with embodiments. System **7000,** may be used to implement method **7501.** However, method **7501** may also be implemented by systems or processors having other configurations, in accordance with embodiments.

The flowchart **7501** of **Figure 7D** incorporates all the essential steps and functionalities depicted in the previous **Figure 7C****.** However, **Figure 7D** presents an alternative configuration architecture and method wherein the Logic Engine **714** uses only Identified Events to generate the PGH and there is no need to convert the Identified Events to Building blocks. Hence, in this configuration, the Building Blocks **716** are omitted from the system architecture as presented in **Figure 7I** and accordingly step **755** of **Figure 7C** comprising processing the Identified Events to yield Building Blocks is NOT performed.

Instead, the embodiment utilizes only the Identified Events **715,** by converting the Data to Identified Event **716** through an intermediary processing step.

Specifically, with reference to **Figure 7D****,** the following alternative steps of the present invention are depicted which differ from the flowchart shown in **Figure 7C****.**

Following step **758,** at step **7590** the Identified Events are processed to yield Highlight Attributes comprising possible Objectives, Constraints and Scoring parameters relating respectively to each one of the one or more Highlights.

Accordingly, following step **760**, at step **7610** PGH Attributes are generated comprising one or more parameters comprising Objectives and/or Constraints and/or Scoring based on the Identified Events relating to the selected PGH Highlight start and end points.

Reference is now directed to **Figure 7E****,** which is a high-level block diagram of an exemplary system **785** for enabling the loading and running (e.g. playing) of a PGH created based on one or more scenarios of historical gameplay in a Base game. The PGH may be PGH **738** created as illustrated in **Figures 7A -7D** from Base Game **705**.

**Figure 7E** encompasses all the constituent elements delineated in **Figure 7A** while additionally illustrating supplementary elements necessary for managing data transmission between system modules during the course of gameplay of a PGH. It is emphasized that separate figures for the creation and playing of PGH were provided solely for the sake of simplicity and to offer a clear and concise representation of the block modules. Therefore, it should be recognized that the modules and elements depicted in **Figure 7A** and **Figure 7E** may potentially be consolidated and incorporated into a unified system.

In accordance with embodiments, the Game Client Device **701** comprises the one or more Processors **708** which comprises the Event Module **709**. During the PGH playing, the Event Module is configured and enabled to identify events **715** in the in the PGH (e.g. PGH **738**) and continually, for example in real-time or close to real time, transmit (e.g. stream) the Identified Events **715** to the PGH server **703**. The events **715** may include for example 'Actions' and/or 'States' of characters in the PGH (e.g. as illustrated above in **Figure 7A** and **Figure 7B** with respect to the creation of PGH **738**).

In accordance with embodiments, the PGH Server **703** comprises the one or more Processors **712** which comprises the Logic Engine **714,** and Managing Module **778.**

During a PGH playing, the Logic Engine **714** is configured in accordance with embodiments, to receive the Identified Events **715** from the Events Module **715** and process the Events **715** to yield Building Blocks **716.** Based on the Building Blocks **716** the PGH Rules **719** are determined.

Specifically, the Logic Engine **714** is configured and enabled to process PGH Rules **719** relating to one or more Objectives and/or Constraints and/or End PGH criteria and/or End Conditions which the user created or received from the system as illustrated with reference to **Figure 7A****,** **Figure 7B** and **Figure 7H****.** The PGH Rules **719** are logical formulas (such as numerical rules) derived from the Objectives and/or Constraints and/or End PGH criteria and/or End Conditions.

The Logic Engine **714,** is responsible for receiving Identified Events or receiving the Data **7150** to process it to Identified Events, potentially processing the Identified Events to Building Blocks, and to determine based on the Identified Events and/or Building Blocks whether the objectives and/or constraints and/or End PGH criteria and/or End Conditions were obtained, and further calculate the score of a PGH run, both during the run of the PGH and after the PGH run ends.

For example, during a PGH run, the Logic Engine **714** receives Identified Events and processes them to yield Building Blocks **716** of 'three kills' while the Objective of the PGH **738** is 'Five kills'. Accordingly, the Logic Engine **714** identifies that the PGH still didn't end and two more kills are needed to reach the Objective.

Additionally, in accordance with embodiments, during PGH playing the Logic Engine **714** is configured to generate PGH status **777** including for example status of the objectives and/or constraints (e.g. in an objective of 3 kills, 1 of 3 kills were achieved) and/or End PGH Criteria and/or End Conditions, for example in real time or close to real time, during the PGH playing.

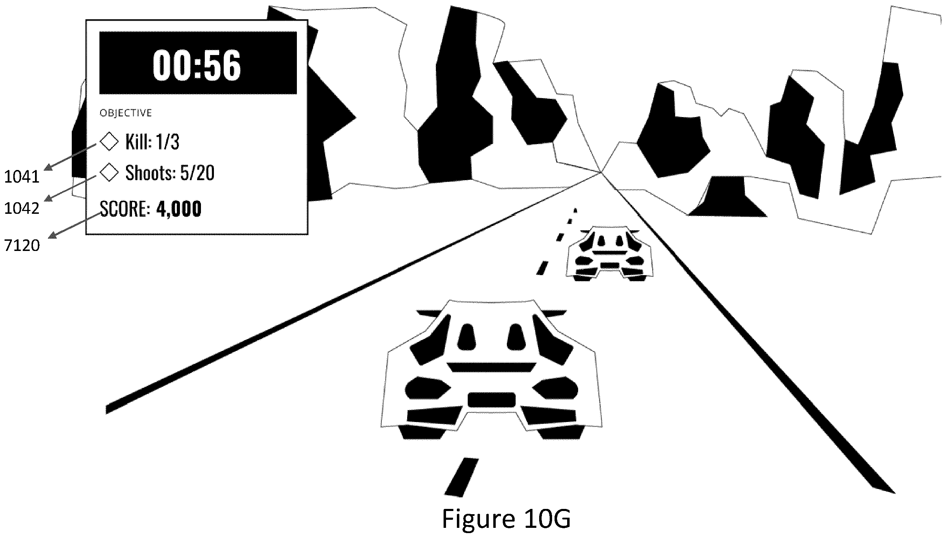

In operation, during the PGH playing, the Logic Engine **714** transmits continually the PGH status **777** to the Managing Module **778** in the PGH server **703**. The PGH status includes one or more of: Objectives status **12260,** Constraints status **12280,** Score status **7120** (summing the scoring parameters **1220** based on their appearance in the PGH up to the time of the calculation), End Condition status **12240,** End PGH Criteria status **12220.** For example, as illustrated in **Figure 10G** the PGH status may include a status of the Objectives **1041,** Constraints **1042** and Score status **7120.**

The Managing Module **778** is configured and enabled to manage and control Server Events **779** relating to the PGH playing.

In some embodiments, the Managing Module **778** includes a Media Manager **771** and Events Manager **749** for generating and transmitting the Server Events **779.**

The Media Manager **771** is configured and enabled to generate Server Events **779.** Server events **779** include PGH status and additional data on top of the PGH status. For example, the additional data includes multimedia elements such as text, audio, graphic elements, images, or videos, or combination of text, audio, graphic elements, images or video to be included in the PGH such as 3D graphic elements based on the identified events **715** and/or PGH status **777.** For instance, multimedia elements may include presenting to the PGH player in the PGH game a 3D advertisement featuring an advertising page on a building in the PGH game and or texts including recommendations and tips to the PGH player, and/or live audio streaming etc. while the user plays the PGH game.

Events Manager **749** is configured and enabled to transmit, for example in real time or close to real time, Server Events **779,** including for example the PGH Status **777** such as the Objective status, Constraint status, Scoring Parameters, End PGH Criteria status and the like, for example as shown in **Figure 10G****.**

In accordance with embodiments, PGH results **7502** are calculated based on the Identified Events and/or Building Blocks and in some embodiments may be stored in the Storage Device(s) **713** and later transmitted to the PGH App. The PGH results **7502** include the final PGH results (e.g. final PGH status **777** calculated at the end of the PGH).

**Figure 7F** shows a flowchart of a method **7500** for loading and running a PGH computer game such as the PGH **738** created in **Figure 7A****,** in accordance with embodiments. System **700**, or system **710,** or system **720** or system **730**, may be used to implement method **7500.** However, method **7500** may also be implemented by systems or processors having other configurations, in accordance with embodiments.

At step **7900** the Events from the Base Game are restored and loaded using the Data Object **1200.** The restore process includes, in accordance with embodiments, one or more of the following steps: returning the PGH to a previous state or condition as included in the Base Game and relating to either the PGH timestamps **763** or to the PGH's start point and end point. The restoration comprises reloading saved game Events, restoring player progress and state, restoring other player's state, restoring the game environment's state and enabling resuming the gameplay from the PGH start point (on the Base Game), such that the Player can seamlessly start playing the PGH from its selected start point, ensuring continuity and preserving their gaming experience.

At step **790** the method **7500** starts playing the PGH by initializing the game engine and loading necessary resources.

At step **791** Events **715** in the Base Game are automatically identified, for example continually, by the Event Module **709**, for example during the gameplay. The identified Events **715** may include for example 'Actions' performed by one or more characters in the PGH such as `run'/`jump' and/or 'States' of the player such as attributes of the player's `Health', 'Location', 'Outfit', 'Weapons', 'Possessions' etc.

It is stressed that according to one embodiment the step of restoring the Events (step **7900**) in the Base game in order to initiate the PGH in the same "state" as it was, is a one time process, for the restoration process only. Step **791** is an ongoing process in which the Events are identified throughout the game, and continuously transmitted (e.g., streamed) for processing.

At step **792** the Identified Events **715** are continuously transmitted (e.g., streamed) to a server such as the PGH Server **703** in on-going loops as the player or creator plays the PGH **738.**

In accordance with one embodiment, the Identified Events **715** are continuously transmitted (e.g., streamed), for example, in real-time or close to real-time, to the Logic Engine **714** in on-going loops as the player or creator plays the Base Game **705**.

In some cases, the Identified Events **715** may be transmitted to other locations in a system such as the system **785,** for example to local and remote storage units such as Storage **713** and/or local or remote cloud servers.

At step **793** the identified events **715** are processed to yield building blocks **716** and calculate scoring parameter based on the Building Blocks. In accordance with embodiments the identified events **715** are processed using the Logic Engine **714** located for example in a server such as PGH Server **703**.

At step **795** the Building Blocks are processed to determine whether the PGH attributes parameters (e.g. objectives and/or constraints and/or end condition **1224** and/or end of PGH criteria **1222**) were obtained, based on the PGH rules.

At step **797** PGH status **777** is generated. In accordance with embodiments the PGH status **777** comprises status of the objectives and/or constraint and/or end of PGH criteria (e.g. in an objective of 3 kills, 1 of 3 kills were achieved, out of 30 seconds of the PGH duration, 12 seconds passed).

At step **798** the PGH Status **777** is transmitted to the Managing module to provide Server Events **779** based on the PGH Status and/or Identified Events.

At step **799** the Server Events are transmitted from the PGH Server to the Game Client Device.

At step **796** PGH results **7502** are calculated based on the Identified Events and/or Building Blocks and transmitted to the PGH App.

**Figure 7G** shows a flowchart of a method **7560** for loading and running a PGH computer game such as the PGH **738** created in **Figure 7B****,** in accordance with embodiments. System **700**, or system **710,** or system **720** or system **730**, or system **785** may be used to implement method **7500.** However, method **7560** may also be implemented by systems or processors having other configurations, in accordance with embodiments.

The method **7560** of **Figure 7G** incorporates all the essential steps and functionalities depicted in the previous **Figure 7F****.** However, **Figure 7G** presents an alternative configuration architecture and method wherein the Logic Engine **714** uses only Identified Events to load and run (e.g. play) the PGH and there is no need to convert the Identified Events to Building blocks. Hence, in this configuration, the Building Blocks **716** are omitted from the system architecture and method as presented in **Figure 7I** and accordingly step **793** of **Figure 7F** comprising processing the Identified Events to yield Building Blocks is NOT performed.

Instead, the embodiment utilizes only the Identified Events **715,** and calculates scoring parameters based on the Identified Events **715.**

Specifically, with reference to **Figure 7G****,** the following alternative steps of the present invention are depicted which differ from the flowchart shown in **Figure 7F****.**

Following step **792,** at step **7930** the Scoring Parameters are calculated based on the Identified Events. At step **7950** based on the Identified Events, it is determined whether the PGH attributes parameters (e.g. objectives and/or constraints and/or end PGH criteria and/or end conditions) were obtained, based on the PGH rules. At step **7970**, PGH status (e.g. scoring parameters status. status of the objectives and/or constraint) is generated.

The PGH results **7502** are calculated based on said Identified Events and the PGH results are transmitted to the PGH App.

**Figure 7J** shows a detailed block diagram of system **710,** which is configured and enabled to create a PGH **738** based on one or more scenarios of a historical gameplay of a single player configuration, in accordance with embodiments. System **710** in **Figure 7J** provides a detailed description of system **700** shown in Figure **7A** and system **7000** in **Figure 7B****.**

While certain elements illustrated in **Figures 7A** and **7B** may not be explicitly shown in **Figure 7J****,** it should be understood that the configuration of **Figure** 7J may include one or more of the elements from the previous figures unless explicitly stated otherwise. Conversely, **Figure 7J** may include additional or alternative elements not depicted in **Figures 7A** **7B****,** **7E****,** **7H** and **7I****.** The configuration illustrated in **Figure 7J** is intended to be illustrative and not limiting, and should not be construed as excluding any potential elements or arrangements within the scope of the invention.

In accordance with embodiments, the Game module **707** comprises a Game Client Device **701.** The Game Client Device **701** is used to enable the user to play an original game (e.g. base game) and process the original game for example in real-time (or close to real-time) using one or more processors, such as processors **712** to identify one or more Events **715** in the base game **705**.

According to one embodiment, the Game Client Device **701** comprises an Assets Publisher **711,** Base Game **705** and PGH Client Software Development Kit (SDK) **798.**

In accordance with embodiment, the Base Game **705** is a proprietary software game. The game, referred to as the Original or Base game, constitutes an actual game, exemplified by genres such as shooter games, racing games, turn-based games like chess, NBA games, and the like. Typically, the Base Game **705** is developed by a gaming studio, as recognized in the field.

In accordance with embodiments, the Base game **705** is in electronic communication with the Assets Publisher **711** and the PGH client SDK **798.**

The Assets Publisher **711** is configured and enabled to obtain the Base game **705** and collect elements in the game such as graphic elements and source code files of the game that are associated with the game and convert the elements into a structured format (e.g. JSON file format/YML file format). The Assets Publisher **711** further publishes the assets into the Assets Distributor **7860** as shown in **Figure 7E****.**

In accordance with embodiments, the PGH client SDK **798** comprises an Auto Synchronizer Module **721** which is in communication with an Action Streamer **722,** Events State Streamer **723,** Video Module **706,** PGH Controller **725** and PGH front **726.**

The Auto Synchronizer Module **721** is configured and enabled to be in communication, for example in case of a multiplayer game, with the one or more game engines (e.g. Unity, Unreal Engine) to extract and transmit data (e.g. transformation data, vertex positions data, material data etc.) from the game engine **718** to the Action Streamer **722** and State streamer **723.** The synchronization includes elements such as player position, Player health, enemy position.

The Action Streamer **722** is configured and enabled to identify action events **724'** in the Base Game **705** and transmit the action events **724'** to the PGH Server **703**.

In accordance with embodiments, the State Streamer Module **723** is configured and enabled to identify state events **723'** in the base game and transmit the identified game entities' states to the PGH server **703** (specifically, to the Data streamer **727**).

According to some embodiments the State Streamer Module **723** transmits the state events following an optional discretization process, for example for a given player's position instead of sending all the continuous locations of the player, the State Streamer Module **723** transmits a few discretized samples.

In accordance with embodiments, the Video Module **706** is configured and enabled to record the Base Game **705** and/or the game's frames and transmit them to the PGH server **703**. For example, the module can record the game's frames to a specific file format (e.g. png file format) at a specific rate (e.g. 30 frames per second), save the frames into a video file (and optionally compress it, e.g. to an mp4 file format), and then transmit the created video file to the PGH server.

The PGH Controller Module **725** is configured and enabled to receive input actions (i.e. input from the player's devices, such as keyboard keystrokes, mouse movements, joystick inputs etc.) from the PGH Player Module **729** and control the basic game actions while playing the PGH, by passing them to be executed in the Base Game **705**.

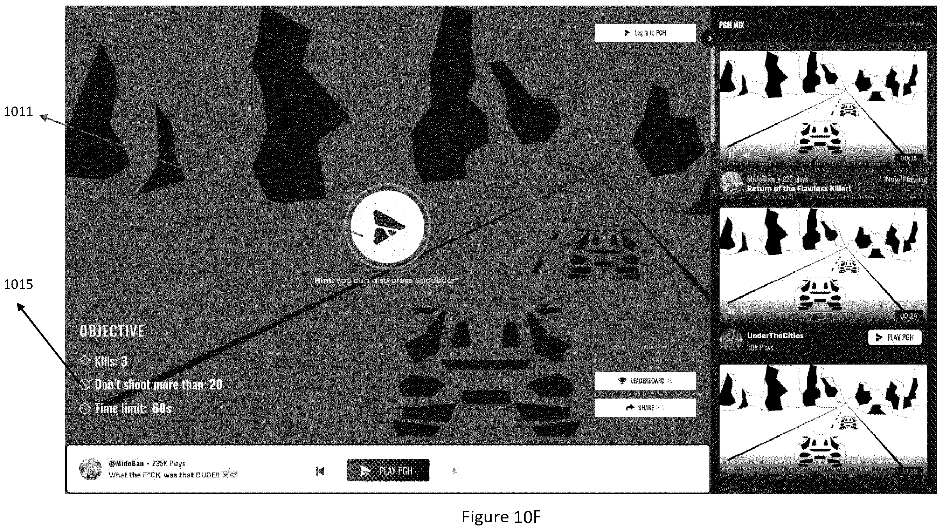

The PGH Front **726** is responsible for receiving display information from the PGH Server **703** and presenting it to the PGH player on top of the Base Game and the PGH. The received information can be categorized into three main types: 1. Pre-game data: Before starting a PGH, the module displays relevant data such as the objectives and/or constraints and/or End PGH Criteria of the PGH. For example, Objective status (e.g., the number of kills) and end PGH Criteria Status (e.g., time limit), as shown in information **1015** in **Figures 10F****.** 2. In-game data: During the gameplay of a PGH, the module provides real-time updates, including PGH Status **777,** which keeps the player informed about their progress. For example, the Objective status **1041,** Constraint Status **1042,** and Score Status **7120** are illustrated in **Figure 10G****.** 3. Post-game data: After completing a PGH, the module presents information indicating whether the goal was successfully achieved (e.g., PGH Results **7502).** The PGH Front **726** is not limited to these specific types of information; it can display various other information to the Player/Creator, such as data that is received from the Server Events **779** (e.g. Media that was generated using **771**).

PGH server **703** can be, for example, a suitable type of physical or cloud-based server that includes one or more processors **712** and storage devices **713.**

Processors **708** and/or **712** can be a suitable hardware-based electronic device with data processing capabilities, such as, for example, a general purpose processor, digital signal processor (DSP), a specialized Application Specific Integrated Circuit (ASIC), one or more cores in a multicore processor, etc. The Processors can also consist, for example, of multiple processors, multiple ASICs, virtual processors, combinations thereof etc.

Storage devices **713** can be, for example, a suitable kind of volatile and/or non-volatile storage, and can include, for example, a single physical memory component or a plurality of physical memory components. Storage devices **713** can also include virtual memory. Storage devices **713** can be configured to, for example, store various data used in computation.

In accordance with one embodiment, the PGH Server **703** is a Backend Application that may be hosted for example on a data center such as a private or public data center. The PGH Server **703** receives data streams of Actions **724'** and States **723'** from the base game **705** via the PGH Client SDK **798** including for example identified Events (e.g. state and/or Action events) from the Base game along with the video frames from the Video Module **706** of the Base Game **705** and analyzes the output data from Action Streamer **722** and State Streamer **723** using one or more processors for implementing the services that are needed for creating, sharing and playing PGH Games (e.g. single player or multiplayers).

In accordance with embodiments, the PGH Server **703** comprises a Data Streamer **727,** a Media Server Module **728,** a PGH Player Module **729,** a Data & Media Bus **7300**, a PGH Manager **731** and a PGH Logic Engine Module **714.**

The Data Streamer module **727** receives Events **724'** from the Action Streamer **722** and also **723'** from the State Streamer **723** and processes them and stores them for creating and playing a PGH Game. The processing of the received data streams includes calculating the score and the objective while playing a PGH Game.

The Media Server **728** receives from the Video Module **706** a Captured Video **717** of the Base Game **705**. A 'Gameplay' is defined for example as the specific way in which the game player interacts with the game and the game's mechanics and rules.

The Media Server **728** is further configured and enabled to process the `game play', publish it and store it to create a PGH game. The processing includes cutting the relevant scene, and water marks and transforms the file to different media formats according to the needs.

The PGH Player **729** may also be used to orchestrate the flow of the PGH Games (e.g. single player or multiplayer). Specifically, the PGH Player **729** receives the created PGH Games **738** from the PGH Manager **731.** In operation, when a player asks to play a PGH, the PGH Player **729** sends the created PGH Games **738** to be played by the PGH Controller **725** using the PGH Front **726,** and respectively the PGH Logic Engine **714** controls the execution of the PGH Games **738.** The PGH Logic Engine **714** gets the Identified Events **715** from the Game Client Device **701,** and either uses the Identified Events **715** or builds Building Blocks **716** out of the Identified Events. Then it uses either the Identified Events or the Building Blocks to calculate the Score Status **7120** based on the Scoring Parameters, and sends it to the PGH Rules **719** to calculate the Objective status **12260,** Constraint status **12280,** and the End PGH Criteria status **12220** (and which of the criteria have been reached). The PGH Status **777** comprises the PGH Score/score Status **7120,** Objective status **12260,** Constraint status **12280,** End PGH Criteria status **12220,** and End Condition Status **12240.** The Logic Engine sends to the Managing Module **778,** both the Building Blocks **716** and/or identified events and the PGH Status **777.**

The Data & Media Bus **7300** is a technical component that enables the sharing of Data and Media in real time between different components of the PGH servers, for example, the sharing in real-time of events (e.g. Actions **724'** and States **723**') and Captured Video **717** of the Base game **705**.

The PGH Manager **731** is a repository, such as a centralized storage, to manage and store PGH Games and further to enable the extraction and search of PGH games.

The PGH Logic Engine **714** is the heart and brain of system **710.** Specifically, the PGH Logic Engine **714** is a Rule engine that is configured and enabled to create and run in real-time the PGH Games based on the defined PGH objective or objectives. The generated PGH objectives may be created, in accordance with embodiments, while playing for example a Base Game. The PGH Logic Engine **714** is further configured to verify if one or more goals (e.g. objectives) which were created from PGH Building Blocks **716** were achieved and calculate the score of a PGH game run.

In accordance with embodiment, PGH Building Blocks **716** are logical rules. The Logical Rules are created based on translating game events such as States **723'** and Actions **724'** events in the Base Game **705** to Logical phrases that can be understood by a PGH player or a PGH creator. For example, in a fighting computer game, an "Air kick" building block could consist of both a "jump" action followed by a "kick" action within a specific time frame (e.g., <=0.2 seconds from the jump action), and only if the kick action happens within the determined time frame is the aforementioned building block considered valid. The logical phrases may be boolean logical phrases as illustrated for example in **Figure 9B****.**

In accordance with embodiments, PGH App **704** is an application, such as a software application that enables the creation of a PGH and manages the PGH platform using systems such as system **700** or systems **720** and **730** or system **100,** on which PGH can be discovered, executed, shared, promoted etc. The PGH App **704** is configured to be in communication with the PGH Server **703** the Launcher **702** and the Game **707**. In certain instances, the user can download the PGH App **704** onto their device, such as a mobile device, to create and manage PGH Games.

In some cases, the PGH App **704** comprises the following modules: PGH launcher **732,** PGH Builder **734** Game Logic Configuration **7130** and Feed Module **736.**

The PGH Launcher Module **732** is a software application designed to facilitate user interaction with and engagement in or with PGH games by providing functionalities for discovery and gameplay. The PGH Launcher Module **732** receives as an input the user's request to launch a specific PGH game and transmits the necessary data and commands to initialize and start the PGH game as an output.

The PGH Builder Module **734** is an Editor Module that enables the creation of PGH games.

The Game Logic Configuration Module **7130** enables a creator to configure the PGH attributes **735.**

The Feed Module **736** is a module within the PGH App **704**. The Feed Module **736** receives data about available PGH games from the PGH Manager **731** and presents this data in a browsable feed format within the app's User Interface (UI), along with a link to play the PGH within the Game Client Module **701.** This data could include information like the title, description, thumbnail image, creator name, creation date, popularity metrics (e.g., number of plays, likes, shares), and tags associated with each PGH game. In this way, the Player could, for example, view information and attributes regarding the different PGH games that are available to play, possibly from different Base Games (for example, the Feed could contain PGHs that were created from 2 or more different Base Games). In addition, the Feed Module **736** enables two or more users to search a PGH together and then provide a link to play it together, for example using the PGH Manager **731.**

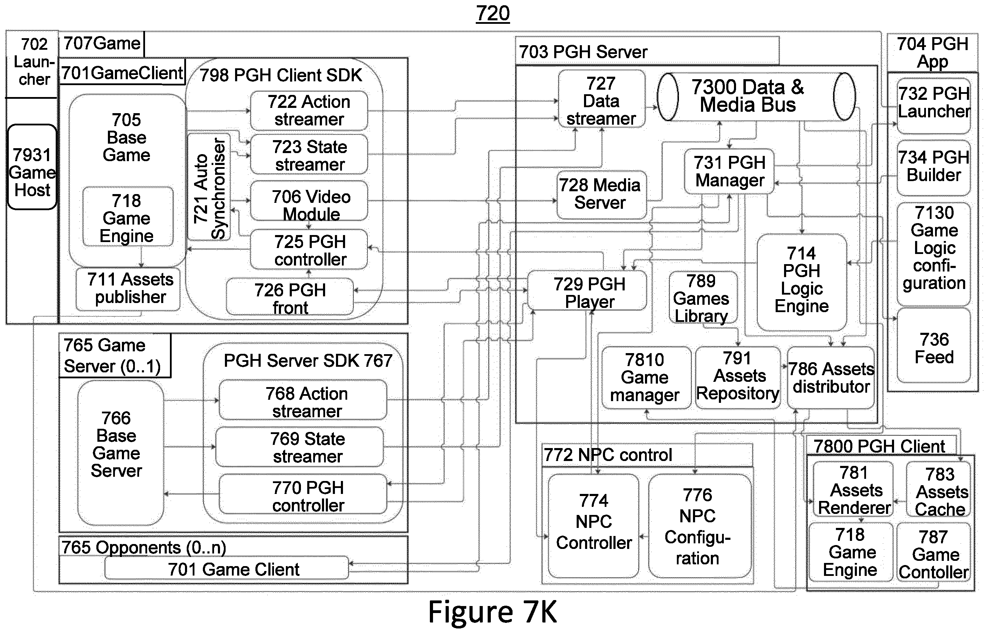

**Figure 7K** shows a detailed block diagram of system **720** configured and enabled to create a PGH based on one or more scenarios of historical gameplay of a multiplayer player configuration, in accordance with embodiments. **Figure 7K** includes elements of system **700** of **Figure 7A** and further additional elements for a multiplayer configuration system.

**Figure 7K** may include additional or alternative elements not depicted in other Figures. The configuration illustrated in **Figure 7K** is intended to be illustrative and not limiting, and should not be construed as excluding any potential elements or arrangements within the scope of the invention.

Specifically, in accordance with embodiments, system **720** comprises the following additional modules:

### Game server 765:

In some computer games (usually multiplayer games) a game server such as Game Server **765** is implemented for example using a client server approach. In that approach most of the game events and the game states are managed on the server side. According to some embodiments, Game Server **765** is responsible for hosting and managing the multiplayer sessions of the Base Game **705**. In a client-server model, the Game Server **765** acts as the central authority, processing and validating the game state and player actions to ensure synchronization and fairness among all connected players. For example, in a multiplayer first-person shooter game, the Game Server **765** would keep track of player positions, manage the game flow, and validate hit detection to ensure that all players experience the same gameplay environment. The Game Server **765** also facilitates communication between players, such as relaying chat messages or coordinating matchmaking. By handling these crucial tasks, the Game Server **765** enables the creation and playing of PGHs in multiplayer games.

The Game Server **765** comprises, in accordance with embodiments, the following modules: Base Game Server **766,** PGH Server SDK **767.**

Base Game Server **766** is a game server that may be built by a game studio, and is used for hosting and running the multiplayer version of the Base Game **705**. Base Game Server **766** contains the game-specific logic, rules, and mechanics that define the multiplayer experience. It is responsible for managing the game sessions, processing player inputs, and updating the game state in real-time. For example, in a multiplayer racing game, the Base Game Server **766** would handle tasks such as track selection, player positioning, collision detection, and race event triggers. It ensures that all players connected to the same multiplayer session experience the game consistently and simultaneously. The Base Game Server **766** works in conjunction with other components of the PGH Server SDK **767,** such as the Action Streamer **768** and State Streamer **769,** to enable the creation and playing of PGHs within the multiplayer environment of the Base Game **705**.

The PGH Server SDK **767** is used for integrating PGH functionality into the Game Server **765** of multiplayer games and may include the following modules: Actions Streamer **768,** State Streamer **769,** and PGH Controller **770.**

Actions Streamer **768:** This module is responsible for extracting and streaming player actions from the Base Game **705** to the PGH Server **703**. It functions similarly to the Action Streamer **722** in the PGH Client SDK **798.**

State Streamer **769:** This module is responsible for extracting and streaming game state information from the Base Game **705** to the PGH Server 703. It functions similarly to the State Streamer Module **723** in the PGH Client SDK **798.**

PGH Controller **770**: This module receives input actions from the PGH Player Module **729** and controls the basic game actions while playing the PGH. It functions similarly to the PGH Controller **725** in the PGH Client SDK **798.** To facilitate the multiplayer environment, PGH Manager **731** is in communication with the PGH Controller **770** and with the Opponents **762.**

These modules work together to enable the creation and playback of PGHs in multiplayer games by facilitating the communication between the Game Server **765** and the PGH Server **703**.

The Opponents **762** module is responsible for managing the behavior, interactions, and decision-making processes of computer-controlled opponents within the multiplayer environment. This module ensures that the opponents provide a challenging and engaging experience for the players, while also maintaining balanced and fair gameplay. The Opponents **762** module comprises the Game Client **701,** which is a component that enables the opponents to interact with the game world and other players seamlessly. The Game Client **701** handles the rendering, input processing, and local game logic for the opponents, allowing them to perceive and react to the game state in real-time. By incorporating the Game Client **701** within the Opponents **762** module, the system ensures that the opponents' actions and behaviors are smoothly integrated into the overall multiplayer experience.

To facilitate efficient communication and coordination, the Opponents **762** module is in direct communication with the PGH Manager **731.** The PGH Manager **731** sends inputs to the Opponents **762** module, providing it with the necessary information and parameters to control the opponents' behavior and decision-making processes. This input may include data such as player positions, game state updates, and specific instructions for the opponents' actions. In return, the Opponents **762** module sends outputs back to the PGH Manager **731,** informing it about the opponents' current status, actions taken, and any relevant updates. This bidirectional communication channel allows for seamless integration of the opponents' behavior into the overall game flow and enables the creation of compelling and challenging PGHs in multiplayer scenarios.

In some embodiments, the Opponents **762** module is located outside Game Server **765.**

In accordance with embodiments, system **720** further includes a Non-Player Character (NPC) Control **772.** In this scenario, for example, the NPC may replace real-user opponents in a multiplayer game. The NPC Control **772** comprises an NPC Controller Module **774** and NPC Configuration Module **776.**

The NPC Controller Module **774** is configured and enabled, in accordance with embodiments, to interact with the PGH player in real time while playing a PGH game and control the actions of the opponents that are replaced by NPC.

The NPC Configuration **776** is used, in accordance with embodiments, to configure the logic and the behavior of NPCs in a specific game (e.g. Base Game **705**). For example, the logic and behavior could consist of rules of when and where the NPC may appear in the scene, under which scenarios, and attributes that the NPC has, such as aiming accuracy, orientation ability, hiding abilities, scripts etc. The Data & Media Bus **7300** sends information about the game's structure, for example events type and maps, such that each game's NPC behavior is preprocessed according to the received data.

In accordance with embodiments, system **720** further includes a PGH Client **7800**, used for possible streaming of the game or some of the game object/files from the PGH Server **703**.

The PGH Client **7800** comprises the following modules: Asset Renderer **781,** Assets Cache **783,** Game Controller **787,** Game Engine **718**

Asset Renderer **781** is configured and enabled to render the next frame on the player's own computer's GPU using the Game Engine **718.**

Assets Cache **783** is configured to retrieve the graphic elements / assets in the game from the Assets Distributor **7860** and cache them on the PGH Client **7800.**

Game Controller **787** is configured to send the user's input(s) from the Player's Devices (e.g. keyboard, mouse, controller, joystick and other equipment), in accordance with embodiments.

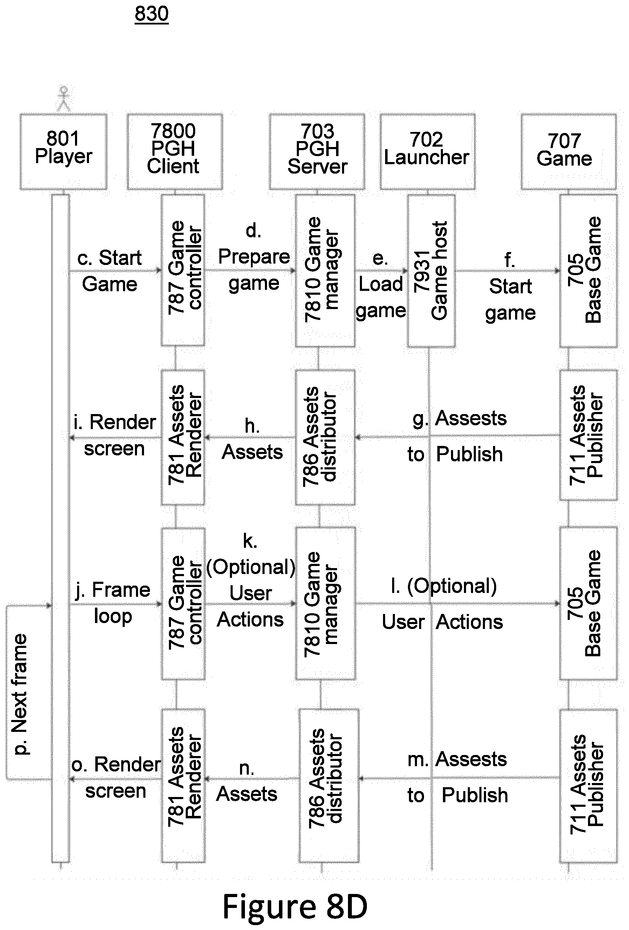

Game Engine **718** is a software framework designed for the creation and development of games, and further configured to render the next frame and display it to the Player as illustrated in reference with Figure 8D.

**Figure 7L** shows a subset block diagram **730** of system **720** of **Figure 7K** configured and enabled to publish and distribute one or more assets of the Base game and the PGH based on one or more scenarios of historical gameplay of a single-player/multiplayer configuration, in accordance with embodiments.

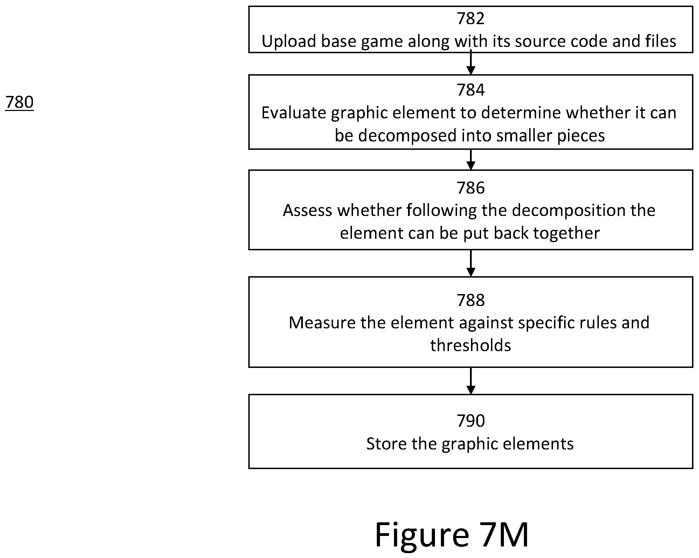

**Figure 7M** shows a flowchart of a method **780** of assets extraction and decomposition, in accordance with embodiments.

At step **782,** a base game, along with its source code and all files describing its assets and graphic elements, is uploaded to a Games Library (e.g. Games Library **789**). This step also includes extracting all the assets using the uploaded source code and files. This extraction process involves collecting all associated graphic elements and saving them in a structured format. The specific graphic elements are specified above.

At step **784,** some or every graphic element is evaluated to determine whether it can be decomposed into smaller pieces. This involves the following two key checks:

At step **786,** it is assessed whether following the decomposition the graphic element can be put back together in such a way that its reassembled state would either be identical to or closely approximate (within a defined match criteria) its original state before it was disassembled.

At step **788,** the graphic elements are measured by comparing the graphic elements to specific rules and thresholds to confirm if the graphic elements are sufficiently large for decomposition.

Finally, at step **790** the graphic elements are stored in a data repository configured for efficient retrieval and transmission.

Another flow example of method **780** is illustrated in **Figure 8C** showing a flowchart of a method **820** of Extraction and Decomposition of assets in a Base Game and/or PGH, in accordance with embodiments.

Reference is now made to **Figure 8A** which illustrates a flowchart **800** of a method for creating a PGH based on one or more scenarios of historical gameplay of a multiplayer or a single player configuration, in accordance with embodiments. System **700** or system **710** or system **720** may be used to implement method **800.** However, method **800** may also be implemented by systems or processors having other configurations. Some steps in **Figure 8A** have been previously presented and described in detail in earlier figures and in the related detailed description, in accordance with the embodiments.

Step `a. Start game' includes initiating PGH game creation process by sending a `Launch Command' from the Creator **799** to the Launcher module **702**.

Step `b. Launch' includes launching the Base Game **705** play by sending a command from the Launcher **702** to the Game Module **707** to start the Base Game **705**.

Step 'c. init' includes initializing and controlling the launching step by creating a handshake between the PGH Client SDK **798** and the PGH Server **703**, on which the user is authenticated and the session is initialized.

Step `d. Session' includes operating an authorized handshake between the Game module **707** and the PGH Server **703** to allow an exchange of information (such as unique identifiers for the Client and Server, request and response messages, and unique and random values that ensure the freshness and integrity of the messages) between the Game **707** and PGH Server **703**.

Step `e. Play Game' includes starting the actual Game (e.g., Base Game **705**) playing where the rendered frames of the Game are continually displayed to the Creator **799** for example on his device (e.g. mobile device or personal computer). An example of this step is illustrated in **Figure 10A****,** where we can see an example of a game starts loading.

Step `f. Game State' includes streaming/ transmitting one or more Characteristics State Events of the entities of the game during the game to the PGH Server. Examples of such Characteristics states include location, health etc. of all the entities in the game.

Step `g. Game Actions' includes streaming/ transmitting one or more operations (e.g., Actions) to the PGH Server **703** that were performed by the game player character during the game (e.g. the Base Game). Examples of such actions include: jump, shoot etc. of the entities in the game.

Step `h. Capture Highlight' includes operating a Highlight action by selecting and capturing a 'highlight' or 'highlights' in the game during for example a gameplay. Specifically, the highlight action includes selecting a scene or frames segment or interval in the game, such as 1, 2, 3, 4, 5, 10, 20 seconds or more from the game. In some cases, the highlight action is operated by the Creator **799** pressing a specific combination of preset keys or keys + mouse click or any other selected key combination to capture the highlight on the Game (e.g. the key combination could be to press simultaneously the keyboard key of ALT along with the keyboard key of S, which makes it the key combination of ALT+S). An example of the preset key combination, as it can be displayed to the player, is displayed in **Figure 10A****.**

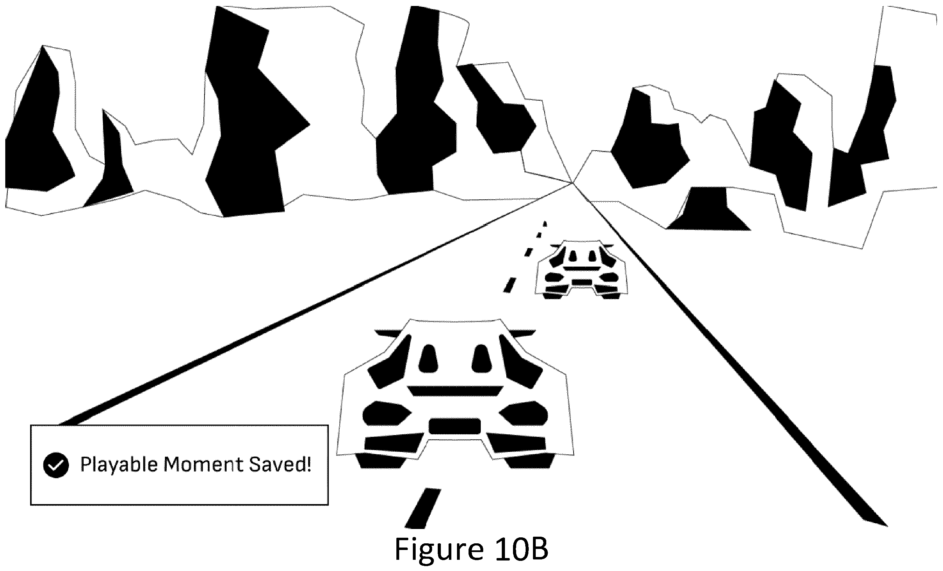

Step `i. Mark Highlight' includes sending properties of the captured highlight, including characteristics such as timestamp of the created highlight along with the relevant events in the highlight from the Game **707** to the PGH Server **703**. An example of this step is illustrated in **Figure 10B** which shows a specific frame of a Highlight in a Game saved.

Step `j. Media' includes recording of the frames, video and audio of the Game **707** (e.g. of the Base Game **705**) and transmitting the game to the PGH server.

Step `k. Highlight Data' includes transmitting Highlight data from the PGH Server **703** to the PGH App **704**. The Highlight Data includes Properties of the captured highlight (for example the states and actions of the Player and the Game), along with the recording of the frames, video and audio of the game, in a predefined time interval prior to the selected timestamp of the highlight, and sends it to the PGH App **744.**

Step '1. Screen' includes displaying the Highlight data along with a list of possible objectives, constraints, end PGH criteria, end conditions, and score parameters on a User Interface, based on the Identified Events and/or Building Blocks. In some cases, the Highlight data along with a list of possible objectives and score parameters are transmitted to the PGH App and may be displayed on the user's screen. An example of this step is illustrated in **Figure 10C** and **Figure 10D****.**

Step `m. Configuration' includes the selection by the Creator **799** of the PGH Attributes of the PGH Game. This PGH game creation includes combining and processing the received data which includes the start point and end point, chosen properties of the PGH, (e.g. objective(s), constraint(s), end PGH criteria, end conditions and score parameters) to generate the PGH Attributes in the PGH Server **703**.

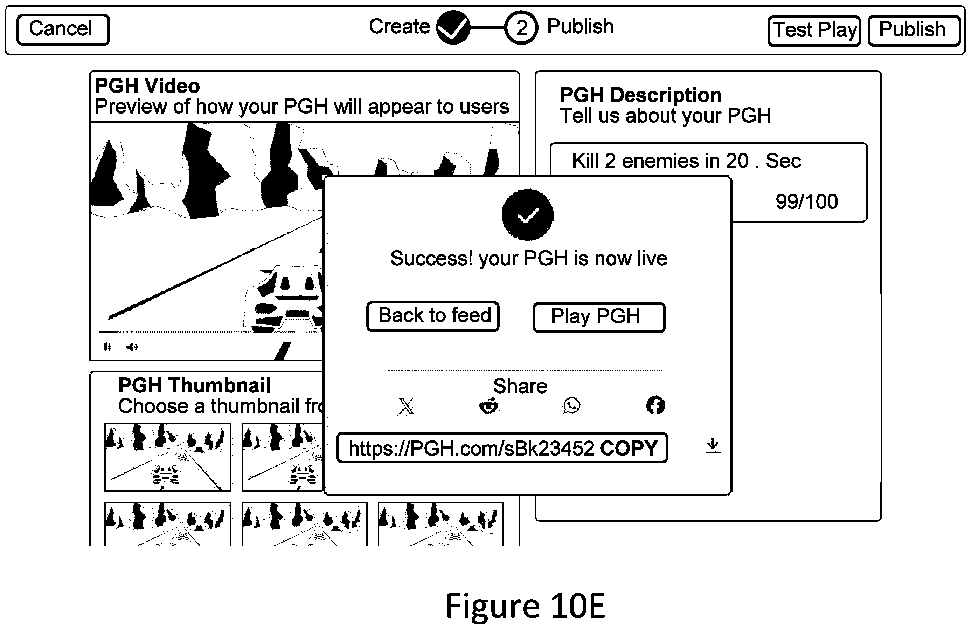

Step `n. PGH' includes sending the configured PGH game from the PGH app **704** to the PGH Server **703** and creating the PGH according to the `m. Configuration step' . An example of the end of this step is shown in **Figure 10E****.**

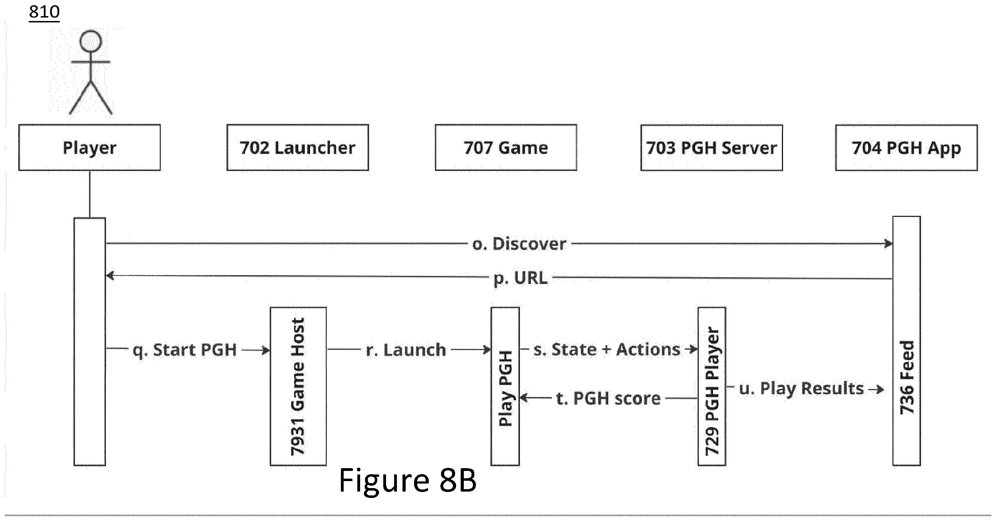

**Figure 8B** illustrates a time flowchart of a method **810** for playing a PGH, such as the created PGH shown in **Figure 8A** or previous Figures, which was created based on one or more scenarios of historical gameplay of a multiplayer or a single-player configuration, in accordance with embodiments. In some cases, method **810** may be activated following activation method **800.** Systems **700**, **710, 720** or one or more processors, may be used to implement method **810.** However, method **810** may also be implemented by systems or processors having other configurations.

Step `o. Discover' includes exposing the user (e.g. Player **801**) to one or more PGH, such as PGH created on Step. m of **Figure 8A****.** In some cases, the PGH may be displayed in the PGH App **704**.

Step `p. URL' includes providing to the player a Link to a shareable Link. It should be stressed that other methods may be used to share the PGH.

Step `q. Start PGH' includes sending a command from the Player **801** to the Launcher **702** to start playing the PGH and accordingly in step `r. Launch' the PGH is launched for example at the Game Module **707**. An example of this step is illustrated in **Figure 10F****.**

Step `s. State(s) + Action(s)' includes identifying, in accordance with embodiments, Events, such as States and Actions of an entity or of the Game in the PGH. For example, the Events (as explained with reference to previous Figures) may be or may include Characteristics of an entity in the PGH game and during the PGH game, along with a set of actions that are performed during the PGH Game by the player or other game entities, such as NPCs or environmental elements. Actions encompass the behaviors or activities performed by the player, NPCs, or environmental elements during gameplay, and the state may include other attributes of an entity, for example in a shooting game, it could consist of health status, weapon status, clothing etc. The identified events are streamed, for example in real time, from the Game Module **707** to the PGH server **703**.

Step `t. Score' includes computing/calculating and/or processing Scoring Parameters in the PGH, for example in real time, based on one or more scoring formulas, such as predefined scoring formulas in accordance with embodiments of the present invention, to yield a Score Status **7120** (e.g. PGH Score). For example, the scoring formula can have a scoring parameter of "Number of Kills", where the formula is simply the actual number of kills (For example 10 kills yields a result of a score of 10), or each kill can get its score, such as 100 points for each kill. The calculated PGH Score is transmitted, for example from the PGH Server **703** to the PGH Game **707**, for example in real time, and are updated accordingly in each calculation loop (e.g. each frame of the Base Game or every 20 milliseconds), such that each score contributes to the final cumulative score. An example of this step is illustrated in **Figure 10G****,** where the Current cumulative Score (e.g. Score Status/PGH Score **7120)** is **4000,** where for example, each Kill can add 5000 points to the accumulated score, and each shoot can deduct 200 points to the accumulated score, yielding a current score of 1*5000-5*200=4000 (1 kill added in this example 3000 points and 5 shoot subtracted 200 points each to the current score's calculation).

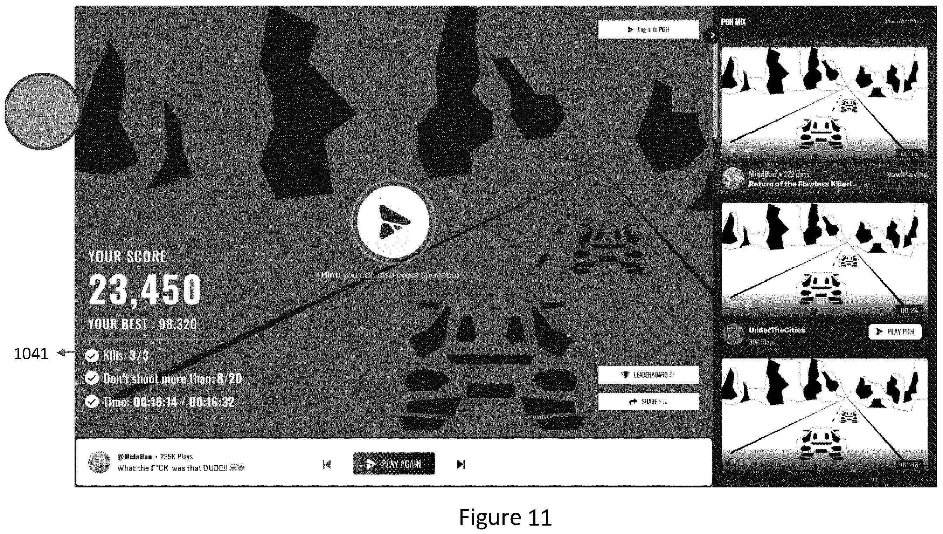

Step `u. Play Results' includes sending PGH Results, for example as calculated in real-time, at the end of each score calculation loop. An example of this step is illustrated in **Figure 11****.**

**Figure 8C** illustrates a flowchart of a method **820** of Extraction and Decomposition of assets in a base game and/or PGH, such as the created PGH shown in **Figure 8A****,** in accordance with embodiments. In some cases, method **820** may be activated following and/or simultaneously while performing methods **800** and/or method **810.** System **700**, system **710,** system **720** or system **730** or one or more processors, may be used to implement method **820.** However, method **820** may also be implemented by systems or processors having other configurations.

Step `a. Upload' includes importing by a Game Developer executable files of his game (e.g. Base Game **705**) and/or source code of the game along with all the files that compose it into the Games Library 789. The Games Library 789 may be located at the PGH server **703** or in other locations.

Step `b. Extract and decompose assets' includes using for example the game's source code, files and file structure to retrieve the game assets, and then decompose them into small parts for efficient data transmission. The decomposing is done when it's possible to recompose the game assets back to their original form or very close to it (up to a threshold) and when the assets are marked as suitable for decomposition. In accordance with embodiments, the assets are saved into the Assets Repository **7910** component

In accordance with embodiments, an `Assets publishing' process is operated as follows:
When the server detects a player's intention to start a PGH - either through explicit initiation or using a prediction model - it sends the necessary graphic elements to the client to render the PGH's starting region. These elements include decomposed graphic elements and are tailored in their Level of Detail (LOD) based on various factors such as the element's type, its role in the game, its distance from the player, network capacity and performance, player preferences, and other predefined settings. This approach controls the game's level of detail as rendered.

Before transmitting these elements, the server checks if the client has them cached locally to avoid redundant transfers. The client then acquires any missing elements needed for rendering, subsequently rendering and displaying the next frame to the player. In a continuous loop, the client sends its current location, viewpoint, state, and any player inputs back to the server. The server processes this information to determine the next set of graphic elements to send, which can be dispatched either using a single thread or a multithreaded priority queue.

Upon receiving these elements, the client caches them locally and uses them to render subsequent frames, adjusting to the player's location, viewpoint, state, and inputs.

**Figure 8D** illustrates a flowchart of method **830** of publishing assets in a Base Game and/or PGH, in accordance with embodiments. The method **830** includes publishing the extracted assets such as the assets shown in **Figure 8C****,** in accordance with embodiments. In some cases, method **830** may be activated following and/or simultaneously while performing methods **820** and/or method **810.** System **700,** system **710,** system **720** or system **730** or one or more processors, may be used to implement method **830.** However, method **830** may also be implemented by systems or processors having other configurations.

Step `c. Start Game' includes launching the Base Game **705** by the player for the purpose of engaging in gameplay, in accordance with embodiments.

Step `d. Prepare game' includes requesting from the PGH server **703** to set an instance of a game in order to play the game, in accordance with embodiments. Specifically, the setting an instance of the game to play generally refers to preparing and configuring the game environment or session before actually starting to play. This process involves various tasks depending on the type of game and the platform, for example the following steps may be involved:
Game Settings: Adjusting in-game settings such as graphics quality, sound preferences, and control configurations to suit personal preferences.

Game Mode or Difficulty: Choosing the desired game mode or difficulty level if applicable. Some games offer different modes like story mode, multiplayer, or a specific challenge mode.

Character or Avatar Selection: If the game involves playing as a specific character or creating an avatar, selecting or customizing the character before entering the game world.

Level or Map Selection: Choosing the specific level, map, or scenario where the game will take place. This is common in games with different stages or locations.

Multiplayer Setup: Configuring multiplayer settings, including inviting friends, joining a server, or setting up a private game lobby.

Step `e. Load Game' includes starting a PGH server **703** that will host an instance of a game for a specific player, in accordance with embodiments.

Step `f. Start game' includes launching the Base Game **705** on the server that was loaded in the previous step e. using the game executable that was uploaded in `step a.', in accordance with embodiments.

Step `g. Assets to Publish' includes sending the graphic elements to be used in order to render the first frame of the beginning of the game, including for example graphics, sounds, music, characters, textures, and code, and the like, which together create the game's environment and experience, in accordance with embodiments.

Step `h. Assets' include using various elements to render the first frame in the Game, including graphics, sounds, music, characters, mesh, textures, and code, and the like, which together create the game's environment and experience, in accordance with embodiments.

Step `i. Render screen' includes sending a command to the PGH Client's **7800** GPU to render the next frame according to the Player's position and frustum, and the available assets in the PGH Client, in accordance with embodiments.

Step `j. Frame Loop' includes updating and displaying repeatedly in a continuous cycle for the next image on the screen, in accordance with embodiments.

Step `k. (Optional) User Actions' includes sending the Player **801** input, in case there's some within the time period of the Frame Loop, in accordance with embodiments.

Step '1. (Optional) User Actions' includes sending the Player **801** input, in case there's some within the time period of the Frame Loop, in accordance with embodiments.

Step `m. Assets to Publish' includes sending Game Elements from the Game **707** to the PGH Server **703**. These Game Elements are used to render the next frame of the Game, including graphics, sounds, music, characters, mesh, textures, and code, which together create the game's environment and experience, in accordance with embodiments.

Step `n. Assets' include using various elements to render the next frame, including graphics, sounds, music, characters, textures, and code, which together create the game's environment and experience, in accordance with embodiments.

Step 'o. Render Screen' includes sending a Command to the PGH Client's **7800** GPU to render the next frame according to the Player's position and frustum, and the available assets in the PGH Client, in accordance with embodiments.

Step `p. Next Frame' includes returning to Frame Loop (j.), in accordance with embodiments.

Reference is now made to **Figure 12****,** which illustrates an example data structure of a PGH Data object **1200,** in accordance with some embodiments. The PGH Data object comprises one or more of: Metadata **1202,** PGH Rules **719** and Scoring Parameter(s) **1220** States **723'** and Actions **724'.** The PGH Rules **719** comprises one or more of the following: Objective(s), Constraint(s), End PGH Criteria **1222,** End PGH Condition(s).

The PGH Rules **719** are used and based on Objective(s) and/or Constraint(s) and/or End PGH Criteria **1222** and/or End Condition(s). In some embodiments, the PGH Rules **719** are evaluated per frame or per predefined time interval (such as each 20 msec). The PGH rules consist of formula that checks whether a PGH ends or not: in case a PGH ends it yields whether the PGH ended with a victory, loss of the player or other status, and in addition it calculates the status of the Objective(s) and/or Constraint(s) and/or End PGH Criteria **1222** and/or End Conditions (**1224**). For example, the formula may check if one of the objective(s) were obtained, and in case an objective is reached the PGH Rules output that the PGH ends with a victory of the player, in case a constraint is reached, the PGH Rules output that the PGH ends with a loss of the player etc.

The Objective(s) **1226** are one or more goals that a PGH player needs to accomplish in a PGH game to secure a victory in the PGH. An example of possible objective(s) is shown in **Figure 9B****,** presenting a screenshot including Objective list **920** including the Goals name **922** and the formula **924** which needs to be achieved to accomplish the objective. Specifically, the first listed Goal Name **922** is 'Kill' and the related formula is "When the PGH player's Kill is Equal to the Creator's kill in their highlight" which means that the player's goal must kill the same number of Kills as the creator. The Objectives may relate to goals which were not included and/or are different from the goals of the Base Game.

The Constraint(s) **1228** are one or more conditions such that if the condition is reached the player loses the PGH. An example of possible constraint(s) are shown in **Figure 9C** presenting a screenshot including Constraint list **930** including the Constraint name **932** and the formula **934** which needs to be achieved to lose the game. Specifically, the first listed Constraint Name **932** is 'Don't take a Damage' and the related formula is `when the PGH player's Damages Taken is Greater than the Creator's Damages Taken" which means that the if the player's Damage level is greater than the creator's the Constraint will be achieved and the player will lose the PGH game. Other Constraints may relate to Constraint which were not included and/or are different from the Constraints in the Base Game.

The End PGH Condition(s) **1224** include one or more conditions such that if the conditions are reached the PGH game ends, either with the player's securing a victory in the PGH game, either with the player's losing the PGH or possibly without a predefined victory or loss of the PGH. An example of possible end condition(s) **1224** is shown in **Figure 9E****,** showing an Example of End Conditions List **990.**

The End PGH Criteria **1222** include one or more conditions such that if the conditions are reached the PGH ends, either with the player securing a victory in the PGH game, either with the player losing the PGH or possibly without a predefined victory or loss of the PGH. Examples of possible End PGH Criteria **1222** are time limit (for example, the player has 30 seconds to reach one of the objective(s)), number of turns (for example, in a turn based game, such as the chess game, the user has 20 turns to reach one of the objective(s)), mixture of number of turns and time limit (for example, in a chess game you have 5 turns and up to 120 seconds to reach one or more of the objective(s)).

The Score Parameters **1220** refer to a set of predefined conditions or rules that determine how a player's score is calculated and updated during a PGH game. These conditions act as triggers, and when a specific condition is met or reached, the player's score is either increased (positive score) or decreased (negative score). The scores may be cumulative, meaning that each time a new condition is satisfied, the corresponding score value is added to or subtracted from the player's current accumulated score.

In simpler terms, the Score Parameters are a list of rules that define how points are awarded or deducted based on certain events or actions occurring during gameplay. These rules may be for example predetermined, and the player's score is continuously updated by adding or subtracting points as different conditions are met.

The scores can be positive or negative, allowing for both rewarding and penalizing scenarios. For example, a positive score might be awarded for completing a level, achieving a specific objective, reaching a specific state, or doing a specific action, while a negative score might be deducted for example, for reaching a specific state, doing a specific action, for reaching a Constraint, for each passing turn or time period etc.

The specific Score Parameters and their associated point values can vary depending on the game. **Figure 9D** shows an example of Score parameters List **940**, potentially listing out different scenarios or events-score name **942**, description **944** along with the corresponding positive or negative scores **946** that would be applied when those conditions are met. For example a score name may be 'Ability used', and the description is 'lose points each time you use your special ability' and this scoring is defined as Negative, and for example, as illustrated in **Figure 10D** under the Score Parameters, using the Ability may yield a deduction of 100 points each time an Ability is used (in the illustrated example, it is marked as -100 points).

It is stressed that in many cases the PGH rules **719** and scoring parameters are not included in the Base Game and/or different from any scoring or rules which were included in the Base Game.

The Metadata refers to elements related to UI and the user experience while scrolling in the PGH feed **736** using for example the PGH App **704.** Typically the metadata is not related directly to the playing actions, rules of the PGH or the gameplay.

The Metadata **1202** includes one or more of the following details: Name-such as the name of the PGH, Description-for example adding a text description when an element in the PGH is shown, for example the text `castle' when a picture of a castle is shown `, Creator, Video-enabling adding a Web camera to enable the creator to add comments in real time, Tags -for example adding text for example in a 'shooting' action , Audio-enabling the creator to add for example voiceover during the PGH game or a Thumbnail.

States **723**' and Actions **724**' are used to create, restore and play the PGH **738** as described above. The States **723**' include `Game state' relating to data details of the game such as mapping of the game, starting point of the game and `Player state' relating to data of the player such as the player's location in the game, ammunition, cloths. Game state may include game information such as a `bomb' falling in a scenario in the Base Game which is not specifically related to an Action of a player in the Base game. A `Game action' may relate to a scenario in the Base Game such as in case a 'bridge' in the game is exploded once the player crosses the Bridge, accordingly this scenario is stored and may be used to create the PGH.

The data relates to players as well to NPC players caged and uncaged. For example, the States **723**' may include data information relating to states of caged NPC players which are related to states of the player in the Base Game. Accordingly, Actions **724**' include game actions and player actions. For example, in cases where the Base Game includes movement Actions of the player and/or NPC players these movements are restored and included in the PGH.

**Figure 13** shows a flowchart of a method **1300** for loading and running a PGH computer game such as the PGH **738** created in **Figure 7A**, **Figure 7B** and **Figure 7C** in accordance with embodiments. System **700,** or system **710,** or system **720** or system **730,** or system **785** may be used to implement method **7500.** However, method **1300** may also be implemented by systems or processors having other configurations, in accordance with embodiments.

At step **1310** the Events from the Base Game are restored and loaded. The restore process includes, in accordance with embodiments, one or more of the steps illustrated with respect to **Figure 7F**. At step **1320** the system starts playing the PGH by initializing the game engine and loading necessary resources. At step **1330,** video or other signals of the Base Game are captured. These signals can provide information for understanding the Events and Building Blocks within the PGH. One such method involves analyzing the PGH's video frames using techniques such as Neural Networks. By processing and understanding the visual content and context of each frame, the system can identify and extract Identified Events and/or Building Blocks. This video analysis approach enables the system to gain insights into the PGH's gameplay elements, player actions, and game states without relying solely on the game's internal data.

Another method for acquiring input from the PGH, in accordance with embodiment, is through the analysis of brain signals, for example by using techniques like Neural Networks. By monitoring and interpreting these physiological signals, the system can infer the player's intentions, emotions, and reactions during gameplay, and further infer the gameplay elements, player actions and game states. This information can be used to extract Identified Events and/or Building Blocks, and can also be combined with the Video Analysis or use on its sole.

At step **1340,** the Captured Video or other Signals are transmitted (e.g., Streamed) to a Server such as the PGH Server. This transmission allows for centralized processing and analysis of the captured data.

At step **1350,** the Video is Processed using a Video Analysis Processor, alternatively or additionally the Signals are processed using Signals Analysis Processor. These processors are designed to handle the specific data types and perform the required analysis. The Video Analysis Processor applies computer vision techniques, machine learning algorithms, and other relevant methods, comprising Neural Networks methods, to understand the video content and context, and to extract Events and/or Building Blocks. Similarly, the Signals Analysis Processor employs signal processing techniques, pattern recognition, and machine learning methods, comprising Neural Networks, to interpret the brain signals, and extracting Identified Events and/or Building Blocks.

At step **1360** based on the analyzed Video or analyzed Signals it is determined, whether the PGH attributes parameters (e.g. objectives and/or constraints and/or end PGH criteria and/or end conditions) were obtained, based on the PGH rules, and calculate the Scoring parameters as explained herein above with respect to **Figure 7E** and **Figure 7F****.** At step **1370** PGH status **777** (e.g. scoring parameters status. status of the objectives and/or constraint) is generated, as described with reference to prior Figures. At step **1380** the PGH Status is transmitted to the Managing module and Server Events are provided based on the PGH Status and/or Identified Events, as described with reference to prior Figures. At step 1390 the server events are transmitted from the PGH Server to the Game Client Module. At step **1395** PGH results are calculated based on the Identified Events and the PGH results are transmitted, for example to the PGH App.

The methods in accordance with embodiments may be performed by a client device such as the Game Client Device **701** running a game based on the methods and data described herein above.

According to some embodiments, there are provided a non-transitory computer-readable storage medium with instructions stored thereon that, when executed by a computing system, causes the computing system to perform a method for creating or running one or more Playable Gameplay Highlights (PGH) computer games from a computer Base Game.

In the patent application, it is imperative to clarify that various embodiments and elements described in the drawings may possess a relationship or equivalence to one another, potentially differing in nomenclature. Additionally, some elements present in one embodiment may be absent in another, solely for clarity and simplicity purposes. It should be understood that such omissions do not invalidate the scope or essence of the invention. For example, PDS Server **195** may be equivalent to PGH server **703,** Processing Circuitry **110A** and Processing Circuitry **110B** may be equivalent to Game Client Device **701** and/or Launcher Module **702** and PGH App **704.**

According to some embodiments the one or more processors such as processor(s) 708 and/or processor(s) 712 may be and/or may be included in a processing circuitry configured to execute several functional modules in accordance with computer-readable instructions implemented on a non-transitory computer-readable storage medium. Such functional modules are referred to hereinafter as comprised in the processing circuitry.

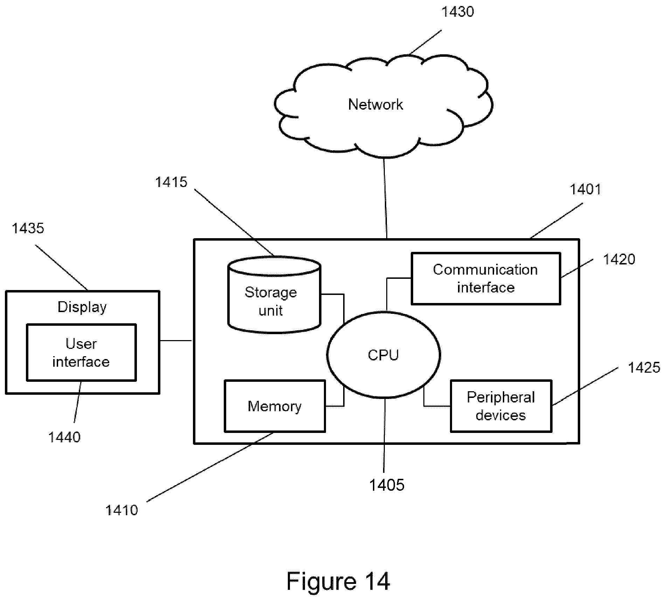

According to some embodiments, the present disclosure provides computer control systems that are programmed to implement methods of the disclosure such as methods **750, 7500, 7501, 7560** and **1300.** **Figure 14** shows a computer system **1401** suitable for incorporation with the methods, systems and devices in accordance with some embodiments of the present disclosure. The computer system **1401** can process various aspects of information of the present disclosure, such as, for example, questions and answers, responses, statistical analyses. The computer system **1401** can be an electronic device of a user or a computer system that is remotely located with respect to the electronic device. The electronic device can be a mobile electronic device.

The computer system **1401** includes a central processing unit (CPU, also "processor" and "computer processor" herein) **1405,** which can be a single core or multi core processor, or a plurality of processors for parallel processing. The computer system **1401** also includes memory or memory location **1410** (e.g., random-access memory, read-only memory, flash memory), electronic storage unit **1415** (e.g., hard disk), communication interface **1420** (e.g., network adapter) for communicating with one or more other systems, and peripheral devices **1425,** such as cache, other memory, data storage and/or electronic display adapters. The memory **1410,** storage unit **1415,** interface **1420** and peripheral devices **1425** are in communication with the CPU **1405** through a communication bus (solid lines), such as a motherboard. The storage unit **1415** can be a data storage unit (or data repository) for storing data. The computer system **1401** can be operatively coupled to a computer network ("network") **1430** with the aid of the communication interface **1420.** The network **1430** can be the Internet, an internet and/or extranet, or an intranet and/or extranet that is in communication with the Internet. The network **1430** in some cases is a telecommunication and/or data network. The network **1430** can include one or more computer servers, which can enable distributed computing, such as cloud computing. The network **1430,** in some cases with the aid of the computer system **1401,** can implement a peer-to-peer network, which may enable devices coupled to the computer system **1401** to behave as a client or a server.

The CPU **1405** can execute a sequence of machine-readable instructions, which can be embodied in a program or software. The instructions may be stored in a memory location, such as the memory **1410.** The instructions can be directed to the CPU **1405,** which can subsequently program or otherwise configure the CPU **1405** to implement methods of the present disclosure. Examples of operations performed by the CPU **1405** can include fetch, decode, execute, and writeback.

The CPU **1405** can be part of a circuit, such as an integrated circuit. One or more other components of the system **1401** can be included in the circuit. In some cases, the circuit is an application specific integrated circuit (ASIC).

The storage unit **1415** can store files, such as drivers, libraries and saved programs. The storage unit **1415** can store user data, e.g., user preferences and user programs. The computer system **1401** in some cases can include one or more additional data storage units that are external to the computer system **1401,** such as located on a remote server that is in communication with the computer system **1401** through an intranet or the Internet.

The computer system **1401** can communicate with one or more remote computer systems through the network **1430.** For instance, the computer system **1401** can communicate with a remote computer system of a user (e.g., a parent). Examples of remote computer systems and mobile communication devices include personal computers (e.g., portable PC), slate or tablet PC's (e.g., Apple^{®} iPad, Samsung^{®} Galaxy Tab), telephones, Smart phones (e.g., Apple^{®} iPhone, Android-enabled device, Blackberry(k), personal digital assistants, wearable medical devices (e.g., Fitbits), or medical device monitors (e.g., seizure monitors). The user can access the computer system **1401** with the network **1430.**

Methods as described herein can be implemented by way of machine (e.g., computer processor) executable code stored on an electronic storage location of the computer system 1401, such as, for example, on the memory **1410** or electronic storage unit **1415.** The machine executable or machine readable code can be provided in the form of software. During use, the code can be executed by the processor **1405.** In some cases, the code can be retrieved from the storage unit **1415** and stored on the memory **1410** for ready access by the processor 1405. In some situations, the electronic storage unit **1415** can be precluded, and machine-executable instructions are stored on memory **1410.**

The code can be pre-compiled and configured for use with a machine, have a processor adapted to execute the code, or can be compiled during runtime. The code can be supplied in a programming language that can be selected to enable the code to execute in a pre-compiled or as-compiled fashion.

Aspects of the systems and methods provided herein, such as the Game Client Device 701, can be embodied in programming. Various aspects of the technology may be thought of as "products" or "articles of manufacture" typically in the form of machine (or processor) executable code and/or associated data that is carried on or embodied in a type of machine readable medium. Machine-executable code can be stored on an electronic storage unit, such memory (e.g., read-only memory, random-access memory, flash memory) or a hard disk. "Storage" type media can include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer into the computer platform of an application server. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium, such as computer-executable code, may take many forms, including but not limited to, a tangible storage medium, a carrier wave medium or physical transmission medium. Non-volatile storage media include, for example, optical or magnetic disks, such as any of the storage devices in any computer(s) or the like, such as may be used to implement the databases, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The computer system 1401 can include or be in communication with an electronic display 1435 that comprises a user interface (UI) 1440 for providing, for example, questions and answers, analysis results, recommendations. Examples of UI include, without limitation, a graphical user interface (GUI) and web-based user interface.

Methods and systems of the present disclosure can be implemented by way of one or more algorithms and with instructions provided with one or more processors as disclosed herein. An algorithm can be implemented by way of software upon execution by the central processing unit 1405. The algorithm can be, for example, random forest, graphical models, support vector machine or other.

Although the above steps show a method of a system in accordance with an example, a person of ordinary skill in the art will recognize many variations based on the teaching described herein. The steps may be completed in a different order. Steps may be added or deleted. Some of the steps may comprise sub-steps. Many of the steps may be repeated as often as if beneficial to the platform.

Each of the examples as described herein can be combined with one or more other examples. Further, one or more components of one or more examples can be combined with other examples.

Although the detailed description contains many specifics, these should not be construed as limiting the scope of the disclosure but merely as illustrating different examples and aspects of the present disclosure. It should be appreciated that the scope of the disclosure includes other embodiments not discussed in detail above. Various other modifications, changes and variations which will be apparent to those skilled in the art may be made in the arrangement, operation and details of the method and apparatus of the present disclosure provided herein without departing from the spirit and scope of the invention as described herein.

While preferred embodiments of the present disclosure have been shown and described herein, it will be obvious to those skilled in the art that such embodiments are provided by way of example only. Numerous variations, changes, and substitutions will be apparent to those skilled in the art without departing from the scope of the present disclosure. It should be understood that various alternatives to the embodiments of the present disclosure described herein may be employed without departing from the scope of the present invention. Therefore, the scope of the present invention shall be defined solely by the scope of the appended claims and the equivalents thereof.

While certain elements are depicted in one or more of the figures, it is understood that not every element may be included in each figure. The figures are intended to be illustrative and not limiting, and elements from one figure may or may not be present in other figures. However, it should be understood that the invention is not limited to the specific elements or configurations shown in the figures, and additional or alternative elements and configurations may be included within the scope of the invention.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Unless specifically stated otherwise, as apparent from the following discussions, it is appreciated that throughout the specification discussions utilizing terms such as "processing", "computing", "comparing", "determining", "calculating", "receiving", "providing", "obtaining", "detecting" or the like, refer to the action(s) and/or process(es) of a computer that manipulate and/or transform data into other data, said data represented as physical, such as electronic, quantities and/or said data representing the physical objects. The term "computer" should be expansively construed to cover any kind of hardware-based electronic device with data processing capabilities including, by way of non-limiting example, the processor, mitigation unit, and inspection unit therein disclosed in the present application.

Although various features of the invention have been described with particular embodiments. It is considered within one of ordinary skill in the art to mix and match the features in other embodiments not depicted in the figures.

It is to be understood that the phraseology or terminology employed herein is for the purpose of description and not of limitation. The means, materials, and steps for carrying out various disclosed functions may take a variety of alternative forms without departing from the invention.

Those skilled in the art will readily appreciate that various modifications and changes can be applied to the embodiments of the invention as hereinbefore described without departing from its scope, defined in and by the appended claims.

## Claims

1. A computer-implemented method for creating one or more Playable Gameplay Highlights (PGH) computer games from a computer Base Game, the method comprising:
receiving Data relating to said computer Base Game using a Logic Engine, wherein said Data comprises one or more of: Events, text, audio, images, video recording of the computer Base Game, other video that describes the computer base game, and
wherein said Logic Engine is comprised in a processor located in a Server;
processing the Data to yield the Events, and processing the Events, by said Logic Engine, to yield Building Blocks or processing the Events, by said Logic Engine, to yield Building Blocks;
capturing one or more Highlights in said computer Base Game, wherein each of said one or more Highlights correspond to a selected start point and end point in said computer Base Game;
processing the Building Blocks, by said Logic Engine, to yield Highlight Attributes Parameters, said Highlight Attribute Parameters comprise one or more of: possible Objectives, possible Constraints, possible End of PGH Criteria, possible End Condition and possible Scoring parameters relating respectively to each one of the one or more Highlights;
selecting PGH Highlight in each one of the one or more Highlights, wherein said PGH Highlight correspond to a selected start point and end point in one of said one or more Highlights;
processing said Building Blocks, by said Logic Engine, relating to the selected PGH Highlight, to generate PGH Attributes,
said PGH Attributes comprising one or more of: Objectives, Constraints, End of PGH Criteria, End Conditions and Scoring parameters, said selected start point and end point;
creating said one or more PGH computer games based on the PGH Attributes, wherein each of said PGH computer games comprises PGH Rules, said PGH Rules being related to said PGH Attributes and for configuring the playing of said one or
more PGH computer games.

2. The computer-implemented method of claim 1, comprising loading and running said one or more PGH computer games, said loading and running comprising:
restoring the Events relating to said computer Base Game;
continually identifying the Events in said one or more PGH computer games;
continually streaming the identified Events from a Game Client Device to the Logic Engine;
continually processing the identified Events using said Logic Engine to yield said Building Blocks;
continually processing the Building Blocks, using said Logic Engine, to determine whether the PGH attributes parameters were obtained based on the PGH rules; and
end the playing of said one or more PGH computer games when the PGH attributes parameters have been obtained.

3. The computer-implemented method according to any of the preceding claims, comprising:
generating PGH status of each of said one or more PGH computer games, wherein said PGH status comprises:
calculating one or more of: scoring parameters, status of the objectives, status of the constraints; status of the end of PGH criteria; and
transmitting the PGH Status to a Managing module comprised in said Server; and
providing Server Events based on one or more of: the PGH Status, the Building Blocks.

4. The computer-implemented method according to any of the preceding claims, comprising:
transmitting the Server Events from the Server to the Game Client device; and
displaying said Server Events on a display, and/or
calculating PGH results of each of said one or more PGH computer games based on said Events;
transmitting the PGH results to a PGH Application (PGH App); and
displaying said Server Events on a display of said Game client Device, and/or
selecting said one or more Highlights by clicking one or more keys during a gameplay of the Base game.

5. The computer-implemented method according to any of the preceding claims, wherein said processing comprising:
converting the one or more of: text, audio, images, video recording of the base Game, other video to the Events, and/or
identifying the Events in said computer Base Game using an Event module, wherein said Event module is comprised in a processor in a Game Client Device.

6. The computer-implemented method of claim according to any of the preceding claims, wherein said selecting PGH Highlight comprises:
selecting timestamp start point and selecting timestamp end point in said computer Base Game.

7. The computer-implemented method of claim according to any of the preceding claims, comprising:
transmitting a video of the computer Base Game captured by a Video Module in a Game Client Device to the Server;
transmitting said one or more Highlights from the Server to a PGH Application (PGH App);
editing the video based on the selected PGH timestamps to generate a Final PGH Video; and
creating said one or more PGH computer games based on the PGH Attributes and the Final PGH video.

8. The computer-implemented method of claim according to any of the preceding claims, comprising:
creating one or more additional PGH computer games from said one or more PGH computer games or
creating two or more PGH computer games based on a single highlight of said one or more Highlights.

9. The computer-implemented method according to any of the preceding claims, wherein the Events comprise Actions or States of characters in said computer Base Game.

10. The computer-implemented method according to any of the preceding claims, wherein each Building Block of the Building Blocks is formed by aggregating one or more Events of said Events.

11. The computer-implemented method according to any of the preceding claims, wherein the aggregation function combines two or more Events of the same type or Events of different types.

12. The computer-implemented method according to any of the preceding claims, wherein the PGH Attributes are selected by a creator of the PGH computer game or selected automatically by said Logic Engine.

13. The computer-implemented method according to any of the preceding claims, wherein PGH Attributes further comprise one or more of:
name for the PGH, description, thumbnail `preview' image of the PGH computer game, and tags.

14. The computer-implemented method according to any of the preceding claims , wherein the characters are player Character (PC) or Non-Player Character (NPC).

15. The computer-implemented method according to any of the preceding claims, wherein the objectives or constraints or end of PGH criteria or end conditions or scoring parameters are created using generative artificial intelligence (AI) algorithms and models, and/or.
wherein said Game Client device is comprised in said server.

16. The computer-implemented method according to any of the preceding claims, comprising loading and running said one or more PGH computer games, said loading and running comprising:
restoring the Events from the Base Game;
capturing a video or other signals of the Base Game;
transmitting the Captured Video or other Signals to the Server;
processing the Video using a Video Analysis Processor or processing the Signals using a Signals Analysis Processor;
determining based on the PGH rules and the analyzed Video or analyzed Signals whether the PGH attributes parameters were obtained; and
calculating the Scoring parameters.
